# EUROPEAN PATENT APPLICATION

(11) **EP 1 400 672 A2**
(43) Date of publication of application: **24.03.2004**
(21) Application number: 03029944.0
(22) Date of filing: 02.10.1996
(51) Int. Cl.: F02D 35/02, F02D 37/02, F02D 41/34, F02D 41/14, F02D 43/00, F02P 5/15

(54) **Method for controlling an internal combustion engine**

(30) Priority: 02.10.1995 JP 25484795; 10.11.1995 JP 29225595; 10.11.1995 JP 29225895; 10.11.1995 JP 29225995; 10.11.1995 JP 29264495
(62) Divisional of application: 96115860.7
(71) Applicant: YAMAHA HATSUDOKI KABUSHIKI KAISHA, Iwata-shi Shizuoka-ken, 438 (JP)
(72) Inventor: Nakamura, Michihisa, c/o Yamaha Hatsudoki K.K., Iwata-shi, Shizuoka-ken (JP); Matsuo, Noritaka, c/o Yamaha Hatsudoki K.K., Iwata-shi, Shizuoka-ken (JP)
(74) Representative: Grünecker, Kinkeldey, Stockmair & Schwanhäusser Anwaltssozietät

(57) **Abstract**

Method for controlling an internal combustion engine, comprising the steps of: obtaining a combustion state in which a specific engine condition is obtained or obtainable, respectively, storing a couple of combustion rate values and a crank angle in that combustion state as a map data of a target combustion rate at said specific crank angle or a map date of a target crank angle at said specific combustion rate, and at that time or after detecting the actual combustion ratio at said specific crank angle and/or the actual crank angle at said specific combustion ratio, and comparing said detected combustion rate with said target combustion ratio and/or said detected crank angle with said target crank angle to control an ignition timing in ignited engines or a starter timing of fuel ignition in diesel engines and/or fuel supply amount which is advanced or increased when the detected combustion rate value is smaller than the target value and/or detected crank angle is behind the target crank angle and is delayed or decreased when the detected combustion rate value is greater than the target combustion rate value and/or the detected crank angle is in advance of the target crank angle.

## Description

This invention relates to a method for controlling an internal combustion engine.

While ignition timing control is a common practice in two-cycle spark ignition engines and four-cycle spark ignition engines, there is an arrangement in which the ignition timing is feedback-controlled to set the advance angle to the knocking occurrence limit according to information on the occurrence of knocking by means of a knocking detecting means. That is to say, the ignition timing is advanced when knocking is not detected, and the ignition timing is delayed when knocking is detected. Such a feedback control of the ignition timing is based on the idea that the maximum output or the maximum torque in that revolution range is produced when the ignition timing is advanced to the knocking occurrence limit.

By the way, there are cases in which, depending on operating conditions such as the engine revolution, the best torque in that operating range is not produced even if the ignition timing is advanced to the knocking occurrence limit, or the knocking occurrence limit is not reached even if the ignition is made at the timing at which the best torque may be produced. In that case, the best torque is not obtained even if the ignition timing is controlled according to the information on the presence of knocking.

Accordingly, it is an objective of the present invention to provide a method as indicated above which facilitates the reliable control of specific engine conditions.

According to the invention, this objective is solved by a method for controlling an internal combustion engine, comprising the steps of: obtaining a combustion state in which a specific engine condition is obtained or obtainable, respectively, storing a couple of combustion rate values and a crank angle in that combustion state as a map data of a target combustion rate at said specific crank angle or a map date of a target crank angle at said specific combustion rate, and at that time or after detecting the actual combustion ratio at said specific crank angle and/or the actual crank angle at said specific combustion ratio, and comparing said detected combustion rate with said target combustion ratio and/or said detected crank angle with said target crank angle to control an ignition timing in ignited engines or a starter timing of fuel ignition in diesel engines and/or fuel supply amount which is advanced or increased when the detected combustion rate value is smaller than the target value and/or detected crank angle is behind the target crank angle and is delayed or decreased when the detected combustion rate value is greater than the target combustion rate value and/or the detected crank angle is in advance of the target crank angle.

In this way, the feedback control is carried out such that the actual combustion ratio is detected up to the specified crank angle, the detected combustion ratio is compared with the target combustion ratio, the ignition timing is controlled, according to the result of the comparison, to be advanced when the detected value is smaller than the target value and the ignition timing is delayed when the detected value is greater than the target value, an ignition timing of a minimum advance angle is determined at which a high torque is produced in the operating range of the engine, for instance, at engine revolution and load.over a wide operating range, and ignited at the ignition timing.

According to another embodiment combustion pressures are detected at least four crank angles; a crank angle between the end of an exhaust stroke to an early stage of a compression stroke, a crank angle between a compression stroke start and an ignition start, and two crank angles within the period from the ignition start to the exhaust stroke start, and the actual combustion ratio up to the specified crank angle is calculated from the detected combustion pressure data.

In this way, the actual combustion ratio up to a specified crank angle is suitably calculated on the basis of the combustion pressure data.

Further, it is possible that a combustion state is obtained in which a high torque is obtained corresponding to at least one of load and engine speed, a combustion ratio value at a specified crank angle in that combustion state is stored as a map data of a target combustion ratio in a memory, at the same time, an actual crank angle at which the specified combustion ratio is reached is detected, and the detected crank angle is compared with a target crank angle to control the ignition timing so that the ignition timing is advanced when the detected crank angle is behind the target crank angle and the ignition timing is delayed when the detected value is in advance of the target crank angle.

In this way, the feedback control is carried out such that the actual crank angle at which the specified combustion ratio is reached is detected, the detected crank angle is compared with the target crank angle, the ignition timing is controlled, according to the result of the comparison, to be advanced when the detected value is smaller than the target value and the ignition timing is delayed when the detected value is greater than the target value, an ignition timing of a minimum advance angle is determined at which a high torque is produced in the operating range of the engine, for instance, at engine revolution and load over a wide operating range, and ignited at the ignition timing.

The method for controlling an engine according to a further embodiment is characterized in that combustion pressures are detected at least four crank angles: a crank angle between the end of an exhaust stroke to an early stage of a compression stroke, a crank angle between a compression stroke start and an ignition start, and two crank angles within the period from the ignition start to the exhaust stroke start, and the actual crank angle at which the specified combustion ratio is reached is calculated from the detected combustion pressure data.

Further, some two stroke spark ignition engines or four stroke spark ignition engines have been used in which Oₓ sensors, for example, are disposed in the exhaust pipe lines. A/F values are calculated from exhaust gas concentrations, and fuel supply or air flow rate is controlled so that the calculated values are kept close to the target values, thereby reducing NOₓ emissions.

There have been other engines in which pressures in combustion chambers are detected, mean effective pressures of the engines are calculated, and a feedback control is performed based on these calculated data.

In order to achieve stability in lean burning or combustion and low fuel consumption even in the low and middle engine load areas, this feedback control according to the conventional art can be considered.

However, if only the A/C value is kept close to the target, burning conditions will change according to ignition timing, and engine output might be reduced with unstable engine speed, or NOₓ emissions will be increased with increasing engine output.

Further, even if engine mean effective pressure is calculated and ignition timing is fed back according to the calculated data, thereby increasing engine output, the NOₓ emissions might be increased when abrupt burning happens.

In view of the foregoing, the inventor has found that the burning rate up to a given crank angle has a close correlation to the engine output as well as the exhaust emissions, and the object of this invention is to provide an engine control method capable of reducing exhaust emissions while lean burning can be effected and improved fuel consumption can be achieved.

Therefore, it is advantageous when initial values of fuel supply at least corresponding to engine load are set as data so that lean mixture is formed in a combustion chamber and fuel is supplied.

According to the invention, a fuel supply control is performed wherein an actual burning rate up to a predetermined crank angle is detected, and according to the comparison of values of the detected burning rate and the target burning rate, fuel supply is increased when the detected burning rate is smaller than the target burning rate or fuel supply is decreased when the detected burning rate is larger than the target burning rate; or alternatively an actual crank angle reaching a predetermined burning rate is detected, and according to the comparison of values of the detected crank angle and the target crank angle, fuel supply is increased when the target crank angle is in an advanced position or fuel supply is decreased when the detected crank angle is in an advanced position, whereby exhaust emissions are reduced while lean burning is effected with improved fuel consumption.

This method may be further characterized by performing a fuel supply control wherein with target burning rates each provided with a tolerance, first target burning rates larger than the target burning rates in the map data and second target burning rates smaller than the target burning rates in the map data are set, and fuel supply is increased when said detected burning rate is smaller than the second target burning rate or fuel supply is decreased when said detected burning rate is larger than the first target burning rate or fuel supply is not be changed when said detected burning rate falls between the first and second target burning rates; or alternatively with target crank angles each provided with a tolerance, first target crank angles in advanced positions ahead of the target crank angles in the map data and second target crank angles in delayed positions behind the target crank angles of the map data are set, and fuel supply is decreased when said detected crank angle is in an advanced position ahead of the first target crank angle or fuel supply is increased when said detected crank angle is in a delayed position behind the second target crank angle or fuel supply is not changed when said detected crank angle falls between the first and second target crank angles.

According to the invention, a fuel supply control is performed based on the target burning rates with tolerances in the map data or the target crank angles with tolerances in the map data, thereby effecting an easy and accurate fuel supply control based on the burning rate up to a given crank angle or the crank angle reaching a given burning rate, whereby exhaust emissions are reduced while lean burning is effected with improved fuel consumption.

Another method for controlling an engine may be characterized in that, at least either when engine load is smaller than a predetermined value or when engine speed is lower than a predetermined value, either of the fuel supply controls is performed.

According to the invention, a fuel supply control is performed according to engine load or engine speed, whereby the engine output is stabilized.

A further method for controlling an engine is characterized in that performing an ignition timing control wherein initial values corresponding to at least either of engine load and engine speed are set as data; wherein burning rates at a predetermined crank angle are stored in a memory as map data of target burning rates corresponding to at least either of engine load and engine speed, or alternatively crank angles reaching a predetermined burning rate are stored in a memory as map data of target crank angles corresponding to at least either of engine load and engine speed; and wherein an actual burning rate up to the predetermined crank angle is detected, and according to the comparison of values of the detected burning rate and the target burning rate, ignition timing is advanced when the detected burning rate is smaller than the target burning rate or ignition timing is delayed when the detected burning rate is larger than the target burning rate; or alternatively an actual crank angle reaching the predetermined burning rate is detected, and according to the comparison of values of the detected crank angle and the target crank angle, ignition timing is advanced when the target crank angle is in an advanced position or ignition timing is delayed when the detected crank angle is in an advanced position.

According to the invention, an ignition timing control is performed wherein an actual burning rate up to a given crank angle is detected, and according to the comparison of values of the detected burning rate and the target burning rate, ignition timing is advanced when the detected burning rate is smaller than the target burning rate or ignition timing is delayed when the detected burning rate is larger than the target burning rate; or alternatively an actual crank angle reaching a given burning rate is detected, and according to the comparison of values of the detected crank angle and the target crank angle, ignition timing is advanced when the target crank angle is in an advanced position or ignition timing is delayed when the detected crank angle is in an advanced position, thereby effecting an ignition timing control based on the burning rate up to a given crank angle, whereby exhaust emissions are reduced while lean burning is effected with improved fuel consumption.

In addition, it is possible that at least either when engine load is smaller than a predetermined value or when engine speed is lower than a predetermined value, said ignition timing control based on said detected burning rate or detected crank angle, and said fuel supply control are performed; and wherein when engine load or engine speed is not in said conditions, only said ignition timing control based on said burning rate is performed.

According to the invention, an ignition timing control based on the detected burning rate or the detected crank angle, and another ignition timing control based on the burning rate are performed effectively, whereby exhaust emissions are reduced while lean burning is effected with improved fuel consumption.

Still further, it is advantageous when ignition controls and fuel supply controls are performed alternately.

According to the invention, an ignition timing control and a fuel supply control are performed alternately, whereby exhaust emissions are reduced while lean burning is effected with improved fuel consumption.

Whereby, it is preferable that a first predetermined number of ignition controls and a second predetermined number of fuel supply controls are performed alternately.

According to the invention, a first predetermined number of ignition controls and a second predetermined number of fuel supply controls are performed alternately, whereby exhaust emissions are reduced while lean burning is effected with improved fuel consumption.

In that case, said first predetermined number may be set equal to or higher than said second predetermined number.

According to the invention, the first predetermined number is set equal to or higher than the second predetermined number, resulting in an effective fuel supply control, whereby exhaust emissions are reduced while lean burning is effected with improved fuel consumption.

A still further method for controlling an engine is characterized in that initial values of the fuel supply at least corresponding to engine load are set as data so that lean mixture is formed in a combustion chamber when fuel is supplied to the engine and that the air-fuel ratio of the lean mixture can be increased with a decreasing engine load.

According to the invention, initial values of fuel supply are set as data, and an accurate and easy control is ensured, whereby exhaust emissions are reduced while lean burning is effected with improved fuel consumption.

Moreover, it is possible that the target burning rate used in the first operating condition in which said ignition timing control based on said detected burning rate or detected crank angle, and said fuel supply control are performed and in which at least either engine load is smaller than a predetermined value or engine speed is lower than a predetermined value, is kept smaller than the target burning rate used in the second operating condition in which only said ignition timing control is performed based on said detected burning rate or detected crank angle.

According to the invention, the target burning rate used in the first operating condition is kept smaller than the target burning rate used in the second operating condition in which only an ignition timing control is performed, effecting an appropriate fuel supply control, whereby exhaust emissions are reduced while lean burning is effected with improved fuel consumption.

According to a preferred embodiment, it is possible that burning pressures are detected at least at four crank angles, one from the exhaust stroke end to the beginning of the compression stroke, one from the beginning of the compression stroke to ignition, and two angles during the time from the ignition start to the beginning of the exhaust stroke, and said detected burning rate or detected crank angle is calculated based on these burning pressure data.

According to the invention, burning pressures are detected and the detected burning rate or detected crank angle is calculated according to these burning pressure data.

Details of the control method and control device for the engine of the invention will be described in reference to the appended drawings.

In some two stroke spark ignition engines or four stroke spark ignition engines, for example there is a technology after a transient operation of rapid acceleration or deceleration to increase or decrease pre-given fuel amount for a given time; this technology improves the rapid acceleration or prevents an engine from stalling in rapid deceleration.

Also, there is a technology after determining a transient operation of rapid acceleration or deceleration to advance or delay a given amount of ignition timing for a given time. Alternatively, in an engine which corresponds to an increase or decrease of a throttle opening to advance or delay ignition timing, there is a technology for controlling ignition timing after determining a transient operation of rapid acceleration or deceleration, to increase a ratio of ignition timing to an increase of a throttle opening in rapid acceleration, and to decrease a ratio of ignition timing to a decrease of a throttle opening in rapid deceleration, for a given time; these technologies similarly improve the rapid acceleration or prevent an engine from stalling in rapid deceleration.

Although the technologies increase/decrease a given amount of fuel for a given time and advance/delay a given amount of ignition timing for a given time, because the given amounts are the predetermined values, which cannot adequately make correspondence with the variation of production, aging, and operation conditions, an overshoot or undershoot of A/F occurs to exacerbate the acceleration characteristic to lead to the engine stall in rapid deceleration.

Considering these problems, the inventors found that the combustion rate to a given crank angle and the crank angle reaching a given combustion rate highly correlate to engine output or exhaust emission, so that the present invention is directed to provide to keep greater engine output, to improve the acceleration characteristic or the performance of engine stall prevention in deceleration as well as the exhaust performance in a transient response.

In that case, it is advantageous when said method is characterized by detecting a transient condition and obtaining the combustion state at which NOₓ emission is reduced while a high torque is obtainable corresponding to at least one of engine load or engine speed, whereby based on the comparison of the detected and actual values a compensation value of fuel supply amount is added.

Thus, in detection of a transient condition, while ignition timing is corrected and advanced, as the best torque is obtained, a combustion condition which NOₓ reduces is obtained; in this combustion condition, the actual combustion rate to a given crank angle is detected, based on the detected value of this combustion rate to the goal value of the combustion rate, to add to the compensation value in ignition timing; and ignition timing is controlled, if the detected value is less, ignition timing is advanced, and if the detected value is greater, ignition timing is delayed.

A further method for controlling an engine is characterized in that in the detection of a transient condition, increasing and correcting the amount of fuel supply more than the amount according to the throttle opening and/or the number of engine rotation, obtaining the combustion condition, which NOₓ reduces, while the best torque is obtained corresponding to at least one of the load or the number of engine rotation: in this combustion condition, storaging the combustion rate at a given crank angle into a memory as a map data of the goal value of combustion rate corresponding to at least one of the load or the number of engine rotation, detecting the actual combustion rate to the given crank angle; based on the comparison between the detected value and the goal value of this combustion rate, adding to the compensation value of the amount of fuel supply, and controlling the amount of fuel so that the amount of fuel supply is increased if the detected value is less, and that the amount of fuel supply decreased if the detected value is greater.

Thus, in detection of a transient condition, while the amount of fuel supply is corrected and increased, as the best torque is obtained, a combustion condition which NOₓ reduces is obtained; in this combustion condition, the actual combustion rate to a given crank angle is detected, based on the detected value of this combustion rate to the goal value of the combustion rate, to add to the compensation value of the amount of fuel supply; and the amount of fuel supply is controlled, if the detected value is less, the amount of fuel supply is increased, and if the detected value is greater, the amount of fuel supply is decreased.

It is further possible that in the detection of a transient condition, advancing and correcting ignition timing more than timing based on the throttle opening and/or the number of engine rotation, obtaining the combustion condition, which NOₓ reduces, while the best torque is obtained corresponding to at least one of the load or the number of engine rotation; in this combustion condition, storaging the combustion rate at a given crank angle into a memory as a map data of the goal value of combustion rate corresponding to at least one of the load or the number of engine rotation, detecting the actual combustion rate to the given crank angle; based on the comparison between the detected value and the goal value of this combustion rate, adding to the compensation value of ignition timing, and controlling the amount of fuel so that the amount of fuel supply is increased if the detected value is less, and that the amount of fuel supply is decreased if the detected value is greater.

Thus, in detection of a transient condition, while ignition timing is advanced and increased, and while the amount of fuel supply is corrected and increased, as the best torque is obtained, a combustion condition which NOₓ reduces is obtained; in this combustion condition, the actual combustion rate to a given crank angle is detected, based on the detected value of this combustion rate to the goal value of the combustion rate, to add to the compensation value in ignition timing; after ignition timing is controlled so that, if the detected value is less, ignition timing is advanced, and if the detected value is greater, ignition timing is delayed, to add to the compensation value of the amount of fuel supply, and the amount of fuel supply is controlled so that, if the detected value is less, the amount of fuel supply is increased, and if the detected value is greater, the amount of fuel supply is decreased.

Another method for controlling an engine is characterized in that in the detection of a transient condition, advancing and correcting ignition timing more than timing based on the throttle opening and/or the number of engine rotation, obtaining the combustion condition, which NOₓ reduces, while the best torque is obtained corresponding to at least one of the load or the number of engine rotation; in this combustion condition, storaging the value of crank angle to be a given combustion rate into a memory as a map data of the goal crank angle corresponding to at least one of the load or the number of engine rotation, detecting the actual crank angle to the given combustion rate; based on the comparison between the detected value and the goal value of this crank angle, adding to the compensation value of ignition timing, and controlling the ignition timing so that ignition timing is advanced if the detected value is less, and that ignition timing is delayed if the detected value is greater.

Thus, in detection of a transient condition, while ignition timing is corrected and advanced, as the best torque is obtained, a combustion condition which NOₓ reduces is obtained; in this combustion condition, the actual value of crank angle to a given combustion rate is detected, based on the detected value of this crank angle to the goal value of crank angle, to add to the compensation value in ignition timing; and ignition timing is controlled so that, if the detected value is less, ignition timing is advanced, and if the detected value is greater, ignition timing is delayed.

A further method for controlling an engine is characterized in that in the detection of a transient condition, advancing and correcting ignition timing more than timing based on the throttle opening and/or the number of engine rotation, obtaining the combustion condition, which NOₓ reduces, while the best torque is obtained corresponding to at least one of the load or the number of engine rotation; in this combustion condition, storaging the value of crank angle is to be a given combustion rate into a memory as a map data of the goal crank angle corresponding to at least one of the load or the number of engine rotation, detecting the actual crank angle to the given combustion rate; based on the comparison between the detected value and the goal value of this crank angle, adding to the compensation value of the amount of fuel supply, and controlling the amount of fuel supply so that the amount of fuel supply is increased if the detected value is greater, and that the amount of fuel supply is decreased if the detected value is less.

Thus, in detection of a transient condition, while ignition timing is corrected and advanced, as the best torque is obtained, a combustion condition which NOₓ reduces is obtained; in this combustion condition, the actual value of crank angle to a given combustion rate is detected, based on the detected value of this crank angle to the goal value of crank angle, to add to the compensation value of the amount of fuel supply; and the amount of fuel supply is controlled so that, if the detected value is less, the amount of fuel supply is advanced, and if the detected value is greater, the amount of fuel supply is delayed.

A still further method for controlling an engine is characterized in that in the detection of a transient condition, advancing and correcting ignition timing more than timing based on the throttle opening and/or the number of engine rotation, increasing and correcting the amount of fuel supply based on the throttle opening and/or the number of engine rotation, increasing and correcting the amount of fuel supply based on the throttle opening and/or the number of engine rotation, obtaining the combustion condition, which NOₓ reduces, while the best torque is obtained corresponding to at least one of the load or the number of engine rotation; in this combustion condition, storaging the value of crank angle to be a given combustion rate into a memory as a map data of the goal crank angle corresponding to at least one of the load or the number of engine rotation, detecting the actual crank angle to the given combustion rate; based on the comparison between the detected value and the goal value of this crank angle, adding to the compensation value of the ignition timing, after controlling the ignition timing so that ignition timing is advanced if the detected value is greater, and that ignition timing is delayed if the detected value is less, adding to the compensation value of the amount of fuel injection, and controlling the amount of fuel supply so that the amount of fuel supply is increased if the detected value is greater, and that the amount of fuel supply is decreased if the detected amount is less.

Thus, in detection of a transient condition, while the amount of fuel supply is corrected and increased, as the best torque is obtained, a combustion condition which NOₓ reduces is obtained; in this combustion condition, the actual value of crank angle to a given combustion rate is detected, based on the detected value of this crank angle to the goal value of crank angle, to add to the compensation value in ignition timing; after the amount of fuel supply is controlled so that, if the detected value is greater, the ignition time is advanced, and if the detected value is less, ignition timing is delayed, to add to the compensation value of the amount of fuel injection, and the amount of fuel supply is controlled so that, if the detected value is greater, the amount of fuel supply is increased, and if the detected value is less, the amount of fuel supply is decreased.

According to another embodiment, a method for controlling an engine is characterized in that the actual combustion rate to the given crank angle is calculated, after the detection of combustion pressure at least four angles consisting of a crank angle from after the end of exhaust stroke to the initial state of compression stroke, a crank angle from the start of compression stroke to ignition, and two of crank angles within periods from start of ignition to start of exhaust stroke, based on the data of these combustion rate.

In the method for controlling an engine of the invention according to a further embodiment, the actual crank angle reaching the given value of combustion rate is characterized to detect combustion pressures in at least four crank angles consisting of a crank angle from the termination of exhaust stroke to the initial stage of compression stroke, and two of the crank angles from the start of ignition to the start of the exhaust stroke, and to be calculated based on the data of these combustion rates from the start of compression stroke to ignition.

In addition, on some 2-cycle or 4-cycle engines, the cooling water temperature is detected, and the ignition timing is advanced when the cooling water temperature is lower. Some engines are provided with catalyzers for cleaning the exhaust gas.

It has been conceived to advance the ignition timing to improve the engine performance while the engine temperature is low and to provide a catalyzer in combination to clean the exhaust gas. Although the engine whose ignition timing is advanced while its temperature is low is easily started and its idling stability is improved, the exhaust gas temperature is lowered and the exhaust gas cleaning performance of the catalyzer is low, which causes a problem that HC and black smoke in the exhaust gas increases while starting and warming up.

An aspect of this invention has been made in view of such problems to provide an engine control method capable of stabilizing the combustion in cold state engine starting, rapidly raising the exhaust gas temperature after engine starting, rapidly activating the catalyzer and reducing HC and black smoke in the exhaust gas.

To solve the above problem and accomplish the object, the method for controlling an engine having a catalyzer is characterized by taking, as a target value, a combustion rate at at least one crank angle between the latter period of combustion and the termination of combustion in a combustion state capable of elevating the exhaust temperature in cold starting while restraining the increase of HC and the fluctuation of engine output, the combustion rate in the actual combustion at said target crank angle is detected, and the ignition timing is advanced when the detected combustion rate is smaller than the target value while the ignition timing is retarded when the detected combustion rate is larger than the target value so that the detected combustion rate may reach said target value.

In cold starting, by advancing or retarding the ignition timing while restraining HC increase and output fluctuation so that the target combustion rate may be obtained at the predetermined crank angle between the combustion latter period and its termination highly related with the combustion state capable of raising the exhaust temperature, combustion in cold starting is stabilized and the catalyzer is rapidly activated.

Another method for controlling an engine is characterized in that having an exhaust gas cleaning catalyzer disposed in the exhaust passage thereof, characterized in that a combustion state is obtained in which a stable combustion corresponding to at least one of the engine load and the engine speed is obtained, the combustion rate value at a predetermined crank angle in the combustion state above is held in the memory as the map data of the second target combustion rate value which corresponds to at least one of the engine load and the engine speed and is smaller than the first target combustion rate value, while the ignition timing is controlled on the basis of the comparison of the detected value of the actual combustion rate until said predetermined crank angle with the second target combustion rate in case of cold starting and with the first target combustion rate in other cases so that it is advanced when said detected value is smaller while it is retarded when the detected value is larger.

As described above, the exhaust gas is cleaned by the catalyzer, the actual combustion rate until the predetermined crank angle is detected and this detected value is compared with the second target combustion rate in cold starting and with the first target combustion rate in other cases; by controlling the ignition timing so that the ignition timing is advanced when the detected value is smaller and so that the ignition timing is retarded when the detected value is larger, the combustion in cold starting is stabilized while the exhaust temperature is rapidly raised after engine starting, the catalyzer is rapidly activated, and HC and black smoke in exhaust gas are reduced.

Further, a method for controlling an engine is characterized in that having an exhaust gas cleaning catalyzer disposed in the exhaust passage thereof, characterized in that in the ignition timing control with which a combustion state is obtained in which a stable combustion corresponding to at least one of the engine load and the engine speed is obtained, the combustion rate value at a predetermined crank angle in the combustion state above is held in the memory as the map data of the target combustion rate value which corresponds to at least one of the engine load and the engine speed, the actual combustion rate until said predetermined crank angle is detected, and, on the basis of the comparison of this combustion rate with the target combustion rate, the ignition timing is advanced when said detected value is smaller while the ignition timing is retarded when the detected value is larger; in case of cold starting which is the starting state while the engine temperature is low, a value obtained by subtracting a predetermined value from target combustion rate value based on the map data is used as the target combustion rate value for comparison with said detected combustion rate.

As described above, the exhaust gas is cleaned by the catalyzer, the actual combustion rate until the predetermined crank angle is detected and this detected value is compared with the target combustion rate, and the ignition timing is advanced when the detected value is smaller while the ignition timing is retarded when the detected value is larger. However, in cold starting wherein the engine temperature is low, a value obtained by subtracting a predetermined value from the target combustion rate value based on the map data is compared as the target combustion rate for comparison with the detected combustion rate, thus, combustion in cold starting is stabilized while the exhaust temperature is rapidly raised, the catalyzer is rapidly activated after engine starting, and HC and black smoke in the exhaust gas are reduced.

Still further, a method for controlling an engine is characterized in that the actual combustion rate until said predetermined crank angle is calculated on the basis of combustion pressure data detected at at least four crank angles including the crank angle between the exhaust stroke termination and the compression stroke starting, the crank angle between the compression stroke starting and ignition, and two crank angles in the period from ignition starting and exhaust stroke.

As described above, the actual combustion rate until the predetermined crank angle is calculated on the basis of four combustion pressure data detected at at least four crank angles, and the ignition timing is properly controlled.

Moreover, a method for controlling an engine is characterized in that having an exhaust gas cleaning catalyzer disposed in the exhaust passage thereof, characterized in that, taking, as a target value, a crank angle at at least one combustion rate between the latter period of combustion and the termination of combustion in a combustion state capable of elevating the exhaust temperature in cold starting while restraining the increase of HC and the fluctuation of engine output, the crank angle in the actual combustion at said target combustion rate is detected, and the ignition timing is advanced when the detected crank angle is retarded from the target value while the ignition timing is retarded when the detected combustion rate is advanced so that the detected crank angle may reach said target value.

As described above, in cold starting, by advancing or retarding the ignition timing while restraining HC increase and output fluctuation so that the target crank angle may be obtained at the predetermined combustion rate between the combustion latter period and its termination highly related with the combustion state capable of raising the exhaust temperature, combustion in cold starting is stabilized and the catalyzer is rapidly activated.

Another method for controlling an engine is characterized in that having an exhaust gas cleaning catalyzer disposed in the exhaust passage thereof, characterized in that a combustion state is obtained in which a stable combustion corresponding to at least one of the engine load and the engine speed is obtained, the crank angle for reaching the predetermined combustion rate in the combustion state above is held in the memory as the map data of the first target crank angle value which corresponds to at least one of the engine load and the engine speed, the crank angle for reaching the predetermined combustion rate in cold starting which is the starting state while the engine temperature is low is held in the memory as the map data of the second crank angle value which corresponds to at least one of the engine load and the engine speed and is retarded from the first target crank angle value, while the ignition timing is controlled on the basis of the comparison of the detected value of the actual crank angle required until said predetermined combustion rate is reached with the second target crank angle in case of cold starting and with the first target crank angle in other cases so that it is advanced when said detected value is retarded while it is retarded when the detected value is advanced.

As described above, the exhaust gas is cleaned by the catalyzer, the actual crank angle until the predetermined combustion rate is reached is detected, this crank angle detected value is compared with the second target crank angle in cold starting, and with the first crank angle in other cases, and, by controlling the ignition timing so that the ignition timing is advanced when the detected value is retarded and so that the ignition timing is retarded when the detected value is advanced, while stabilizing starting combustion in cold starting, the exhaust temperature is raised earlier after starting, the catalyzer is activated earlier, and the amounts of HC and black smoke are reduced.

A further method for controlling an engine is characterized in that having an exhaust gas cleaning catalyzer disposed in the exhaust passage thereof, characterized in that in the ignition timing control with which a combustion state is obtained in which a stable combustion corresponding to at least one of the engine load and the engine speed is obtained, the crank angle value at which the predetermined combustion rate in the combustion state above is reached is held in the memory as the map data of the target crank angle which corresponds to at least one of the engine load and the engine speed, the actual crank angle until said predetermined combustion rate is detected, and, on the basis of the comparison of this detected crank angle with the target crank angle, the ignition timing is advanced when said detected value is retarded while the ignition timing is retarded when the detected value is advanced; in case of cold starting which is the starting state while the engine temperature is low, a value obtained by subtracting a predetermined value from the target crank angle value based on the map data is used as the target crank angle value for comparison with said detected crank angle, exhaust gas is cleaned by catalyzer, the actual crank angle until said predetermined combustion rate is reached is detected, and, on the basis of the comparison of this crank angle with the target crank angle, the ignition timing is advanced when the detected value is retarded while the ignition timing is retarded when the detected value is advanced; in case of cold starting which is the starting state while the engine temperature is low, a value obtained by subtracting a predetermined value from the target crank angle value based on the map data is used as the target crank angle value for comparison with said detected combustion rate, and, since the ignition timing is properly controlled, combustion in cold starting is stabilized, exhaust gas temperature after engine starting is raised earlier, the catalyzer is activated earlier and HC and black smoke in the exhaust gas can be reduced.

A still further method for controlling an engine is characterized in that the actual crank angle for reaching said predetermined combustion rate is calculated on the basis of combustion pressure data detected at at least four crank angles including the crank angle between the exhaust stroke termination and the compression stroke starting, the crank angle between the compression stroke starting and ignition, and two crank angles in the period from ignition starting and exhaust stroke starting.

As described above, the actual crank angle where the predetermined combustion rate is reached is calculated on the basis of combustion pressure data detected at four crank angles so that ignition timing is properly controlled.

Another method for controlling an engine is characterized in that method for controlling a diesel engine having an exhaust gas cleaning catalyzer disposed in the exhaust passage thereof and the fuel for which is injected directly into its combustion chamber and naturally ignited by temperature rise in its compression stroke, characterized in that a combustion state is obtained in which a stable combustion corresponding to at least one of the engine load and the engine speed is obtained, the combustion rate value at a predetermined crank angle in the combustion state above is held in the memory as the map data of the first target combustion rate value which corresponds to at least one of the engine load and the engine speed, the combustion rate value at a predetermined crank angle in cold starting which is the starting state while the engine temperature is low is held in the memory as the map data of the second target combustion rate value which corresponds to at least one of the engine load and the engine speed and is smaller than the first target combustion rate value, while the fuel injection timing is controlled on the basis of the comparison of the detected value of the actual combustion rate until said predetermined crank angle with the second target combustion rate in case of cold starting and with the first target combustion rate in other cases so that it is advanced when said detected value is smaller while it is retarded when the detected value is larger.

As described above, when controlling a diesel engine, the exhaust gas is cleaned by a catalyzer, the actual combustion rate until the predetermined crank angle is detected and this detected value is compared with the second target combustion rate in cold starting and with the first target combustion rate in other cases, and, by controlling the fuel injection starting timing so that it is advanced when the detected value is smaller and is retarded when the detected value is larger, the combustion in cold starting is stabilized while the exhaust gas temperature is raised earlier after engine starting, the catalyzer is activated earlier, and HC and black smoke in the exhaust gas are reduced.

Still another method for controlling an engine is characterized in that method for controlling a diesel engine having an exhaust gas cleaning catalyzer disposed in the exhaust passage thereof and the fuel for which is injected directly into its combustion chamber and naturally ignited by temperature rise in its compression stroke, characterized in that a combustion state is obtained in which a stable combustion corresponding to at least one of the engine load and the engine speed, the crank angle value at which the predetermined combustion rate in the combustion state above is reached is held in the memory as the map data of the first target crank angle which corresponds to at least one of the engine load and the engine speed, the crank angle value at which the predetermined combustion rate in cold starting which is the starting state while the engine temperature is low is reached is held in the memory as the map data of the second crank angle value which corresponds to at least one of the engine load and engine speed and is retarded from the first target crank angle value, while the actual crank angle until said predetermined combustion rate is reached is detected and, on the basis of the comparison of this crank angle detected value with the second target crank angle in cold starting, or with the first target crank angle in other cases, and the fuel injection timing is controlled so as to be retarded when said detected value is advanced or so as to be advanced when said detected value is retarded.

Further, in a two-cycle spark ignition engine or a four-cycle spark ignition engine, there is quite a possibility, for example, of causing an abnormal combustion by the cylinder temperature rising due to the increase in heat load accompanying improvements for high rotations and high outputs. When this abnormal combustion continues, there is a danger of the cylinder temperature rising with acceleration to cause engine breakdown.

To cope with this, for example, there is a device for preventing abnormal combustions under high load conditions by enriching A/F and cooling the cylinder with fuel.

However, since control is performed without knowing the conditions of combustion, it is necessary to provide a considerably large surplus in the range of fuel cooling. Accordingly, fuel consumption is degraded by performing fuel cooling more than necessary.

In addition, since there is a possibility of abnormal combustions occurring even by fuel cooling, problems such that this possibility is not fully met still exist.

Therefore, means for learning combustion conditions and detecting the sign of an abnormal combustion, and means for avoiding danger in the case of an abnormal combustion are required.

The present invention is made in consideration of points mentioned above, by which preignition, inflammation before ignition due to the rise in cylinder temperature, can be prevented, and, even when inflammation occurs prior to ignition, it can be treated suitably and engine damage can be avoided.

To solve the above problem and accomplish the object, the method for controlling an engine of claim 1 is characterized in that responsive to engine load more fuel per combustion cycle is supplied to the engine as engine load increases, and combustion ratio values at prescribed crank angles at which the normal combustion is attained are retained in a memory as a map data of reference combustion ratio values corresponding to load or engine revolution, or at least corresponding to load; on the other hand, the actual combustion ratio up to said prescribed crank angle is detected, and, when this combustion ratio is larger than the reference combustion ratio based on the comparison between the detected value of this combustion ratio and the reference combustion ratio value, the fuel supplied to the engine per combustion cycle is increased exceeding the amount of fuel supply corresponding to engine load.

Thus, the actual combustion ratio up to the prescribed crank angle is detected and, when this combustion ratio is larger than the reference combustion ratio based on the comparison between the detected value of this combustion ratio and the reference combustion ratio value, the fuel supplied to the engine per combustion cycle is increased exceeding the amount of fuel supply corresponding to engine load, and fuel cooling is performed only when the sign of preignition is detected; therefore, there is no waste of fuel, fuel consumption is good, and the emission of exhaust gas is small. Also, since the sign of preignition can be detected, it is possible to minimize engine damage and prevent preignitions, namely, inflammation before ignition due to the rise in cylinder temperature. Further, knocking can be controlled by performing fuel cooling in anticipation of the rise in cylinder temperature.

Another method for controlling an engine is characterized in that responsive to engine load more fuel per combustion cycle is supplied to the engine as engine load increases, and combustion ratio values at prescribed crank angles at which the normal combustion is attained are retained in a memory as a map data of reference combustion ratio values corresponding to load or engine revolution, or at least corresponding to load; on the other hand, the actual combustion ratio up to said prescribed crank angle is detected, and, when this combustion ratio is larger than the reference combustion ratio and the difference exceeds the prescribed amount based on the comparison between the detected value of this combustion ratio and the reference combustion ratio value, the fuel supplied to the engine per combustion cycle is increased exceeding the amount of fuel supply corresponding to engine load.

Thus, the actual combustion ratio up to the prescribed crank angle is detected and, when this combustion ratio is larger than the reference combustion ratio and the difference exceeds the prescribed amount based on the comparison between the detected value of this combustion ratio and the reference combustion ratio value, the fuel supplied to the engine per combustion cycle is increased exceeding the amount of fuel supply corresponding to engine load, and fuel cooling is performed only when the sign of preignition is detected; therefore, there is no waste of fuel, fuel consumption is good, and the emission of exhaust gas is small. Also, since the sign of preignition can be detected, it is possible to minimize engine damage and prevent preignitions, namely, inflammation before ignition due to the rise in cylinder temperature. Further, knocking can be controlled by performing fuel cooling in anticipation of the rise in cylinder temperature.

Further, a method for controlling an engine is characterized in that responsive to the difference of said detected combustion ratio and said reference combustion ratio, the fuel per combustion cycle is increased more as the difference is larger.

Thus, more fuel is supplied according to the difference between the detected combustion ratio and the reference combustion ratio and as the difference is larger, fuel cooling is performed effectively only when the sign of preignition is detected, there is no waste of fuel, fuel consumption is good, and the emission of exhaust gas is small.

A further method for controlling an engine is characterized in that either the stopping of combustion or the stopping of fuel supply is executed when the difference of said detected combustion ratio and said reference combustion ratio does not decrease or the difference does not decrease below the prescribed amount even by executing the increase in said amount of fuel supply.

Thus, detecting the sign of preignition, fuel cooling is performed by increasing the amount of fuel supply, but when fuel cooling is not effective, the stopping of combustion or the stopping of fuel supply is executed so as to stop the engine and prevent engine damage, and preignition if occurred is recognized in operation; therefore, the engine's reliability is increased.

A still further method for controlling an engine is characterized in that responsive to engine load more fuel per combustion cycle is supplied to the engine as engine load increases, and crank angles values reaching the prescribed combustion ratio at which the normal combustion is attained are retained in a memory as a map data of reference crank angle values corresponding to load or engine revolution, or at least corresponding to load; on the other hand, the actual crank angle up to said prescribed combustion ratio value is detected, and, when this crank angle is ahead of the reference crank angle based on the comparison between the detected value of this crank angle and the reference crank angle value, the fuel supplied to the engine per combustion cycle is increased exceeding the amount of fuel supply corresponding to engine load.

Thus, the actual crank angle up to the prescribed combustion ratio value is detected and, when this crank angle is ahead of the reference crank angle based on the comparison between the detected value of this crank angle and the reference crank angle value, the fuel supplied to the engine per combustion cycle is increased exceeding the amount of fuel supply corresponding to engine load, and fuel cooling is performed only when the sign of preignition is detected; therefore, there is no waste of fuel, fuel consumption is good, and the emission of exhaust gas is small. Also, since the sign of preignition can be detected, it is possible to minimize engine damage and prevent preignitions, namely, inflammation before ignition due to the rise in cylinder temperature. Further, knocking can be controlled by performing fuel cooling in anticipation of the rise in cylinder temperature.

Another method for controlling an engine is characterized in that responsive to engine load more fuel per combustion cycle is supplied to the engine as engine load increases, and crank angles values reaching the prescribed combustion ratio at which the normal combustion is attained are retained in a memory as a map data of reference crank angle values corresponding to load or engine revolution, or at least corresponding to load: on the other hand, the actual crank angle up to the prescribed combustion ratio value is detected, and, when this crank angle is ahead of the reference crank angle exceeding the prescribed angle based on the comparison between the detected value of this crank angle and the reference crank angle value, the fuel supplied to the engine per combustion cycle is increased exceeding the amount of fuel supply corresponding to engine load.

Thus, the actual crank angle up to the prescribed combustion ratio value is detected and, when this crank angle is ahead of the reference crank angle exceeding the prescribed angle based on the comparison between the detected value of this crank angle and the reference crank angle value, the fuel supplied to the engine per combustion cycle is increased exceeding the amount of fuel supply corresponding to engine load, and fuel cooling is performed only when the sign of preignition is detected; therefore, there is no waste of fuel, fuel consumption is good, and the emission of exhaust gas is small. Also, since the sign of preignition can be detected, it is possible to minimize engine damage and prevent preignitions, namely, inflammation before ignition due to the rise in cylinder temperature. Further, knocking can be controlled by performing fuel cooling in anticipation of the rise in cylinder temperature.

A further method for controlling an engine is characterized in that more fuel per combustion cycle is supplied to the engine as said preceding angle is larger.

Thus, more fuel per combustion cycle is supplied to the engine as said preceding angle is larger, fuel cooling is performed effectively only when the sign of preignition is detected, there is no waste of fuel, fuel consumption is good, and the emission of exhaust gas is small.

A still further method for controlling an engine is characterized in that either the stopping of combustion or the stopping of fuel supply is executed when the amount of preceding angle does not decrease or the amount of preceding angle does not decrease below the prescribed amount even by executing the increase in said amount of fuel supply.

Thus, detecting the sign of preignition, fuel cooling is performed by increasing the amount of fuel supply, but when fuel cooling is not effective, the stopping of combustion or the stopping of fuel supply is executed so as to stop the engine and prevent engine damage, and preignition if occurred is recognized in operation; therefore, the engine's reliability is increased.

Another method for controlling an engine is characterized in that the actual combustion ratio up to said prescribed crank angle is determined by detecting at least four crank angles, including a crank angle between the end of exhaust process and the initial stage of compression process, a crank angle between the start of compression process and the start of ignition, and two crank angles between the start of ignition and the start of exhaust process, and based on these combustion pressure data.

Thus, it is possible to properly calculate the actual combustion ratio up to the prescribed crank angle based on combustion pressure data.

An engine control device may comprise: operating state detecting means including engine speed detecting means, crank angle detecting means, and combustion pressure detecting means, a data storing device for storing a target state value, a state value calculating program for calculating an actual state value using the information from the respective detecting means, a program storing device for storing a control value calculating program for calculating an ignition timing control value according to comparison of the calculated state value with a target state value stored in the data storing device, and an igniting device for igniting according to the ignition timing control value. The engine control device is characterized by carrying out the control A or B described below.

A: Combustion pressures are detected at least four crank angles; a crank angle between the end of an exhaust stroke to an early stage of a compression stroke, a crank angle between a compression stroke start and an ignition start, and two crank angles within the period from the ignition start to the exhaust stroke start, and the actual combustion ratio up to the specified crank angle is calculated from the detected combustion pressure data, and the detected combustion ratio is compared with the target combustion ratio to control the ignition timing of the engine so that the ignition timing is advanced when the detected value is smaller than the target value and the ignition timing is delayed when the detected value is greater than the target value.

B: Combustion pressures are detected at least four crank angles; a crank angle between the end of an exhaust stroke to an early stage of a compression stroke, a crank angle between a compression stroke start and an ignition start, and two crank angles within the period from the ignition start to the exhaust stroke start, and the actual crank angle at which the specified combustion ratio is reached is calculated from the detected combustion pressure data, and the detected crank angle is compared with a target crank angle to control the ignition timing so that the ignition timing is advanced when the detected crank angle is behind the target crank angle and the ignition timing is delayed when the detected value is in advance of the target crank angle.

In this way, the actual combustion ratio up to the specified crank angle is suitably calculated according to the combustion pressure data, the detected combustion ratio is compared with the target combustion ratio, and the ignition timing is controlled, with the result of the comparison, to be advanced when the detected value is smaller, or to be delayed when the detected value is greater than the target value. Furthermore, the actual crank angle at which the specified combustion ratio is reached is suitably calculated from the combustion pressure data, the detected crank angle is compared with the target crank angle, and the ignition timing is controlled, with the result of the comparison, to be advanced when the detected crank angle value is behind the target value, or delayed when the detected crank angle value is in advance of the target value.

A method for controlling a Diesel engine may be provided in that a combustion state is obtained in which a high torque is obtained corresponding to at least one of load and engine speed, a combustion ratio value at a specified crank angle in that combustion state is stored as a map data of a target combustion ratio in a memory, at the same time, actual combustion ratio up to that crank angle is detected, the detected combustion ratio is compared with the target combustion ratio to control the fuel injection timing of the engine so that the fuel injection timing is advanced when the detected value is smaller than the target value and the fuel injection timing is delayed when the detected value is greater than the target value.

In this way, the feedback control of the Diesel engine is carried out such that the actual combustion ratio is detected up to the specified crank angle, the detected combustion ratio is compared with the target combustion ratio, the ignition timing is controlled, according to the result of the comparison, to be advanced when the detected value is smaller than the target value and the ignition timing is delayed when the detected value is greater than the target value, a fuel injection timing is determined at which a high torque is produced in the operating range of the engine, for instance, at engine revolution and load over a wide operating range, and fuel is injected at the injection timing.

In that case, it is advantageous that a combustion state is obtained in which a high torque is obtained corresponding to at least one of load and engine speed, a combustion ratio value at a specified crank angle in that combustion state is stored as a map data of a target combustion ratio in a memory, at the same time, an actual crank angle at which the specified combustion ratio is reached is detected, and the detected crank angle is compared with a target crank angle to control the fuel injection timing so that the fuel injection timing is advanced when the detected crank angle is behind the target crank angle and the fuel injection timing is delayed when the detected value is in advance of the target crank angle.

In this way, the feedback control of the Diesel engine is carried out such that the actual crank angle at which the specified combustion ratio is reached is detected, the detected crank angle is compared with the target crank angle, the fuel injection timing is controlled, according to the result of the comparison, to be advanced when the detected crank angle value is behind the target value and the injection timing is delayed when the detected value is in advance of the target value, a fuel injection timing is determined at which a high torque is produced in the operating range of the engine, for instance, at engine revolution and load over a wide operating range, and fuel is injected at the injection timing.

Other preferred embodiments of the present invention are laid down in further dependent claims.

In the following, the present invention is explained in greater detail with respect to several embodiments thereof in conjunction with the accompanying drawings, wherein:
FIG. 1 is a structural view of a multiple-cylinder, spark-ignited, four-cycle engine to which this invention is applied.
FIG. 2 is a flow chart of a main routine for controlling various operating states of the engine.
FIG. 3 shows the interrupt routine (1).
FIG. 4 shows the interrupt routine (2).
FIG. 5 shows a map for determining target combustion ratios commensurate with engine revolutions and loads.
FIG. 6 is a graph of combustion chamber pressure for one combustion cycle of a four-cycle engine.
FIG. 7 shows a feedback control of the combustion ratio according to the calculated combustion ratio.
FIG. 8 shows an MBT control routine.
FIG. 9 shows a map for determining target combustion ratios commensurate with engine revolutions and loads.
FIG. 10 shows a feedback control of the combustion ratio according to the calculated combustion ratio.
FIG. 11 is a structural view of a two-cycle engine to which this invention is applied.
FIG. 12 is a graph of combustion chamber pressure, similar to Fig. 6 for the four-cycle engine, for a two-cycle engine showing combustion pressure data detection points for measuring axial torque of the two-cycle engine.
FIG. 13 shows the interrupt routine (1).
FIG. 14 is a flowchart of a lean burning control routine whose target value is a burning rate at a predetermined crank angle.
FIG. 15 is a diagram showing the burning rate being altered when fuel supply is changed.
FIG. 16 is a flowchart of an ignition timing correction control whose target value is a burning rate at a predetermined crank angle.
FIG. 17 is a diagram showing the burning rate FMB being altered through the ignition timing control.
FIG. 18 is a diagram of the data changing during a lean burning control.
FIG. 19 is a diagram showing the correlation between the burning rate, and HC and NOₓ emissions, for a lean A/F value and a predetermined crank angle of ATDC 50°.
FIG. 20 is a diagram showing the correlation between the burning rate and the dispersion of engine output, for a lean A/F value and a predetermined crank angle of ATDC 50°.
FIG. 21 is a map diagram used for finding target crank angles according to engine speed and load.
FIG. 22 is a diagram showing the correlation between the crank angle, and HC and NOₓ emissions, for a lean A/F value and a burning rate of 70%.
FIG. 23 is a diagram showing the correlation between the crank angle and the dispersion of engine output, for a lean A/F value and a burning rate of 70%.
FIG. 24 is a diagram of the combustion chamber pressure showing the burning pressure detection point used for measuring brake torque and burning rates of two stroke engines, corresponding to Fig. 6 for the foregoing four stroke engines.
FIG. 25 is a flowchart for the compensation operation.
FIG. 26 is a routine for preventing abnormal combustion.
FIG. 27 is a compensation routine of ignition timing when a compensation value is calculated according to the deviation.
FIG. 28 is a compensation routine of the amount of fuel supply when a compensation value is calculated according to the deviation.
FIG. 29 shows a variation of the combustion rate FMB by the operation of ignition timing.
FIG. 30 shows a variation of the combustion rate FMB by the operation of the amount of fuel supply.
FIG. 31 is a cold starting control routine in case having a target value map.
FIG. 32 is a graph showing the relation between combustion rate and exhaust temperature at the predetermined crank angle.
FIG. 33 is a graph showing the relation between crank angle and in-cylinder gas temperature.
FIG. 34 is a graph showing the relation between combustion rate at the predetermined crank angle and discharge of HC and NOₓ.
FIG. 35 is a graph showing the relation between combustion rate and output fluctuation at the predetermined crank angle.
FIG. 36 shows a variation of the combustion rate FMB by the operation of ignition timing.
FIG. 37 is a diagram of map to determine the goal combustion rate according to the number of engine rotation and the load.
FIG. 38 is a graph showing the relation between crank angle and exhaust temperature at the predetermined combustion rate.
FIG. 39 is a graph showing the relation between crank angle and discharge of HC and NOₓ at the predetermined combustion rate.
FIG. 40 is a graph showing the relation between crank angle and output fluctuation.
FIG. 41 is a routine for preventing abnormal combustion.
FIG. 42 shows the relationship of crank angle and combustion ratio FMB when the ignition timing is 20 degree BTDC.
FIG. 43 is a graph showing the relationship of crank angle and cylinder gas temperature.
FIG. 44 is a graph showing the relationship of crank angle and cylinder pressure.
FIGs. 45 to 47 show feedback controls of the combustion ratio according to the calculated combustion ratio.

Details of the control method and control device for the engine of the invention will be described in reference to the appended drawings.

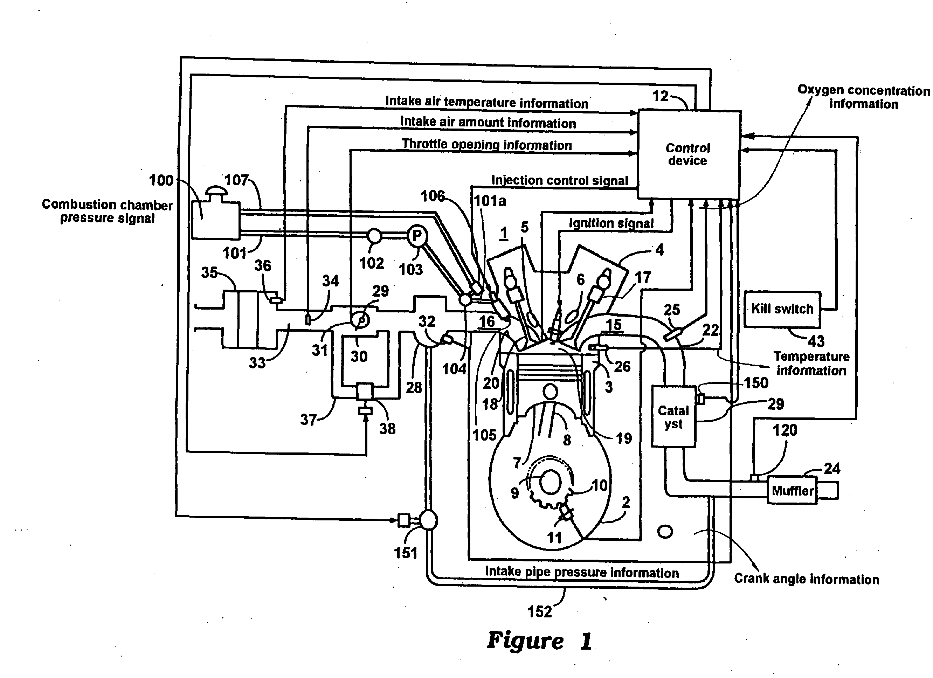

Figure 1 is a structural diagram of a multi-cylinder spark ignition four-cycle engine to which the present invention has been adapted. This engine is composed of a crankcase 2, which has a cylinder unit 3 and a cylinder head 4 mounted upon it. The pistons 7 inside the cylinder unit 3 are movably installed by means of the connecting rods 8 which link them to the crankshaft 9. A ring gear 10 with a specific number of teeth is attached to the crankshaft 9. The ring gear is further equipped with a crank angle sensor 11 which doubles as an engine RPM sensor that detects the rotational position of the ring gear for the crank angle and which measures the RPM of the engine. The combustion chambers 13 are formed between the cylinder head 4 and the pistons 7. The combustion chamber pressure sensors 5 that detect the combustion chamber pressure inside these combustion chambers 13 are mounted on the cylinder head. A coolant jacket is formed on the cylinder head 4 and the cylinder body 3 in appropriate positions. The combustion chambers 13 have openings which connect to an exhaust passage 15 and air intake passage 16, and the exhaust valves 17 and air intake valves 18 are mounted respectively therein. A catalytic converter 23 containing a three element catalyst, etc. to cleanse the exhaust emissions is installed in the exhaust pipe 22 connected to the exhaust passage 15, and a muffler 24 is mounted on the end. Also installed in the exhaust pipe 22 are an oxygen concentration sensor (O₂ sensor) 25 and an exhaust temperature sensor 120, and these are connected to the control unit 12.

Temperature sensors 26 that are mounted on the cylinder head 4 provide temperature information regarding the combustion chambers 13 to the control unit 12. A catalyst temperature sensor 150 is also mounted on the catalytic converter 23, and it too is connected to the control unit 12. The control unit 12 also receives information on the stopping of engine-drive control from the engine key switch 43.

On the other hand, an air intake pipe 20 is connected with air intake conduit 16, and the intake pipe 20 is connected to each cylinder by means of the intake manifold 28.

There is an air intake pressure sensor 32 mounted in the air intake manifold 28 which sends information on the pressure in the air intake pipe 20 to the control unit 12. There is also an EGR pipe 153 that connects this air intake manifold pipe 28 with the exhaust pipe 22. An EGR adjustment valve 151 that is connected to the control unit 12 is mounted in this EGR pipe. The air intake manifold 28 is connected to the air cleaner 35 by means of an air intake passage 33. An air intake temperature sensor 36 is mounted in this air cleaner 35 and it sends information on the air intake temperature to the control unit 12. An air intake regulator 30 that includes a throttle valve 29 is also mounted in the air intake passage 33.

A throttle aperture sensor 31 is mounted on the throttle valve, and this throttle aperture sensor 31 is connected to the control unit 12. There is a throttle valve bypass passage 37 located in this air intake regulator 30 area of the air intake passage 33, and a bypass passage aperture adjustment valve 38 is mounted in this bypass passage 37. The bypass passage aperture adjustment valve 38 is connected to the control unit 12. There is a heat wave type of intake air flow sensor 34 mounted in the air intake passage 33 that sends air intake information to the control unit 12.

Injector valves 105 are mounted in the air intake passage 16 upstream of the air intake valves for the each of the cylinder's air intake ports. The injectors 105 are linked to the control unit 12 which sends them control signals on the optimal amount of fuel injection based upon the operating state of the engine. The fuel is sent to each of the injectors 105 by fuel lines 101a that connect at each cylinder. The fuel lines 101a branch off from a fuel distribution line 104 that is supplied with fuel from the fuel tank 100 by a fuel pump 103 through a fuel filter 102 installed in the fuel supply line 101. Fuel that is not injected by the injectors 105 is returned to the fuel tank 100 by means of the fuel return line 107. A regulator 106 is mounted in the fuel return line 107 that maintains a constant fuel injection pressure.

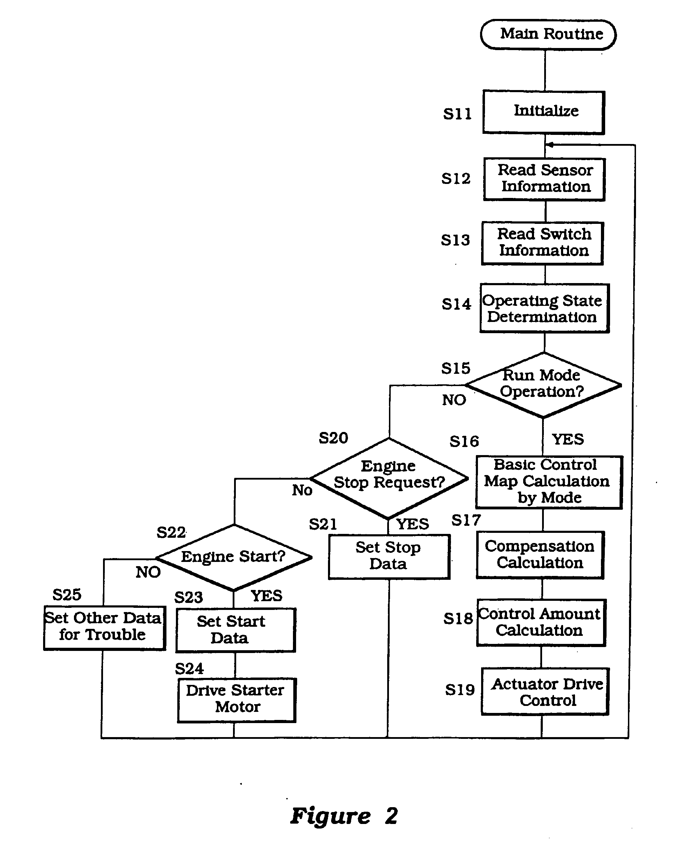

FIG. 2 is a flow chart of a main routine for controlling various operating state of the engine.

Step S11: Initialization is carried out. Initial values are set to flag values and variables.

Step S12: Various kinds of information are taken in: intake air temperature information from an intake air temperature sensor 30, intake air amount information from an intake air amount sensor 40 of heat wire type, throttle opening information from a throttle opening sensor 31, intake pipe pressure information from an intake pipe pressure sensor 32, catalyst temperature information from a catalyst temperature sensor 150, crank angle information from a crank angle sensor 11, temperature information from a temperature sensor 26, exhaust temperature information from an exhaust temperature sensor 120, combustion chamber pressure information from a combustion chamber pressure sensor 5, oxygen concentration information from an oxygen concentration sensor 25, and remaining oil amount information from an oil sensor (not shown). Those data taken in are stored in a memory A. Engine load may be known as the accelerator position or throttle opening. Once the throttle opening and the engine revolution are determined, amount of intake air in normal operating state may be determined, and therefore amount of intake air detected directly may be regarded as the engine load. Alternatively, since intake pipe negative pressure has a certain relationship with the throttle opening once the engine revolution is determined, the intake pipe negative pressure detected may be regarded as the engine load.

Step S13: On or off state information is taken in and stored in a memory B(1) for various switches; a kill switch 43, a main switch (not shown), a starter motor switch (not shown), etc. The kill switch 43 is an emergency switch which is not employed in engines for land vehicles but in small marine engines for instance.

Step S14: Operating state is determined from the sensor information taken in the step S12 and the switch information taken in the step S13. Values corresponding to the operating states 1 through 5 are input to variables C in the memory.

Operating state 1: In a constant throttle or moderate throttle operation state with medium to high revolution, with medium to high load, without rapid acceleration or deceleration, with the throttle opening not less than a specified value, with the engine revolution not less than a specified value, and with the throttle opening changing rate not more than a specified value, the operating state is determined as an MBT (Minimum Advance Ignition for Best Torque) control state, and a value 1 is stored as the variable C.

Operating state 2: When the throttle opening changing rate is not less than a specified value, the operating state is determined as transient, and a value 2 is stored as the variable C.

Operating state 3: When the throttle opening is not more than a specified value and the engine revolution is within a specified range, for instance 2000 rpm - 5000 rpm, the operating state is determined as in a lean combustion control state, and a value 3 is stored as the variable C.

Operating state 4: When the engine is in an abnormal state such as the engine revolution being not less than a specified limit or over-revolution, the engine temperature being not less than a specified value or overheat, etc., the operating state is determined as an abnormal operating state, and a value 4 is stored as the variable C.

Operating state 5: When the engine temperature is not higher than a specified value and the starter switch is on, the operating state is determined as a cold start state, and a value 5 is stored as the variable C.

When the main switch or kill switch is off, the operating state is determined as an engine stop request state, and a value 6 is stored as the variable C.

Furthermore, the number of repetition of the step S14 is checked with the same value of variable C and with the flag P=1 unchanged. When the number exceeds a specified value R, it is set to P=0.

When changes are made with:
Rc = 1 when C = 1,
Rc = 2 when C = 2, and
Rc = 3 when C = 3,
the result is,
R/c=1 < R/c=2 < R/c=3

When the C value in the previous routine is different from that of the present time, it is set to P=0.

Step S15: Determination is made whether or not to perform a mode operation. When the variable C is 1-3, the process goes to the step S15, and when the variable C is 4-8, it goes to the step S20.

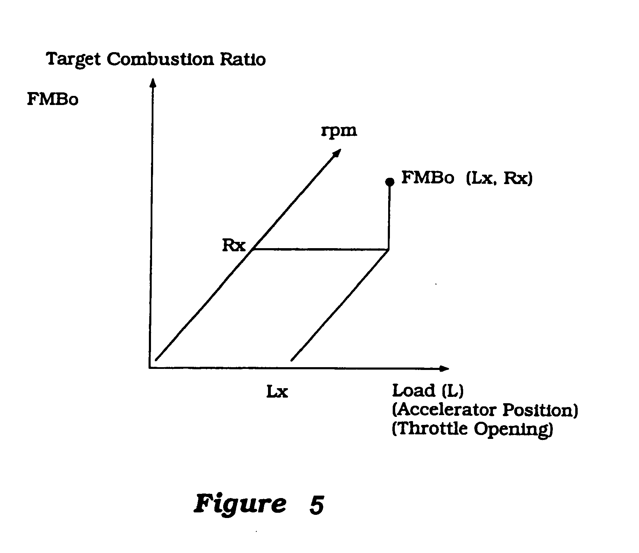

Step S16: Based on the value of the flag P, when P=0, a target combustion ratio corresponding to the engine revolution and load is determined from the map data in the memory (corresponding to those in Fig. 5) and the result is stored in the memory D. A basic ignition timing, a basic fuel injection start timing and a basic fuel injection amount are also determined from map data in the memory which are respectively similar to those in Fig. 5 (pictorial representation of values given as a function of the engine revolution and load), and they are stored in the memories E'(1), E'(2), and E'(3) respectively. After the storing, it is set to P=1. When P=0, the process goes to the step S17.

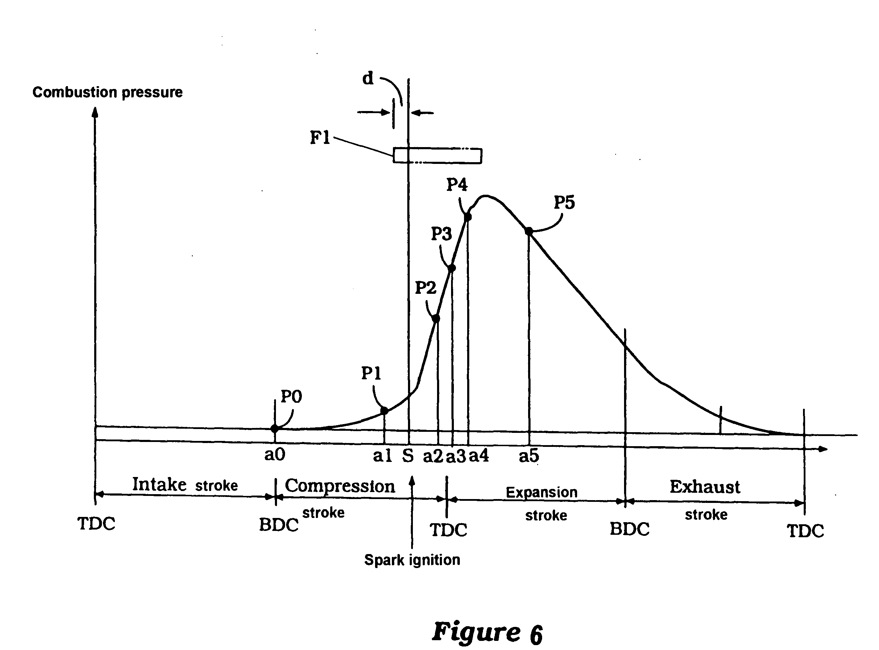

The combustion rate is defined as the rate of combustion of the fuel burned in one combustion cycle up to a certain crank angle. With regard to computing this combustion rate, one method is to use the combustion chamber pressure data that was taken at a plurality of points during one combustion cycle and use a first-order approximation equation; the other method would be to determine the combustion rate up to the desired crank angle (for example, top dead center) computing heat production using samplings of the combustion pressure and a thermodynamic equation. Both methods yield computed results that very closely approximate the real values. In this case, the combustion pressure data would be detected at a crank angle in the first period between the end of the exhaust stroke and the beginning of the compression stroke, at a crank angle at top dead center or a crank angle near top dead center, and at crank angles after top dead center and before the beginning of the exhaust stroke. That is in the four-cycle engine, as shown in figure 6, the pressure in the combustion chamber decreases to approach the atmospheric pressure as exhaust gas in the combustion chamber is discharged during the exhaust stroke as the piston moves from the bottom dead center after expansion to the top dead center. During the intake stroke after the piston passes the top dead center, the pressure is maintained almost at the atmospheric, and gradually increases at the compression stroke after the piston passes the bottom dead center, and starting after the exhaust valve 17 is closed at the end of the exhaust stroke.

A pressure in the combustion chamber at a time point within the period of time when the pressure is low and near the atmospheric is detected. In figure 6, BDC is chosen as the crank angle a0, however, if it is the beginning of the compression stroke, any angle after BDC can be chosen. Also, a crank angle before BDC can be chosen as the crank angle a0.

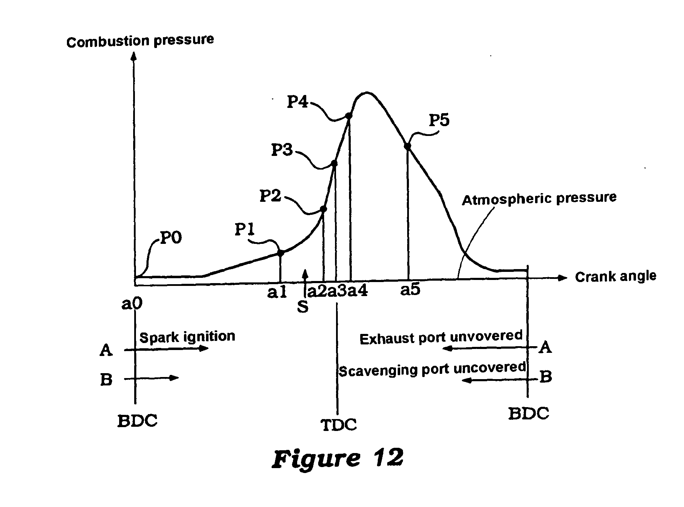

In the two-cycle engine on the other hand, as shown figure 12, the pressure decreases as the piston moves downward after combustion. When the exhaust port is uncovered, the pressure decreases further. When the scavenging port is uncovered, the pressure approaches the atmospheric as the fresh charge is introduced. As the piston moves upward, with the exhaust port open, from the bottom dead center to cover the scavenging port and then to cover the exhaust port, the pressure increases gradually. Thus, the phrase "period of time from the exhaust stroke end to the early stage of the compression stroke" refers to the period of time from the intake start to the compression start when the scavenging port is uncovered under the condition of the exhaust port uncovered after the start of the exhaust stroke. In figure 12 BDC is chosen as the crank angle a0.

Spark ignition occurs before or after the top dead center after compression. (Spark ignition begins at the crank angle indicated with an arrow and a letter S in FIGs 6 and 12.) Combustion starts with a little delay from the start of the sparking. The term ignition start used in the claims refers to the instant of the start of combustion mentioned above. In other words, pressure in the combustion chamber is detected at a crank angle within the second period between the compression stroke start and the ignition-combustion start (at the angle a1 in both FIGs. 6 and 12). After that, pressure in the combustion chamber is detected at two crank angles (in FIGs. 6 and 12 for instance, at crank angles a2 and a3, or a2 and a4, or a3 and a4, or a2 and a5, or a3 and a5, or a4 and a5) within the third period between the ignition start (ignition combustion start) and the exhaust stroke start within the combustion stroke. One of the two crank angles within that period is preferably before the crank angle at which the combustion pressure reaches the maximum. Furthermore, when the pressures in the combustion chamber are detected at least at four crank angle points as referred to in claims, for instance at five or more crank angle points, the number of the pressure measurement crank angle points in the first or second period may be increased. Also preferably as shown in FIGs 6 and 12, the pressure may be detected at three or more crank angles within the third period. In Diesel engines, after a compression stroke, fuel injection into the combustion chamber is started before or after the top dead center and, with a little delay, combustion begins by natural ignition. In other words, the term ignition start used in claims refers to the instant of the start of the natural ignition. By the way, the time lag between the fuel injection start and the natural ignition is determined in advance from the engine revolution or load. The determined time lag is taken into consideration, a pressure measurement crank angle within the second period and a pressure measurement crank angle within the third period are stored as the data based on the engine revolution and/or load in the memory, and the pressure in the combustion chamber is measured.

Thus, the combustion chamber pressures are detected at least four crank angles: at one point within the first period, at one point within the second period, and two points within the third period. From those data, the combustion ratio is calculated with a linear approximation formula.

These approximation equations are expressed as follows:$\text{Combustion rate:} \text{qx = b + b1*(p1-p0) + b2*(p2-p0) + ...bn*(pn-p0)}$$\text{Indicated mean effective pressure:} \text{pmi = c + c1*(p1-p0) + c2*(p2-p0) + ...cn*(pn-p0)}$

Similarly, pmi is the sum of the products of predetermined constants c1 through cn multiplied by the pressure data p1 through pn from which the standard pressure p0 has been subtracted.

Here, p0 is the pressure in the combustion chamber when it reaches the atmospheric pressure level (for example, near the BDC as described above), and it is subtracted from the various pressures p1 through pn in order to correct the pressure for sensor drift. P1 is the pressure in the combustion chamber at the crank angle a1 in the first period.

P2 is a combustion chamber pressure at the crank angle a2 in the second period. P3-Pn are those at the crank angles a3-an (in this embodiment, n = 5).

Thus, a simple first-order approximation equation can be used to compute, at a specific crank angle after ignition, an accurate value for the combustion rate with is almost the same as the actual value. Accordingly, by using this combustion rate as the basis for the control of the engine's ignition timing or air/fuel ratio, it is possible not only to get better energy efficiency from combustion, but to improve response, and to prevent output fluctuations by accurately following the operating state of the engine when performing EGR control under lean burn engine operations. It is further possible to prevent the generation of NOₓ emissions caused by the rapid advance of combustion.

With regard to the second computation method for the combustion rate, qx is computed using the heat generated between two pressure measurement points (crank angles) the pressure difference ΔP between the two pressure measurement points, the volume difference ΔV in the volume of the combustion chamber, where P and V are the first of the two pressure values and combustion chamber volume values that were measured, A is the heat equivalent, K is the specific heat ratio, R is the average gas constant, and P0 is the pressure at BDC:$\text{Heat generation:} \text{Qx =} \frac{\text{A}}{\text{(K+1)}} \text{x (} \frac{\text{(K-1)}}{\text{2}} \text{x ΔP x ΔV + K x (P-Po))}$

The specific pressure measurement point up to where the combustion rate is measured should be selected as the rank angle where combustion is nearly complete. Similarly, a crank angle near the point of ignition would also be selected as a pressure measurement point. The calculation of the foregoing amount of heat generation Qx is performed by summing the values determined for each of the pressure measurement points, and with regard to the interval between the initial pressure measurement point to the specified pressure measurement point (the specific crank angle). Then the combustion rate is determined by summing for the foregoing Qx and then dividing; to wit:$\text{Combustion rate:} \text{qx = the amount of combustion heat up to the desired crank} \text{angle / all of the heat X} \text{100 (%)} \text{= (Q1 + Q2 + ... + Qx) / (Q1 + Q2 + ... + Qn) x 100}$

The above computation can be used to measure the combustion chamber pressure at a plurality of specific crank angles, and based upon that data, the combustion rate up to the desired crank angle can be accurately computed. Then, by using this combustion rate for engine control, it is possible to obtain stable output and engine RPM.

Step S17: Using the intake air temperature information and intake pipe negative pressure information, compensation calculation of the fuel injection amount is carried out. That is to say, when the intake air temperature increases, the air density decreases and the substantial air flow rate decreases. This results in the decrease in the air to fuel ratio. Therefore, compensation amount for reducing fuel injection amount has to be calculated.

Step S18: Basic fuel injection is started according to the engine load and engine revolution. The basic fuel injection amount and the basic ignition timing are determined in the step S16 and stored in the memory E'(i). Based on these data, the fuel injection compensation amount and the ignition timing compensation amount are determined according to the compensation amount determined in the step S17 and information stored in the memory A(i), and added to the basic values to determine the control amounts. As the control amounts, the ignition start timing is the value in the memory E(1), and the ignition period is the value in the memory E(2). When E=1, the injection start timing and the injection end timing are stored in F(3) and F(4) respectively. When E=0, the injection start timing and the injection end timing are stored in E(3) and E(4) respectively.

This is input to the memory E(i). In a similar manner, control amounts for the servomotor group and the solenoid valve group are calculated according to the information stored in the memory A(i) and stored in the memory G(i).

Step S19: Actuators such a servomotor group and solenoid valve are driven and controlled according to the control amounts in the memory G(i).

Step S20: Whether an engine stop request is present is determined. If present, the process goes to the step S21. If not, the process goes to the step S22.

Step S21: Values of the memory E(i), where i = 1-4, are set to zero as stop data.

Step S22: An engine start is checked. If yes, the step goes to the step S23. If not, it goes to the step S25.

Step S23: Data stored in advance in the memory for the start are set to the memory F(i).

Step S24: Starter motor is actuated.

Data corresponding to the types of abnormal conditions are set to the memory F(i).

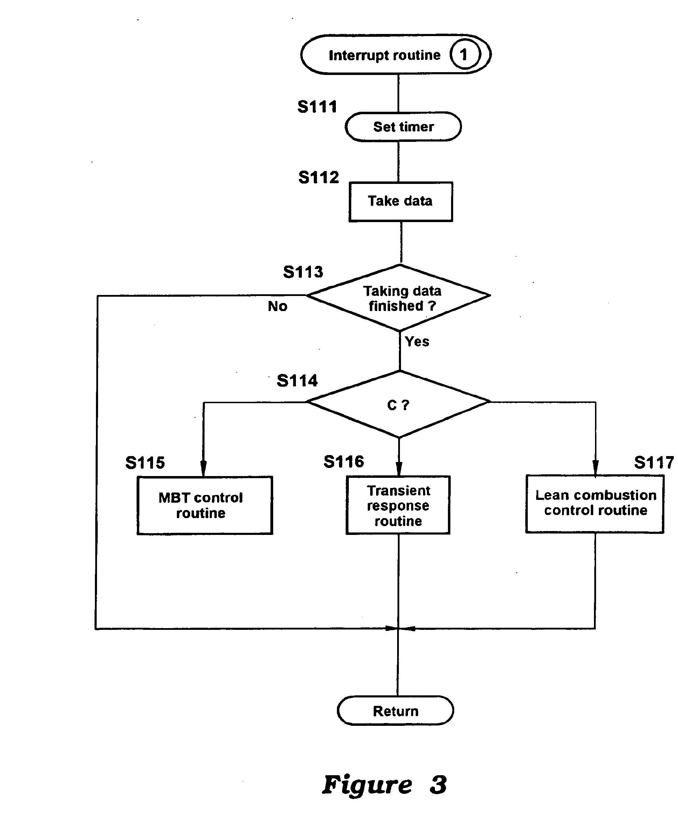

Next, the interrupt routine 1 shown in FIG. 3 will be described. This interrupt routine 1 is executed by interrupting the main routine when a specified crank angle signal is input.

Step S111: A timer is set to perform interruption routine 1 at every specified crank angle, namely to perform the interruption at the next crank angle.

Step S112: The data at a crank angle at which an interruption occurred is taken into the memory.

Step 113: When the data at every crank angle at which an interruption occurred is taken into the memory, the process goes to the step S114.

To perform control commensurate with operating conditions, identifying data is discriminated. When the variable C is 1, control is performed with the MBD control routine of the step S115. When the variable C is 2, control is performed with the transient response routine of the step S116. When the variable C is 3, control is performed with the lean combustion control routine of the step S117.

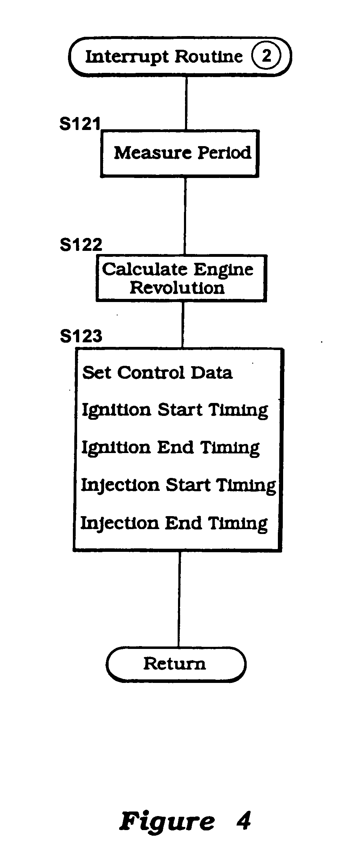

Next, the interrupt routine 2 shown in FIG. 4 will be described. This interrupt routine 2 is executed by interrupting the main routine when a reference crank angle signal is input.

Step S121: This interrupt routine 2 is executed once at a specified crank angle of the engine revolution, and therefore measures a period.

Step S122: Engine revolution is calculated.

Step S123: The ignition start timing, ignition end timing, injection start timing, and injection end timing are set to the timer according to the control data of the memory F(i), where i = 1-4. The timer actuates the ignition device and the injection device at the preset timings.

Next, calculation of the target combustion ratio mentioned in reference to FIGs. 2 and 3 will be described in detail.

FIG. 5 is a map for determining target combustion ratios commensurate with engine revolutions and loads. The map is of a three dimensional structure for determining combustion ratios according to operating conditions of loads (Lx) and engine revolutions (Rx) up to specified crank angles for instance up to the top dead center (TDC), 10 degrees before TDC, and so on. The target combustion ratio under specified operating conditions (Lx, Rx) is determined as FMBo (Lx, Rx).

FIG. 6 is a graph of combustion chamber pressure over one combustion cycle of a four-cycle engine. The lateral axis shows the crank angle and the vertical axis shows the combustion pressure. Combustion pressures P0-P5 are detected at the six crank angles a0-a5 shown in the figure, and combustion ratios are calculated from those pressure values. The crank angle a0 is at the bottom dead center (BDC) where the stroke changes from intake to compression, and the pressure is about atmospheric. The angle a1 is after the compression start and before the spark ignition, a2 is the crank angle after the spark ignition at the angle S and before reaching the TDC. The angles a3-a5 are crank angles are after the TDC in the combustion stroke. The combustion ratios are calculated from the pressure data at those crank angles. By the way, in Diesel engines where spark ignition is not made, fuel is injected in the vicinity of the TDC, in a zone F1. Natural ignition occurs with a delay angle d after the fuel injection. The natural ignition occurs at the crank angle S. Fuel injection timing is controlled according to the difference between the measured and target values of the combustion ratio or the crank angle. The injection start timing is controlled to be advanced or delayed, and the injection end timing is controlled so that a specified injection amount is secured.

Next, controlling the combustion ratio based on the calculation of the combustion ratio mentioned in reference to FIGs. 2 and 3 will be described in detail.

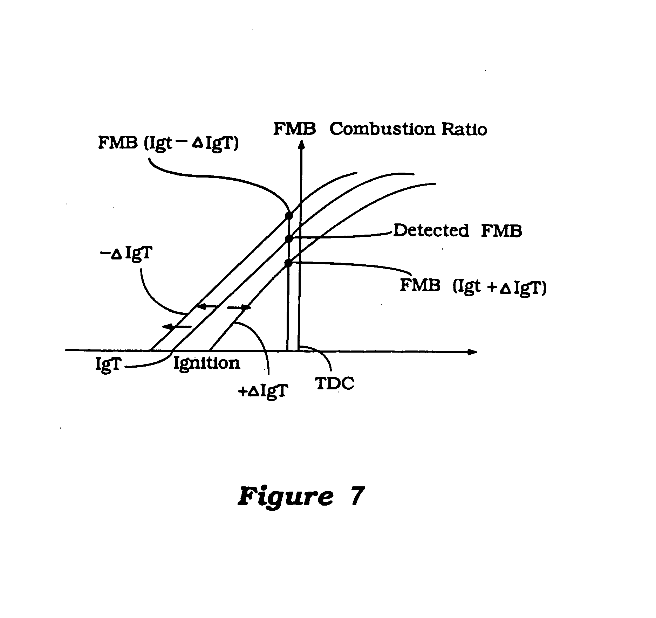

FIG. 7 is a graph of the feedback control of the combustion ratio according to the calculated combustion ratio. The combustion ratio FMB is measured when ignition is made at the timing IgT under the operating conditions of (Lx, Rx). That is to say, a combustion ratio for a specified crank angle, for example up to 5 degrees before the TDC, is calculated from the combustion pressure data, and the actual combustion ratio FMB(Lx, Rx) is determined.

The ignition timing (IgT) is compensated so that the difference between the target combustion ratio FMBo(Lx, Rx) and the measured combustion ratio FMB(Lx, Rx) approaches zero. If the target combustion ratio FMBo(Lx, Rx) is smaller than the measured combustion ratio FMB(Lx, Rx), the ignition timing is advanced by delta-IgT from the original ignition timing IgT. If the target combustion ratio FMBo(Lx, Rx) is greater than the measured combustion ratio FMB(Lx, Rx), the ignition timing is delayed by delta-IgT from the original ignition timing IgT.

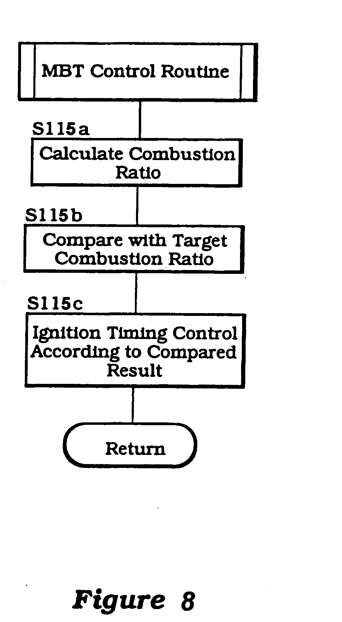

Next, the MBT control in the interrupt routine 1 of FIG. 3 will be described, FIG. 8 is the MBT control routine.

Step S115a: The target combustion ratio for the MBT control is stored as a three dimensional map with variables of engine load and engine revolution, and calculated from the target combustion ratio map in the step S16 in the main routine.

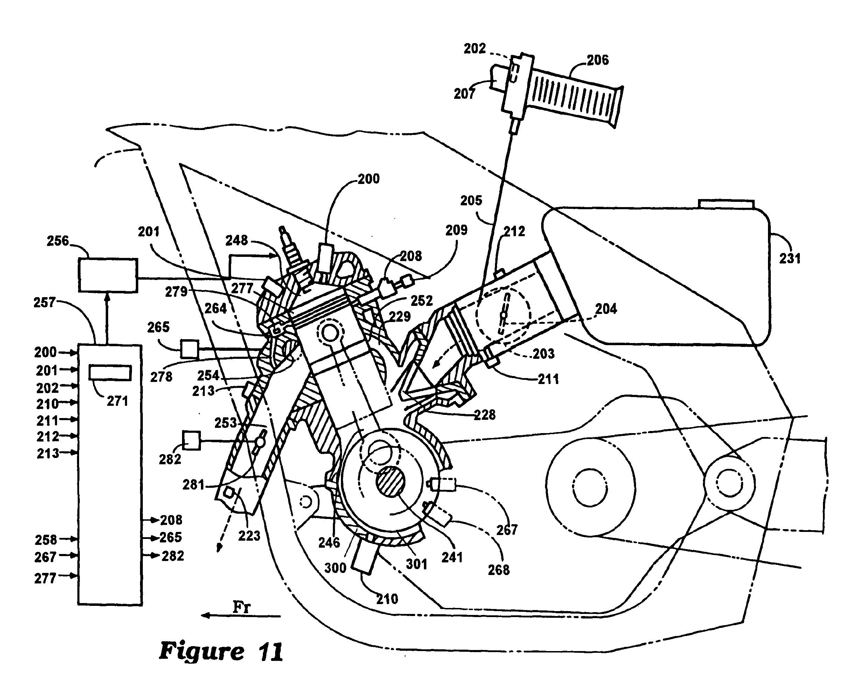

In the two-cycle engine which will be described later in reference to FIGs. 11 and 12, exhaust passage valve opening is calculated according to the engine load and engine revolution from a three-dimensional map stored in the memory with two variables of engine load and engine revolution. Exhaust timing (compression ratio) variable valve opening is calculated according to the engine revolution from a two-dimensional map stored in the memory with a variable of engine revolution.

Step S115a: Combustion pressures P0-P5 at the crank angles a0-a5 shown in FIG. 6 are stored in the memory and used to calculate the actual, measured combustion ratio.

Step S115b: The combustion ratio is controlled according to the measured combustion ratio. The target combustion ratio in the memory D is compared with the measured combustion ratio determined in the step S115a.

Step S115c: The ignition start timing in the memory E(1) is compensated by using FIG. 7 and the result of comparison in the step S115b, and the compensated data is input into the memory F(1). The ignition end timing is determined according to the ignition period in the memory E(2), and the determined data is input into the memory F(2).

Then, in place of the MBT control routine of FIG. 8, the control described below is performed. That is to say, instead of the combustion ratio, the crank angle at which the specified combustion ratio occurs is calculated. The target crank angle is compared with the measured crank angle calculated from the pressure data. Then the ignition timing is controlled according to the result of the comparison. When the measured crank angle is in behind the target crank angle, the ignition timing is advanced. When the measured crank angle is in advance of the target crank angle, the ignition timing is delayed.

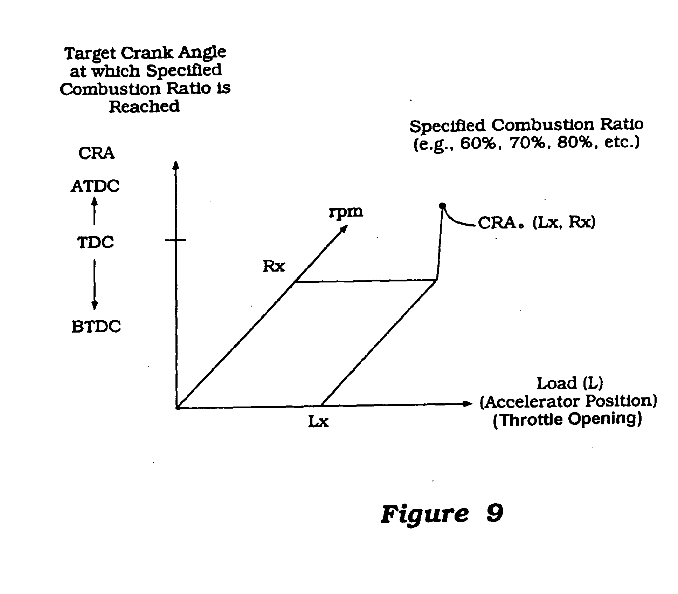

The target crank angle is determined from the map data in FIG. 9 in which the load is plotted along the lateral axis and the target crank angle (CRA) at which the specified combustion ratio is reached is plotted along the vertical axis. For example, the target crank angle CRAo(Rx, Lx) at which the specified combustion ratio of 60%, 70%, or 80% is to be reached is determined from the actual engine rpm (Rx) and the actual engine load (Lx) on the map.

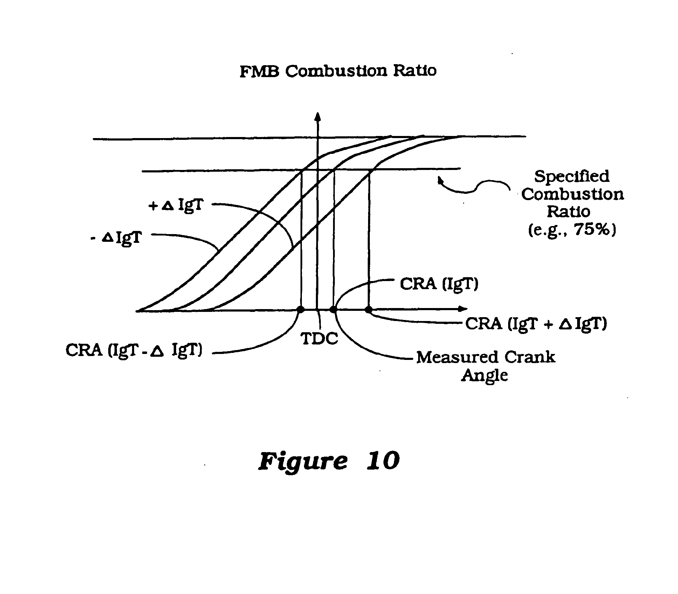

FIG. 10 is a graph for the feedback control of the combustion ratio. Under specified operating conditions (Lx, Rx), the target crank angle CRAo(Lx, Rx) at which the combustion ratio FMB of 75% for example is calculated, and the measured crank angle CRA(IgT) is determined from the pressure data.

Then, the ignition timing (IgT) is compensated so that the difference between the target crank angle CRAo(Lx, Rx) and the measured crank angle CRA(IgT) approaches zero. If the measured crank angle CRA(IgT) is in advance of the target crank angle CRAo(Lx, Rx), ignition is made with a delay of delta-IgT from the ignition timing IgT. If the measured crank angle CRA(IgT) is behind the target crank angle CRAo(Lx, Rx), ignition is made with an advance of delta-IgT from the ignition timing IgT.

In the step S113 of the interrupt routine 1 of FIG. 3, combustion pressures P0-P5 at six crank angles (a0-a5) are detected. From the detected pressure data, combustion ratios are calculated. The embodiments of this invention may be employed in engines in which fuel is supplied through a carburetor.

Figure 11 shows a structural diagram of this invention as applied to a two-cycle engine. As with the four-cycle engine shown in Figure 1, connecting rods 246 are connected to the crank shaft 241, and at the other end, the combustion chambers 248 are formed in the space between the pistons and the cylinder head. There is an engine RPM sensor 267 and a crank angle sensor 257 attached to the crankcase which detect the marks on the ring gear attached to the crank shaft and issue standard signals and detect the crank angle. Also attached to the crankcase is a crank chamber pressure sensor 210.

Air is conveyed into this crank chamber from the air intake manifold through the reed valve 228. Air is conveyed to the air intake manifold through the throttle valve 204 of the carburetor and the air cleaner 231. An intake pressure sensor 211 is mounted in the air intake manifold on the downstream side of the throttle valve. The throttle valve 204 is operated by a grip 206 that is linked by a wire 205 to the throttle pulley 203. This grip 206 is attached to the steering handle bars 207, and an accelerator position sensor 202 is mounted at its base. 212 is a throttle aperture sensor.

There is a scavenging port 229 in the cylinder which connects the combustion chamber and the crank chamber 301 by means of the scavenging passage 253 when the piston is in certain positions. There are also exhaust ports 254 in the cylinder which connect to the exhaust passage 253. There is an exhaust timing adjustment valve 264 installed in the exhaust passage wall in the vicinity of the exhaust port. The variable valve 264 is driven by the actuator 265 of a servo motor, etc. There is an exhaust pipe pressure sensor 213 and an exhaust pipe temperature sensor 223 mounted in the exhaust pipe that comprises the exhaust passage. Furthermore, the exhaust passage is equipped with an exhaust passage valve, which is driven by the actuator 282 from a servo motor, etc. The function of the exhaust passage valve is to improve the rotational stability by preventing blowby through the constriction during low speed operations.

A knocking sensor 201 is attached to the cylinder head, as are spark plugs and combustion chamber pressure sensors 200 which lie at the edge of the combustion chambers. The spark plugs are connected to an ignition control apparatus 256. The injectors 208 are attached to the cylinders' side walls. Fuel is conveyed to these injectors 208 by means of the fuel delivery lines 209.

Combustion gas chambers 279 are formed in the cylinder block which are linked by connecting holes 278 to the middle area of the exhaust ports near the exhaust port opening for the cylinder bore and the cylinder head on the cylinder block. These connecting holes are set to guide the foregoing combustion gas, which contains almost no blow-by gas, into the foregoing combustion gas chambers. There are O₂ sensors 27 attached to the inside of these combustion gas chambers that detect the oxygen concentration therein. In addition, check valves that are not shown are located at the entry to the combustion gas chambers and at the exit to the exhaust ports to prevent reverse flows in these areas.

Thus, drive control of the engine is exercised by a control unit 257 having a CPU 271. The inputs connected to this control unit 257 include the foregoing combustion chamber pressure sensors 200, the knocking sensor 201, the accelerator position sensor 202, the crank chamber pressure sensor 210, the air intake pipe pressure sensor 211, the throttle aperture sensor 212, the exhaust pipe pressure sensor 213, the crank angle detection sensor 258, the engine RPM sensor 267 and the O₂ sensor 277. The output side of the control unit 257 is connected to the injectors 208, the actuator 265 for the exhaust timing adjustment valve, the actuator 282 for the exhaust valve, and to the oil supply device (not shown).

Figure 12 is a graph of the combustion chamber pressure that shows the point of measurement of the pressure data to compute combustion rate for the foregoing 2 cycle engine, and this graph is similar to the one (Figure 6) above for the four-cycle engine. As described above, the combustion chamber pressure data sampling takes place at 6 crank angles. In the figure, the area inside the A range is the crank angle range for which the exhaust port is open, and the B range is that crank angle range for which the scavenging port is open. The sampling methods at the various crank angles (a0 to a5) and the methods of computation of essentially the same as used for the four-cycle engine described above.

The embodiments of this invention could also have been adapted for engines employing a carburetor in the air intake passage for supplying fuel to the engine.

As described above, with the control method for an engine of claim 1 of the invention, the actual combustion ratio up to the specified crank angle is detected. The ignition timing is controlled according to the result of comparison between the detected and target values of the combustion ratio so that the ignition timing is advanced when the detected value is smaller, and delayed when the detected value is greater than the target value. As a result, it is possible to perform a feedback control to find the ignition timing of a minimum advance angle at which ignition is made to produce a best torque in that operating range for example at that engine revolution and load.

With the engine control method of claim 2 of this invention, the actual combustion ratio up to the specified crank angle is suitably calculated from the combustion pressure data.

With the engine control method of claim 3 of this invention, an actual crank angle at which the specified combustion ratio is reached is detected, and the detected crank angle is compared with a target crank angle to control the ignition timing so that the ignition timing is advanced when the detected crank angle is behind the target crank angle and the ignition timing is delayed when the detected value is in advance of the target crank angle. As a result, it is possible to perform a feedback control to find the ignition timing of a minimum advance angle at which ignition is made to produce a best torque in that operating range for example at that engine revolution and load.

With the engine control method of claim 4 of this invention, an actual crank angle at which the specified combustion ratio is suitably calculated from the combustion pressure data.

With the engine control device of claim 5 of this invention, the actual combustion ratio up to the specified crank angle is suitably calculated from the detected combustion pressure data, and the detected combustion ratio is compared with the target combustion ratio to control the ignition timing of the engine so that the ignition timing is advanced when the detected value is smaller than the target value and the ignition timing is delayed when the detected value is greater than the target value.

The actual crank angle at which the specified combustion ratio is reached is suitably calculated from the detected combustion pressure data, and the detected crank angle is compared with a target crank angle to control the ignition timing so that the ignition timing is advanced when the detected crank angle is behind the target crank angle and the ignition timing is delayed when the detected value is in advance of the target crank angle.

With the method for controlling a Diesel engine claim 6 of this invention, actual combustion ratio up to that crank angle is detected, the detected combustion ratio is compared with the target combustion ratio to control the fuel injection timing of the engine so that the fuel injection timing is advanced when the detected value is smaller than the target value and the fuel injection timing is delayed when the detected value is greater than the target value. As a result, it is possible to perform a feedback control to find the injection timing of a minimum advance angle at which injection is made to produce a best torque in that operating range for example at that engine revolution and load.

With the method for controlling a Diesel engine claim 7 of this invention, actual crank angle at which the specified combustion ratio is reached is detected, the detected crank angle is compared with the target crank angle to control the fuel injection timing of the engine so that the fuel injection timing is advanced when the detected value is behind the target value and the fuel injection timing is delayed when the detected value is in advance of the target value. As a result, it is possible to perform a feedback control to find the injection timing of a minimum advance angle at which injection is made to produce a best torque in that operating range for example at that engine revolution and load.

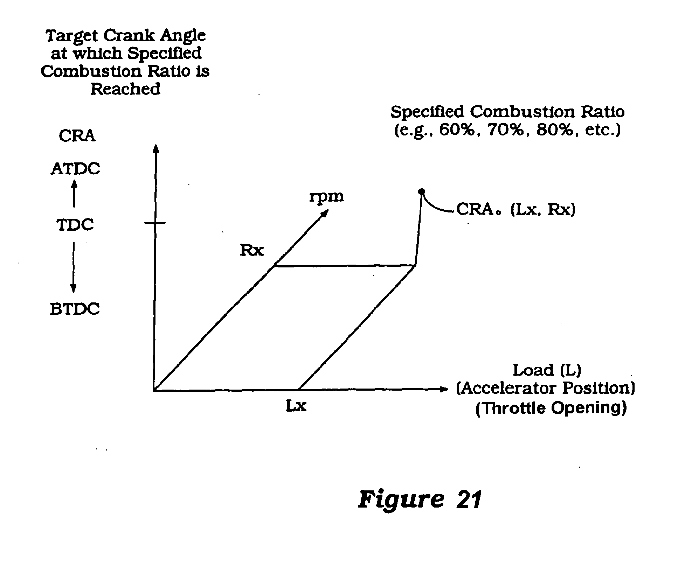

In the following another embodiment of the invention will be explained with reference to the figures 2-6 and 14-24.

FIG. 2 is a flow chart of a main routine for controlling various operating state of the engine.

Step S11: Initialization is carried out. Initial values are set to flag values and variables.

Step S12: Various kinds of information are taken in; intake air temperature information from an intake air temperature sensor 30, intake air amount information from an intake air amount sensor 40 of heat wire type, throttle opening information from a throttle opening sensor 31, intake pipe pressure information from an intake pipe pressure sensor 32, catalyst temperature information from a catalyst temperature sensor 150, crank angle information from a crank angle sensor 11, temperature information from a temperature sensor 26, exhaust temperature information from an exhaust temperature sensor 120, oxygen concentration information from an oxygen concentration sensor 25, and remaining oil amount information from an oil sensor (not shown). Those data taken in are stored in a memory A. Engine load may be known as the accelerator position or throttle opening. Once the throttle opening and the engine revolution are determined, amount of intake air in normal operating state may be determined, and therefore amount of intake air detected directly may be regarded as the engine load. Alternatively, since intake pipe negative pressure has a certain relationship with the throttle opening once the engine revolution is determined, the intake pipe negative pressure detected may be regarded as the engine load.

Step S13: On or off state information is taken in and stored in a memory B(i) for various switches: a kill switch 43, a main switch (not shown), a starter motor switch (not shown), etc. The kill switch 43 is an emergency switch which is not employed in engines for land vehicles but in small marine engines for instance.

Step S14: Operating state is determined from the sensor information taken in the step S12 and the switch information taken in the step S13. Values corresponding to the operating states (1) through (6) are input to variables C in the memory.

Operating state (1) : In a constant throttle or moderate throttle operation state with medium to high revolution, with medium to high load, without rapid acceleration or deceleration, with the throttle opening not less than a specified value, with the engine revolution not less than a specified value, and with the throttle opening changing rate not more than a specified value, the operating state is determined as an MBT (Minimum Advance Ignition for Best Torque) control state, and a value 1 is stored as the variable C.

Operating state (2): When the throttle opening changing rate is not less than a specified value, the operating state is determined as transient, and a value 2 is stored as the variable C.

Operating state (3): When the throttle opening is not more than a specified value and the engine revolution is within a specified range, for instance 2000 rpm - 5000 rpm, the operating state is determined as a lean combustion control state, and a value 3 is stored as the variable C.

Operating state (4): When the engine is in an abnormal state such as the engine revolution being not less than a specified limit or over-revolution, the engine temperature being not less than a specified value or overheat, etc., the operating state is determined as an abnormal operating state, and a value 4 is stored as the variable C.

Operating state (5): When the engine temperature is not higher than a specified value and the starter switch is on, the operating state is determined as a cold start state, and a value 5 is stored as the variable C.

When the main switch or kill switch is off, the operating state is determined as an engine stop request state, and a value 6 is stored as the variable C.

Operating condition (7): When the clutch is in the neutral position, or engine speed is below a given value, or the idle SW (throttle perfectly closed SW) is on, it is decided that the engine is in an idle mode, and store 7 in the variable C.

Operating condition (8): When the switch is on in an EGR control (part of exhaust gas is re-circulated to the intake air system), it is decided that the engine is in an EGR control mode, and store 8 in the variable C.

Operating condition (9): When the engine temperature is above a given value and the starter switch is on, it is usually decided that the engine is in an engine start condition, and store 9 in the variable C.

Operating condition A (1): If an abnormal pressure rise or an abnormal pressure transition in the combustion chamber prior to spark ignition is detected from the pressure data of the combustion chamber, it is decided that the engine is in an engine start condition, and store 10 in the variable C.

Furthermore, the number of repetition of the step S14 is checked with the same value of variable C and with the flag P=1 unchanged. When the number exceeds a specified value R, it is set to P=0.

When changes are made with:
Rc = 1 when C = 1,
Rc = 2 when C = 2, and
Rc = 3 when C = 3,
the result is
R/c=1 < R/c=2 < R/c=3

When the C value in the previous routine is different from that of the present time, it is set to P = 0.

Step S15: A decision is made on whether to perform a mode operation or not; if the variable C is one of 4, 6, and 9, then transfer to Step S20; otherwise, transfer to Step S16.

Step S16: Based on the value of the flag P, when P = 0, a target combustion ratio corresponding to the engine revolution and load is determined from the map data in the memory (corresponding to those in FIG. 6) and the result is stored in the memory D. A basic fuel injection start timing and a basic fuel injection amount are also determined from map data in the memory which are respectively similar to those in FIG. 5 (pictorial representation of values given as a function of the engine revolution and load) and they are stored in the memories E'(1), E'(2), and E'(3) respectively.

Even if P = 0, if the variable C is 5, find out a target burning rate according to the target burning rate map for cold start, and store the value in the memory D; if P = 1, transfer to Step S17 without any action.

The combustion rate is defined as the rate of combustion of the fuel burned in one combustion cycle up to a certain crank angle. With regard to computing this combustion rate, one method is to use the combustion chamber pressure data that was taken at a plurality of points during one combustion cycle and use a first-order approximation equation; the other method would be to determine the combustion rate up to the desired crank angle (for example, top dead center) computing heat production using samplings of the combustion pressure and a thermodynamic equation. Both methods yield computed results that very closely approximate the real values. In this case, the combustion pressure data would be detected at a crank angle in the first period between the end of the exhaust stroke and the beginning of the compression stroke, at a crank angle at top dead center or a crank angle near top dead center, and at crank angles after top dead center and before the beginning of the exhaust stroke.

That is in the four-cycle engine, as shown in figure 6, the pressure in the combustion chamber decreases to approach the atmospheric pressure as exhaust gas in the combustion chamber is discharged during the exhaust stroke as the piston moves from the bottom dead center after expansion to the top dead center. During the intake stroke after the piston passes the top dead center, the pressure is maintained almost at the atmospheric, and gradually increases at the compression stroke after the piston passes the bottom dead center, and starting after the exhaust valve 17 is closed at the end of the exhaust stroke.

A pressure in the combustion chamber at a time point within the period of time when the pressure is low and near the atmospheric is detected. In figure 6, BDC is chosen as the crank angle a0, however, if it is the beginning of the compression stroke, any angle after BDC can be chosen. Also, a crank angle before BDC can be chosen as the crank angle a0.

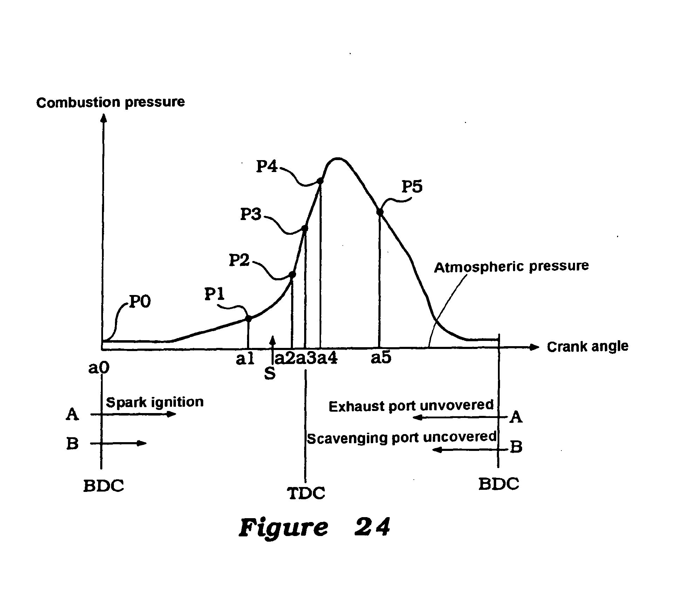

In the two-cycle engine on the other hand, as shown in figure 24, the pressure decreases as the piston moves downward after combustion. When the exhaust port is uncovered, the pressure decreases further. When the scavenging port is uncovered, the pressure approaches the atmospheric as the fresh charge is introduced. As the piston moves upward, with the exhaust port open, from the bottom dead center to cover the scavenging port and then to cover the exhaust port, the pressure increases gradually. Thus, the phrase "period of time from the exhaust stroke end to the early stage of the compression stroke" refers to the period of time from the intake start to the compression start when the scavenging port is uncovered under the condition of the exhaust port uncovered after the start of the exhaust stroke. In figure 24 BDC is chosen as the crank angle a0.

Spark ignition occurs before or after the top dead center after compression (Spark ignition begins at the crank angle indicated with an arrow and a letter S in FIGs. 6 and 24. Combustion starts with a little delay from the start of the sparking. The term ignition start used in the claims refers to the instant of the start of combustion mentioned above. In other words, pressure in the combustion chamber is detected at a crank angle within the second period between the compression stroke start and the ignition-combustion start (at the angle a1 in both FIGs. 6 and 12). After that, pressure in the combustion chamber is detected at two crank angles (in FIGs. 6 and 24 for instance, at crank angles a2 and a3, or a2 and a4, or a3 and a4, or a2 and a5, or a3 and a5, or a4 and a5) within the third period between the ignition start (ignition combustion start) and the exhaust stroke start within the combustion stroke. One of the two crank angles within that period is preferably before the crank angle at which the combustion pressure reaches the maximum. Furthermore, when the pressures in the combustion chamber are detected at least at four crank angle points as referred to in claims, for instance at five or more crank angle points, the number of the pressure measurement crank angle points in the first or second period may be increased. Also preferably as shown in FIGs. 6 and 24 the pressure may be detected at three or more crank angles within the third period. In Diesel engines, after a compression stroke, fuel injection into the combustion chamber is started before or after the top dead center and, with a little delay, combustion begins by natural ignition. In other words, the term ignition start used in claims refers to the instant of the start of the natural ignition. By the way, the time lag between the fuel injection start and the natural ignition is determined in advance from the engine revolution or load. The determined time lag is taken into consideration, a pressure measurement crank angle within the second period and a pressure measurement crank angle within the third period are stored as the data based on the engine revolution and/or load in the memory, and the pressure in the combustion chamber is measured.

Thus, the combustion chamber pressures are detected at least four crank angles; at one point within the first period, at one point within the second period, and two points within the third period. From those data, the combustion ratio is calculated with a linear approximation formula.

These approximation equations are expressed as follows:$\text{Combustion rate:} \text{qx = b + b1*(p1 - p0) + b2*(p2 - p0) + ... bn*(pn - p0)}$$\text{Indicated mean effective pressure:} \text{pmi = c + c1*(p1 - p0) + c2*(p2 - p0) + ... cn*(pn - p0)}$

As is apparent from the above equations, qx is the sum of the products of predetermined constants b1 through bn multiplied by the pressure data p1 through pn from which the standard pressure p0 has been subtracted.

Similarly, pmi is the sum of the products of predetermined constants c1 through cn multiplied by the pressure data p1 through pn from which the standard pressure p0 has been subtracted.

Here, p0 is the pressure in the combustion chamber when it reaches the atmospheric pressure level (for example, near the BDC as described above), and it is subtracted from the various pressures p1 through pn in order to correct the pressure for sensor drift. P1 is the pressure in the combustion chamber at the crank angle a1 in the first period.

P2 is a combustion chamber pressure at the crank angle a2 in the second period. P3-Pn are those at the crank angles a3-an (in this embodiment, n=5).

Thus, a simple first-order approximation equation can be used to compute, at a specific crank angle after ignition, an accurate value for the combustion rate with is almost the same as the actual value. Accordingly, by using this combustion rate as the basis for the control of the engine's ignition timing or air/fuel ratio, it is possible not only to get better energy efficiency from combustion, but to improve response, and to prevent output fluctuations by accurately following the operating state of the engine when performing EGR control under lean burn engine operations. It is further possible to prevent the generation of Noₓ emissions caused by the rapid advance of combustion.

With regard to the second computation method for the combustion rate, qx is computed using the heat generated between two pressure measurement points (crank angles) the pressure difference ΔP between the two pressure measurement points, the volume difference ΔV in the volume of the combustion chamber, where P and V are the first of the two pressure values and combustion chamber volume values that were measured, A is the heat equivalent, K is the specific heat ratio, R is the average gas constant, and P0 is the pressure at BDC:$\text{Heat generation:} \text{Qx =} \frac{\text{A}}{\text{(K+1)}} \text{x (} \frac{\text{(K-1)}}{\text{2}} \text{x ΔP x ΔV + K x (P-P0))}$

The specific pressure measurement point up to where the combustion rate is measured should be selected as the crank angle where combustion is nearly complete. Similarly, a crank angle near the point of ignition would also be selected as a pressure measurement point. The calculation of the foregoing amount of heat generation Qx is performed by summing the values determined for each of the pressure measurement points, and with regard to the interval between the initial pressure measurement point to the specified pressure measurement point (the specific crank angle). Then the combustion rate is determined by summing for the foregoing Qx and then dividing; to wit:$\text{Combustion rate:} \text{qx = the amount of combustion heat up to the desired crank} \text{angle / all of the heat X} \text{100%} \text{= (Q1 + Q2 + ... + Qx) / (Q1 + Q2 + ... + Qn) x 100}$

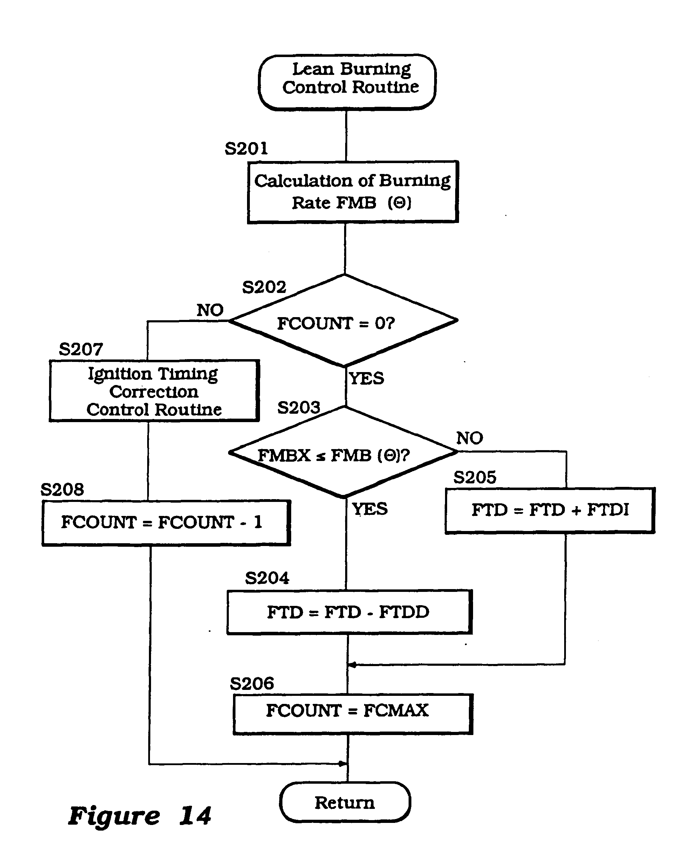

The above computation can be used to measure the combustion chamber pressure at a plurality of specific crank angles (at the step S112 of Fig. 3), and based upon that data, the combustion rate up to the desired crank angle can be accurately computed (at the step S103 of Fig. 14). Then, by using this combustion rate for engine control, it is possible to obtain stable output and engine RPM.

Step S17: Using the intake air temperature information and intake pipe negative pressure information, compensation calculation of the fuel injection amount is carried out. That is to say, when the intake air temperature increases, the air density decreases and the substantial air flow rate decreases. This results in the decrease in the air to fuel ratio. Therefore, compensation amount for reducing fuel injection amount has to be calculated.

Step S18: Basic fuel injection is started according to the engine load and engine revolution. The basic fuel injection amount and the basic ignition timing are determined in the step S16 and stored in the memory E'(i). Based on these data, the fuel injection compensation amount and the ignition timing compensation amount are determined according to the compensation amount determined in the step S17 and information stored in the memory A(i), and added to the basic values to determine the control amounts. As the control amounts, the ignition start timing is the value in the memory E(1), and the ignition period is the value in the memory E(2). When E=1, the injection start timing and the injection end timing are stored in F(3) and F(4) respectively. When E = 0, the injection start timing and the injection end timing are stored in E(3) and E(4) respectively.

This is input to the memory E(i). In a similar manner, control amounts for the servomotor group and the solenoid valve group are calculated according to the information stored in the memory A(i) and stored in the memory G(i).

Step S19:-Actuators such a servomotor group and solenoid valve are driven and controlled according to the control amounts in the memory G(i).

Step S20: Whether an engine stop request is present is determined. If present, the process goes to the step S21. If not, the process goes to the step S22.

Step S21: Values of the memory E(i), where i = 1 - 4, are set to zero as stop data.

Step S22: An engine start is checked. If yes, the step goes to the step S23. If not, it goes to the step S25.

Step S23: Data stored in advance in the memory for the start are set to the memory F(i).

Step S24: Starter motor is actuated.

Step S25: This is the case in which the variable C is 4, and the data corresponding to the abnormal phenomena are set, for example, miss fire data if over-revolution happens, or data used for increasing fuel injection while choking throttle opening if overheat occurs.

Next, the interrupt routine (1) shown in FIG. 3 will be described. This interrupt routine (1) is executed by interrupting the main routine when a specified crank angle signal is input.

Step S111: A timer is set to perform interruption routine (1) at every specified crank angle, namely to perform the interruption at the next crank angle.

Step S112: The data at a crank angle at which an interruption occurred is taken into the memory.

Step 113: When the data at every crank angle at which an interruption occurred is taken into the memory, the process goes to the step S114.

Step S114-S115: See if C = 10 or not. If so, it is decided that the engine is in a state of abnormal burning, perform an abnormal burning prevention routine at Step S115 and return.

Step S116: See if C = 2 or not and decide whether the engine is in a state of transient; if so, perform a transient control routine at Step S116a to correct ignition timing and A/F, and return otherwise, transfer to Step S117.

Step S117: See if C = 5 or not and decide whether the engine is in a state of cold start; if so, perform a cold start control routine at Step S117a to correct ignition timing and return; otherwise, transfer to Step S118.

Step S118: See if C = 8 or not and decide whether the engine is in a state of an EGR control mode; if so, perform an EGR control routine at Step S118 to correct the EGR rate and ignition timing, and return; otherwise, transfer to Step S119.

Step S119: See if C = 3 or not and decide whether the engine is in a state of a lean burning mode; if so, perform a lean burning control routine at Step S119a to correct the A/F and ignition timing, and return; otherwise, transfer to Step S120.

Step S120: See if C = 7 or not and decide whether the engine is in a state of an idling mode; if so, perform an idling control routine at Step S120a to correct the A/F and ignition timing, and return; otherwise, perform a MBT control routine at Step S121 to correct ignition timing and return.

Now, an interrupt routine (2) of Fig. 4 will be described. This interrupt routine (2) is performed by interruption when a reference crank signal is input.

Step S121: This interrupt routine (2) is executed once at a specified crank angle of the engine revolution, and therefore measures a period.

Step S122: Engine revolution is calculated.

Step S123: The ignition start timing, ignition end timing, injection start timing, and injection end timing are set to the timer according to the control data of the memory F(i), where i = 1 - 4. The timer actuates the ignition device and the injection device at the present timings.

Next, calculation of the target combustion ratio mentioned in reference to FIGs. 2 and 3 will be described in detail.

Fig. 5 is a diagram showing a map used for finding target burning rates according to engine speed and load. The target burning rate at a given crank angle, for example ATDC 50°, is determined from the map of the target burning rates at the time of lean burning and stored in a memory of the control unit 12. The diagram shows that the map has a three dimensional structure in which target burning rates are determined according to the engine load (Lx) and engine speed (Rx). The target burning rate in a given operating condition (Lx, Rx) is found as FMB? (Lx, Rx).

FIG. 6 is a graph of combustion chamber pressure over one combustion cycle of a four-cycle engine. The lateral axis shows the crank angle and the vertical axis shows the combustion pressure. Combustion pressures P0-P5 are detected at the six crank angles a0-a5 shown in the figure, and combustion ratios are calculated from those pressure values. The crank angle a0 is at the bottom dead center (BDC) where the stroke changes from intake to compression, and the pressure is about atmospheric. The angle a1 is after the compression start and before the spark ignition, a2 is the crank angle after the spark ignition at the angle S and before reaching the TDC. The angles a3-a5 are crank angles are after the TDC in the combustion stroke. The combustion ratios are calculated from the pressure data at those crank angles. By the way, in Diesel engines where spark ignition is not made, fuel is injected in the vicinity of the TDC, in a zone F1. Natural ignition occurs with a delay angle (d) after the fuel injection. The natural ignition occurs at the crank angle (S). Fuel injection timing is controlled according to the difference between the measured and target values of the combustion ratio or the crank angle. The injection start timing is controlled to be advanced or delayed, and the injection end timing is controlled so that a specified injection amount is secured.

Next, the lean burning control shown in Fig. 3 will be described in detail. Fig. 14 is a flowchart of a lean burning control routine whose target value is a burning rate at a given crank angle.

Step S201: Calculate a burning rate FMB(θ) and transfer to Step S202.

Step S202: If the counter FCOUNT = 0 (predetermined number of ignition timing controls has been performed), transfer to Step S203 to control fuel supply; otherwise, transfer to Step S207 to correct ignition timing.

Step S203: If the burning rate FMB(θ) is above a reference value FMBX, transfer to Step S204; otherwise, transfer to Step S205.

Step S204: Control the fuel supply correction factor FTD toward the predetermined value increment side by the fuel supply corrector FTDD on the increment side and transfer to Step S206.

Step S205: Control the fuel supply correction factor FTD toward the predetermined value increment side by the fuel supply corrector FTDI on the increment side and transfer to Step S206.

Step S206: Set the frequency of expected ignition controls FCMAX to the counter FCOUNT (so as to be followed by ignition controls) and return.

Step S207: Perform an ignition timing correction control routine to optimize ignition timing, and transfer to Step S208.

Step S208: Subtract 1 from the counter FCOUNT and return.

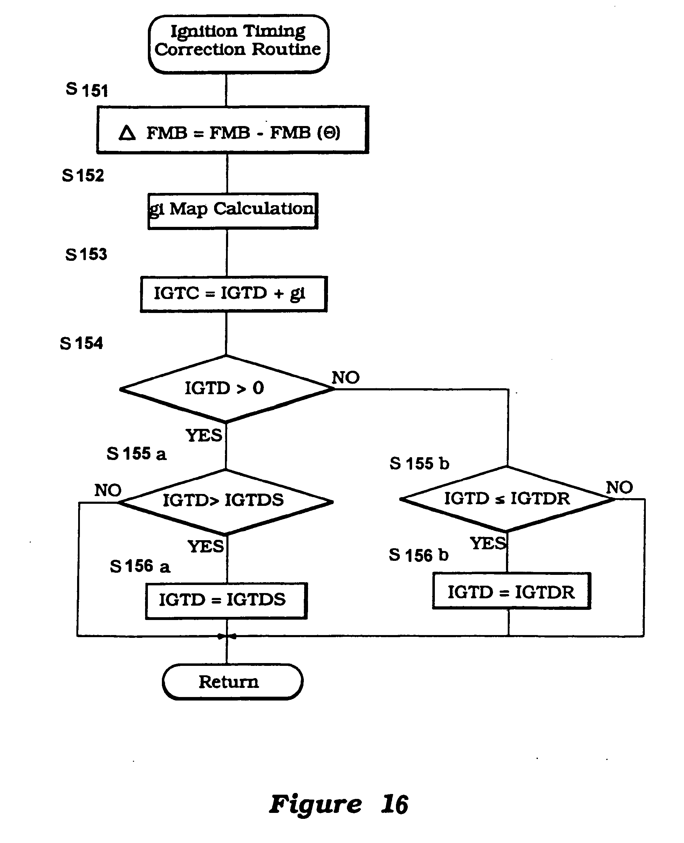

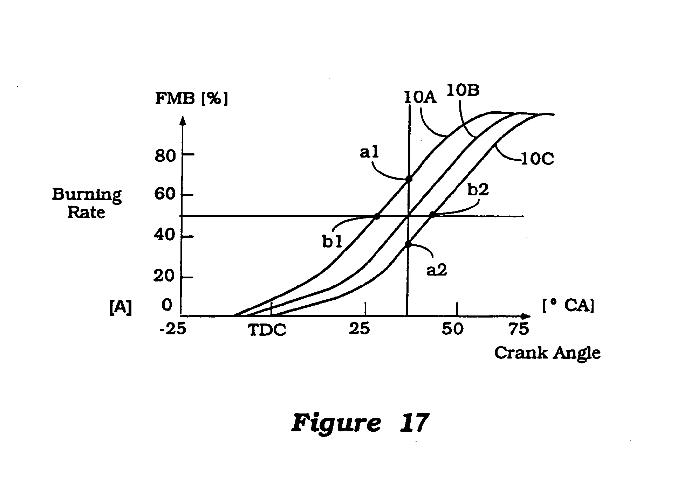

Fig. 16 is a flowchart of an ignition timing correction control routine whose target value is a burning rate at a given crank angle. The functions of this ignition timing correction routine is shown in Fig. 17. This routine is performed at Step S207 in Fig. 14.

Step S151: Find out the difference ΔFMB between the target burning rate FMB and the actual value FMB(θ), and transfer to Step S152.

Step S152: According to the difference ΔFMB, read a correction variable gi from the map, and transfer to Step S153.

Step S153: Add the correction variable gi to the previous ignition timing correction value IGTD to make a new ignition timing correction value IGTD, and transfer to Step S154.

Step S154: If the ignition timing correction value IGTD is positive, transfer to Step S155a; if it is 0 or negative, transfer to Step S155b.

Step S155a - Step S156a: If the ignition timing correction value IGTD does not fall in the limit IGTDS on the advanced angle side, perform Step S156a to place a limitation and return; if within the limit IGTDS, return without action.

Step S155b - Step S156b: If the ignition timing correction value IGTD does not fall in the limit IGTDR on the delayed angle side, perform Step S156b to place a limitation and return; if within the limit IGTDR, return without action.

In the lean burning control described above, the dispersion of burning conditions and HC emissions are decreased while extreme lean burning can be effected. A target value map for the lean burning control is provided for the control target.

To determine the tolerance limit to the HC emission increase or instability in engine output, the burning rate or the crank angle at the latter part of combustion, for example, (a) the burning rate at a crank angle of ATDC 50° or (b) the crank angle reaching a burning rate of 70%, may be set as a target value.

This target value shows the tolerance limit to the deterioration of burning conditions. When the burning rate is smaller than the target value in (a), or when the burning rate is larger than the target value in (b), the burning rate indicates the deterioration of burning conditions.

The lean burning control routine is a sub-routine of the burning rate control routine executed for every engine revolution, and is performed when the control mode detected from the operation conditions by main routine is a lean burning control.

When this lean burning control routine is performed, ---??--- correction controls of ignition timing and fuel supply are performed alternately, and the corrected values are stored.

If the burning rate is above a reference value, it is decided that leaner burning is possible, and fuel supply is decreased by a given value. If not, it is decided that no leaner burning is possible any more, and fuel supply is increased by a given value. After the fuel supply control described above, the ignition timing correction control is applied to several subsequent engine cycles to optimize ignition timing so that the burning rate will agree with the target value.

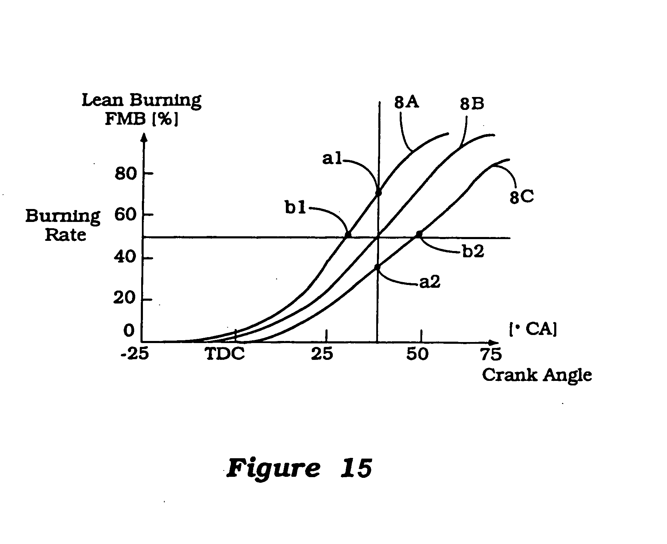

Fig. 15 is a diagram showing the burning rate being altered when fuel supply is changed. Line 8A shows a case for a richer A/F, line 8B for a proper A/F, and line 8C for a leaner A/F; if the measured burning rate at a given crank angle (for example B) is a1 which is larger than the target burning rate (for example A), then fuel supply is decreased; if it is a2 which is smaller than the target burning rate (for example A), then fuel supply is increased.

Also, if the measured crank angle reaching a given burning rate (for example A) is b2 which is larger than the target angle (for example B), then fuel supply is increased; if it is b1 which is smaller than the target angle (for example B): then fuel supply is decreased.

Thus, it is performed that a fuel supply control wherein initial values of fuel supply at least corresponding to engine load are set as data so that lean mixture is formed in a combustion chamber when fuel is supplied to the engine; wherein burning rates at a predetermined crank angle are stored in a memory as map data of target burning rates corresponding to at least either of engine load and engine speed, or alternatively crank angles reaching a predetermined burning rate are stored in a memory as map data of target crank angles corresponding to at least either of engine load and engine speed; and wherein an actual burning rate up to the predetermined crank angle is detected, and according to the comparison of values of the detected burning rate and the target burning rate, fuel supply is increased when the detected burning rate is smaller than the target burning rate or fuel supply is decreased when the detected burning rate is larger than the target burning rate; or alternatively an actual crank angle reaching the predetermined burning rate is detected, and according to the comparison of values of the detected crank angle and the target crank angle, fuel supply is increased when the target crank angle is in an advanced position or fuel supply is decreased when the detected crank angle is in an advanced position, so lean burning can be effected, exhaust emissions are reduced with improved fuel consumption.

Fig. 17 is a diagram showing the burning rate FMB being altered through the ignition timing control. Line 10A shows a case for advanced ignition timing, line 10B for proper ignition timing, and line 10C for delayed ignition timing; if the measured burning rate at a given crank angle (for example B) is a1 which is larger than the target burning rate (for example A), then the crank angle is delayed; if it is a2 which is smaller than the target burning rate (for example A), then the crank angle is advanced.

Also, if the measured crank angle reaching a given burning rate (for example A) is b2 which is larger than the target angle (for example B), then the crank angle is advanced; if it is b1 which is smaller than the target angle (for example B); then the crank angle is delayed.

Thus, it is performed that an ignition timing control wherein initial values corresponding to at least either of engine load and engine speed are set as data; wherein burning rates at a predetermined crank angle are stored in a memory as map data of target burning rates corresponding to at least either of engine load and engine speed, or alternatively crank angles reaching a predetermined burning rate are stored in a memory as map data of target crank angles corresponding to at least either of engine load and engine speed; and wherein an actual burning rate up to the predetermined crank angle is detected, and according to the comparison of values of the detected burning rate and the target burning rate, ignition timing is advanced when the detected burning rate is smaller than the target burning rate or ignition timing is delayed when the detected burning rate is larger than the target burning rate; or alternatively an actual crank angle reaching the predetermined burning rate is detected, and according to the comparison of values of the detected crank angle and the target crank angle, ignition timing is advanced when the target crank angle is in an advanced position or ignition timing is delayed when the detected crank angle is in an advanced position, so that the lean burning can be effected, exhaust emissions are reduced with improved --??--.

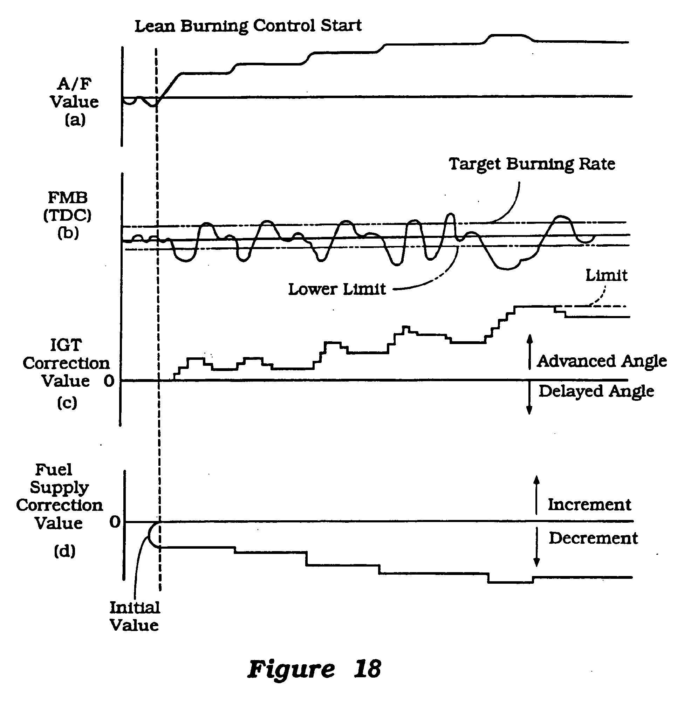

Fig. 18 is a diagram of the data changing during a lean burning control. Fig. 18(a) shows the A/F value change, Fig. 18(b) the detected burning rate FMB change caused by ignition timing and fuel supply controls, Fig. 18(c) the ignition timing correction value IGT, and Fig. 18(d) the fuel supply correction value. When the lean burning control is started, on the basis of the target burning rate FMB obtained through ignition timing control, advanced/delayed angle correction by the ignition timing correction value IGT and incremental/decremental correction by the fuel supply correction value are made so as to keep the A/F value appropriate and stable; in the fuel supply correction control, initial data of fuel supply are provided and correction is made properly according to these data.

That is, as the lean burning control, it is a good method to perform a fuel supply control wherein with target burning rates each provided with a tolerance, first target burning rates larger than the target burning rates in the map data and second target burning rates smaller than the target burning rates in the map data are set, and fuel supply is increased when said detected burning rate is smaller than the second target burning rate or fuel supply is decreased when said detected burning rate is larger than the first target burning rate or fuel supply is not be changed when said detected burning rate falls between the first and second target burning rates; or alternatively with target crank angles each provided with a tolerance, first target crank angles in advanced positions ahead of the target crank angles in the map data and second target crank angles in delayed positions behind the target crank angles of the map data are set, and fuel supply is decreased when said detected crank angle is in an advanced position ahead of the first target crank angle or fuel supply is increased when said detected crank angle is in a delayed position behind the second target crank angle or fuel supply is not changed when said detected crank angle falls between the first and second target crank angles.

Or, at least either when engine load is smaller than a given value or when engine speed is lower than a given value, either or both of following controls are performed: a control based on the comparison of the magnitude between said first, second, and detected crank angles.

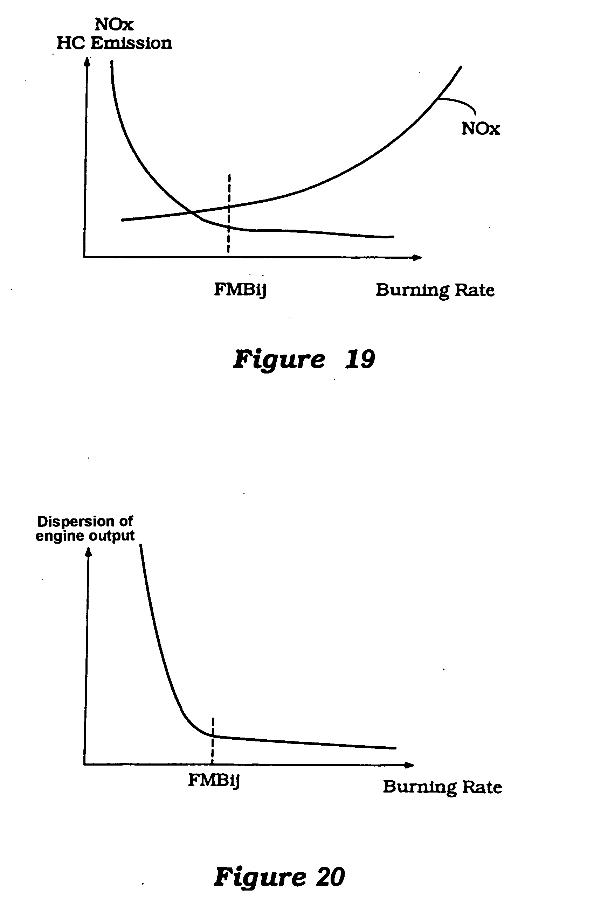

Fig. 19 is a diagram showing the correlation between the burning rate, and HC and NOₓ emissions, for a lean A/F value and a given crank angle of ATDC 50°. Fig. 20 is a diagram showing the correlation between the burning rate and the dispersion of engine output for a lean A/F value and a given crank angle of ATDC 50°. For example, the burning rate FMB₁₃ at a given crank angle of ATDC 50° is 70%, the amount of HC and Noₓ emissions is small, and also the dispersion of engine output is small.

The target crank angle is determined from the map data in Fig. 16 in which the load is plotted along the lateral axis and the target crank angle (CRA) at which the specified combustion ratio is reached is plotted along the vertical axis. For example, the target crank angle CRAo (Rx, Lx) at which the specified combustion ratio of 60%, 70%, or 80% is to be reached is determined from the actual engine rpm (Rx) and the actual engine load (Lx) on the map.

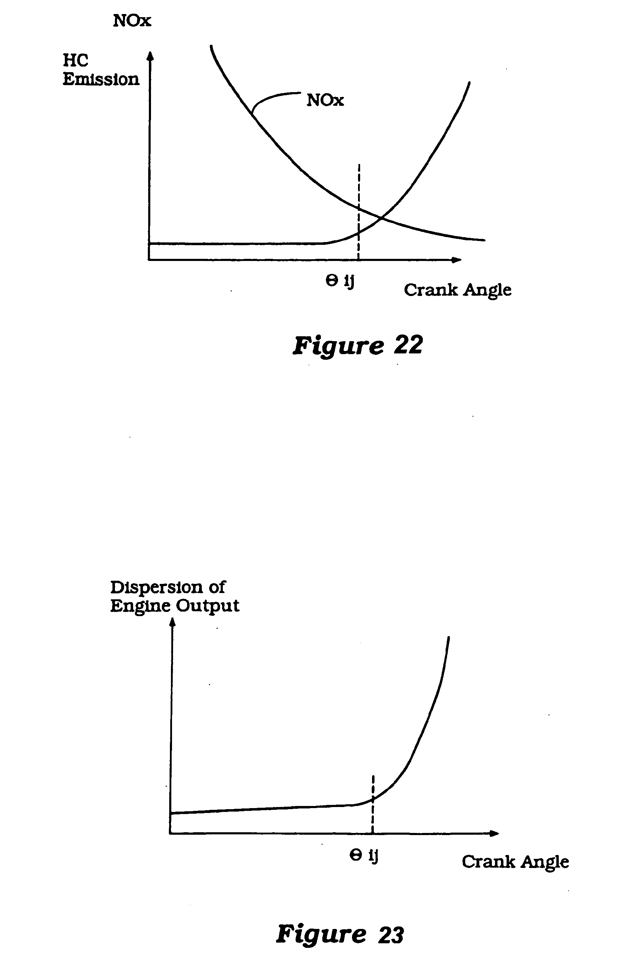

Fig. 22 is a diagram showing the correlation between the crank angle, and HC and Noₓ emissions, for a lean A/F value and a burning rate of 70%. Fig. 16 is a diagram showing the correlation between the crank angle and the dispersion of engine output for a lean A/F value and a burning rate of 70%. For example, the crank angle θ₁₃ for a given burning rate FMB₁₃ of 70% is ATDC 50°, the amount of HC and Noₓ emissions is small, and also the dispersion of engine output is small.

Fig. 24 is a diagram of combustion chamber pressure showing the burning pressure detection point used for measuring burning rates of the foregoing two stroke engines, corresponding to Fig. 6 for the foregoing four stroke engines. As described above, data of the combustion chamber pressure are sampled at six crank angles. The range A in the figure is a crank angle area where the exhaust port is open, and the range B a crank angle area where the scavenging port is open. The crank angle (a0-a5) sampling method and calculation method are substantially the same as those for four stroke engines; at Step S113 in the interrupt routine (1) of Fig. 3, burning pressures (P0-P5) are detected at six crank angles a0-a5 shown in the figure, and the burning rates are calculated based on those pressure values. The embodiment of this invention can be also applied to engines with carburetor for fuel supply.

By the way, in the foregoing lean burning control, it can also be applied that at least either when engine load is smaller than a predetermined value or when engine speed is lower than a predetermined value, said ignition timing control based on said detected burning rate or detected crank angle, and said fuel supply control are performed; and wherein when engine load or engine speed is not in said conditions, only said ignition timing control based on said burning rate is performed.

Or, it can be applied that the ignition timing control and the fuel supply control are performed alternately. In this case, with regard to the ignition timing control, a control may be performed wherein ignition timing is delayed when the detected burning rate is larger than the first target burning rate above the target burning rate in the map data, ignition timing is advanced when the detected burning rate is smaller than the second target burning rate below the target burning rate in the map data, and ignition timing is kept unchanged when the detected value falls between the first and second target burning rates; with regard to the fuel supply control, a control may be performed wherein fuel supply is decreased when the detected burning rate is equal to or smaller than the second target burning rate, and fuel supply is always increased when the detected value is larger than the second target burning rate.

When an alternate control is executed, the first predetermined number of ignition timing controls and the second predetermined number of fuel supply controls may be performed alternately.

In this control, the first predetermined number is set higher than the second predetermined number.

In the lean burning control of the foregoing embodiment, it can be applied that initial values of the fuel supply at least corresponding to engine load are set as data so that lean mixture is formed in a combustion chamber when fuel is supplied to the engine and that the air-fuel ratio of the lean mixture can be increased with a decreasing engine load.

Or, it can also be applied that the target burning rate used in the first operating condition in which said ignition timing control based on said detected burning rate or detected crank angle, and said fuel supply control are performed and in which at least either engine load is smaller than a predetermined value or engine speed is lower than a predetermined value, is kept smaller than the target burning rate used in the second operating condition in which only said ignition timing control is performed based on said detected burning rate or detected crank angle.

Furthermore, it can be applied that burning pressures are detected at least at four crank angles, one from the exhaust stroke end to the beginning of the compression stroke, one from the beginning of the compression stroke to ignition, and two angles during the time from the ignition start to the beginning of the exhaust stroke, and said detected burning rate or detected crank angle is calculated based on these burning pressure data.

As described above, with the control method for an engine of the invention, an actual burning rate up to the predetermined crank angle is detected, and according to the comparison of values of the detected burning rate and the target burning rate, fuel supply is increased when the detected burning rate is smaller than the target burning rate or fuel supply is decreased when the detected burning rate is larger than the target burning rate; or alternatively an actual crank angle reaching the predetermined burning rate is detected, and according to the comparison of values of the detected crank angle and the target crank angle, fuel supply is increased when the target crank angle is in an advanced position or fuel supply is decreased when the detected crank angle is in an advanced position, so that the fuel supply control is performed based on the burning rate up to a given crank angle, whereby exhaust emissions will be reduced while lean burning can be effected with improved fuel consumption.

According to the invention a fuel supply control is performed based on the target burning rates with tolerances in the map data or the target crank angles with tolerances in the map data, so that an easy and accurate fuel supply control is performed based on the burning rate up to a given crank angle, whereby exhaust emissions will be reduced while lean burning can be effected with improved fuel consumption. To match the burning rate with the target value (strictly speaking, near the target value), some tolerance must be provided to restrict the control; otherwise, hunching of the burning rate becomes great enough to have a bad influence on the engine output because of data reading errors, disturbances (noises), or the dispersion of burning conditions.

Since the object of the lean burning is to lean the mixture as long as the burning rate satisfies the target value, fuel supply is decreased when the burning rate falls in or exceeds the tolerance range. However, a burning rate smaller than the tolerable value means excessive leaning, thus fuel supply must be increased.

As described above, the boundary value of the burning rate (decision value) does not coincide with the target so that stable lean burning can be realized within the tolerance.

According to the invention, a fuel supply control is performed according to engine load or engine speed, whereby the engine output is stabilized.

According to the invention, it is performed that an actual burning rate up to the predetermined crank angle is detected, and according to the comparison of values of the detected burning rate and the target burning rate, ignition timing is advanced when the detected burning rate is smaller than the target burning rate or ignition timing is delayed when the detected burning rate is larger than the target burning rate; or alternatively an actual crank angle reaching the predetermined burning rate is detected, and according to the comparison of values of the detected crank angle and the target crank angle, ignition timing is advanced when the target crank angle is in an advanced position or ignition timing is delayed when the detected crank angle is in an advanced position, whereby exhaust emissions will be reduced while lean burning can be effected with improved fuel consumption.

According to the invention, an ignition timing control based on the detected burning rate or the detected crank angle, and another ignition timing control based on the burning rate are performed effectively, whereby exhaust emissions are reduced while lean burning is effected with improved fuel consumption.

Further, the control is performed at the optimum ignition timing so that lean burning can be advanced more effectively without damage to the burning stability than when the fuel supply control is simply executed.

According to the invention, an ignition timing control and a fuel supply control are performed alternately, whereby exhaust emissions will be reduced through the combination of different kinds of controls while lean burning can be effected with improved fuel consumption. Moreover, the alternate controls make it possible to verify the appropriateness of fuel supply and ignition timing.

According to the invention, the first predetermined number of ignition timing controls and the second predetermined number of fuel supply controls are performed alternately, whereby exhaust emissions will be reduced through further accurate controls while lean burning can be effected with improved fuel consumption.

According to the invention, fuel supply controls are performed with the first predetermined number being set higher than the second predetermined number so that substantially appropriate fuel supply can be achieved, whereby exhaust emissions will be reduced while lean burning can be effected with improved fuel consumption.

Moreover, according to the invention the time constant can be absorbed to such an extent as to be reflected in the burning condition especially when the amount of fuel supply is changed, thereby preventing overcorrection and effecting burning stability.

According to the invention, initial values of fuel supply are set as data, and an accurate and easy control is ensured, whereby exhaust emissions are reduced while lean burning is effected with improved fuel consumption.

According to the invention, the target burning rate used in the first operating condition is kept smaller than the target burning rate used in the second operating condition in which only an ignition timing control is performed, effecting an appropriate fuel supply control, whereby exhaust emissions are reduced while lean burning is effected with improved fuel consumption.

According to the invention, burning pressures are detected and the detected burning rate or detected crank angle is calculated according to these burning pressure data.

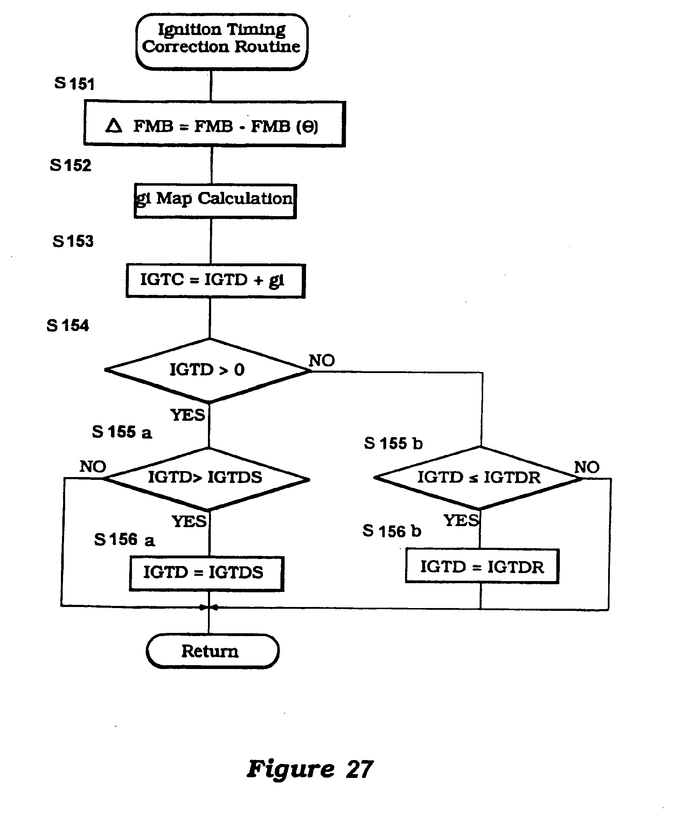

Another embodiment will be explained with respect to figures 2-6 and 25-30.

FIG. 2 is a flow chart of a main routine for controlling various operating state of the engine.

Step S11: Initialization is carried out. Initial values are set to flag values and variables.

Step S12: Various kinds of information are taken in; intake air temperature information from an intake air temperature sensor 30, intake air amount information from an intake air amount sensor 40 of heat wire type, throttle opening information from a throttle opening sensor 31, intake pipe pressure information from an intake pipe pressure sensor 32, catalyst temperature information from a catalyst temperature sensor 150, crank angle information from a crank angle sensor 11, temperature information from a temperature sensor 26, exhaust temperature information from an exhaust temperature sensor 120, oxygen concentration information from an oxygen concentration sensor 25, and remaining oil amount information from an oil sensor (not shown). Those data taken in are stored in a memory A. Engine load may be known as the accelerator position or throttle opening. Once the throttle opening and the engine revolution are determined, amount of intake air in normal operating state may be determined, and therefore amount of intake air detected directly may be regarded as the engine load. Alternatively, since intake pipe negative pressure has a certain relationship with the throttle opening once the engine revolution is determined, the intake pipe negative pressure detected may be regarded as the engine load.

Step S13: On or off state information is taken in and stored in a memory B(1) for various switches: a kill switch 43, a main switch (not shown), a starter motor switch (not shown), etc. The kill switch 43 is an emergency switch which is not employed in engines for land vehicles but in small marine engines for instance.

Step S14: Operating state is determined from the sensor information taken in the step S12 and the switch information taken in the step S13. Values corresponding to the operating states (1) through (6) are input to variables C in the memory.

Operating state (1): In a constant throttle or moderate throttle operation state with medium to high revolution, with medium to high load, without rapid acceleration or deceleration, with the throttle opening not less than a specified value, with the engine revolution not less than a specified value, and with the throttle opening changing rate not more than a specified value, the operating state is determined as an MBT (Minimum Advance Ignition for Best Torque) control state, and a value 1 is stored as the variable C.

Operating state (2): When the throttle opening changing rate is not less than a specified value, the operating state is determined as transient, and a value 2 is stored as the variable C.

Operating state (3): When the throttle opening is not more than a specified value and the engine revolution is within a specified range, for instance 2000 rpm - 5000 rpm, the operating state is determined as a lean combustion control state, and a value 3 is stored as the variable C.

Operating state (4): When the engine is in an abnormal state such as the engine revolution being not less than a specified limit or over-revolution, the engine temperature being not less than a specified value or overheat, etc., the operating state is determined as an abnormal operating state, and a value 4 is stored as the variable C.

Operating state (5): When the engine temperature is not higher than a specified value and the starter switch is on, the operating state is determined as a cold start state, and a value 5 is stored as the variable C.

When the main switch or kill switch is off, the operating state is determined as an engine stop request state, and a value 6 is stored as the variable C.

Operating condition (7): When the clutch is in the neutral position, or engine speed is below a given value, or the idle SW (throttle perfectly closed SW) is on, it is decided that the engine is in an idle mode, and store 7 in the variable C.

Operating condition (8): When the switch is on in an EGR control (part of exhaust gas is re-circulated to the intake air system), it is decided that the engine is in an EGR control mode, and store 8 in the variable C.

Operating condition (9): When the engine temperature is above a given value and the starter switch is on, it is usually decided that the engine is in an engine start condition, and store 9 in the variable C.

Operating condition A(1): If an abnormal pressure rise or an abnormal pressure transition in the combustion chamber prior to spark ignition is detected from the pressure data of the combustion chamber, it is decided that the engine is in an engine start condition, and store 10 in the variable C.

Furthermore, the number of repetition of the step S14 is checked with the same value of variable C and with the flag P=1 unchanged. When the number exceeds a specified value R, it is set to P=0.

When changes are made with:
Rc = 1 when C = 1,
Rc = 2 when C = 2, and
Rc = 3 when C = 3,
the result is
R/c=1 < R/c=2 < R/c=3

When the C value in the previous routine is different from that of the present time, it is set to P = 0.

Step S15: A decision is made on whether to perform a mode operation or not: if the variable C is one of 4, 6, and 9, then transfer to Step S20; otherwise, transfer to Step S16.

Step S16: Based on the value of the flag P, when P=0, a target combustion ratio corresponding to the engine revolution and load is determined from the map data in the memory (corresponding to those in FIG. 5) and the result is stored in the memory (D). A basic fuel injection start timing and a basic fuel injection amount are also determined from map data in the memory which are respectively similar to those in FIG. 5 (pictorial representation of values given as a function of the engine revolution and load) and they are stored in the memories E'(1), E'(2), and E'(3) respectively.

Even if P=0, if the variable C is 5, find out a target burning rate according to the target burning rate map for cold start, and store the value in the memory D; if P=1, transfer to Step S17 without any action.

The combustion rate is defined as the rate of combustion of the fuel burned in one combustion cycle up to a certain crank angle. With regard to computing this combustion rate, one method is to use the combustion chamber pressure data that was taken at a plurality of points during one combustion cycle and use a first-order approximation equation; the other method would be to determine the combustion rate up to the desired crank angle (for example, top dead center) computing heat production using samplings of the combustion pressure and a thermodynamic equation. Both methods yield computed results that very closely approximate the real values. In this case, the combustion pressure data would be detected at a crank angle in the first period between the end of the exhaust stroke and the beginning of the compression stroke, at a crank angle at top dead center or a crank angle near top dead center, and at crank angles after top dead center and before the beginning of the exhaust stroke.

That is in the four-cycle engine, as shown in figure 6, the pressure in the combustion chamber decreases to approach the atmospheric pressure as exhaust gas in the combustion chamber is discharged during the exhaust stroke as the piston moves from the bottom dead center after expansion to the top dead center. During the intake stroke after the piston passes the top dead center, the pressure is maintained almost at the atmospheric, and gradually increases at the compression stroke after the piston passes the bottom dead center, and starting after the exhaust valve 17 is closed at the end of the exhaust stroke.

A pressure in the combustion chamber at a time point within the period of time when the pressure is low and near the atmospheric is detected. In figure 6, BDC is chosen as the crank angle a0, however, if it is the beginning of the compression stroke, any angle after BDC can be chosen. Also, a crank angle before BDC can be chosen as the crank angle a0.

In the two-cycle engine on the other hand, as shown in figure 12, the pressure decreases as the piston moves downward after combustion. When the exhaust port is uncovered, the pressure decreases further. When the scavenging port is uncovered, the pressure approaches the atmospheric as the fresh charge is introduced. As the piston moves upward, with the exhaust port open, from the bottom dead center to cover the scavenging port and then to cover the exhaust port, the pressure increases gradually. Thus, the phrase "period of time from the exhaust stroke end to the early stage of the compression stroke" refers to the period of time from the intake start to the compression start when the scavenging port is uncovered under the condition of the exhaust port uncovered after the start of the exhaust stroke. In figure 12 BDC is chosen as the crank angle a0.

Spark ignition occurs before or after the top dead center after compression. (Spark ignition begins at the crank angle indicated with an arrow and a letter S in FIGs. 6 and 15.) Combustion starts with a little delay from the start of the sparking. The term ignition start used in the claims refers to the instant of the start of combustion mentioned above. In other words, pressure in the combustion chamber is detected at a crank angle within the second period between the compression stroke start and the ignition-combustion start (at the angle a1 in both FIGs. 6 and 12). After that, pressure in the combustion chamber is detected at two crank angles (in FIGs. 6 and 12 for instance, at crank angles a2 and a3, or a2 and a4, or a3 and a4, or a2 and a5, or a3 and a5, or a4 and a5) within the third period between the ignition start (ignition combustion start) and the exhaust stroke start within the combustion stroke. One of the two crank angles within that period is preferably before the crank angle at which the combustion pressure reaches the maximum. Furthermore, when the pressures in the combustion chamber are detected at least at four crank angle points as referred to in claims, for instance at five or more crank angle points, the number of the pressure measurement crank angle points in the first or second period may be increased. Also preferably as shown in FIGs 6 and 12, the pressure may be detected at three or more crank angles within the third period. In Diesel engines, after a compression stroke, fuel injection into the combustion chamber is started before or after the top dead center and, with a little delay, combustion begins by natural ignition. In other words, the term ignition start used in claims refers to the instant of the start of the natural ignition. By the way, the time lag between the fuel injection start and the natural ignition is determined in advance from the engine revolution or load. The determined time lag is taken into consideration, a pressure measurement crank angle within the second period and a pressure measurement crank angle within the third period are stored as the data based on the engine revolution and/or load in the memory, and the pressure in the combustion chamber is measured.

Thus, the combustion chamber pressures are detected at least four crank angles; at one point within the first period, at one point within the second period, and two points within the third period. From those data, the combustion ratio is calculated with a linear approximation formula.

These approximation equations are expressed as follows:$\text{Combustion rate:} {\text{qx = b + b1}}^{\text{x}} {\text{(p1-p0) + b2}}^{\text{x}} {\text{(p2-p0) + ...bn}}^{\text{x}} \text{(pn-p0)}$$\text{Indicated mean effective pressure:} {\text{pmi = c + c1}}^{\text{x}} {\text{(p1-p0) + c2}}^{\text{x}} {\text{(p2-p0) + ...cn}}^{\text{x}} \text{(pn-po)}$

As is apparent from the above equations, qx is the sum of the products of predetermined constants b1 through bn multiplied by the pressure data p1 through pn from which the standard pressure p0 has been subtracted.

Similarly, pmi is the sum of the products of predetermined constants c1 through cn multiplied by the pressure data p1 through pn from which the standard pressure p0 has been subtracted.

Here, p0 is the pressure in the combustion chamber when it reaches the atmospheric pressure level (for example, near the BDC as described above), and it is subtracted from the various pressures p1 through pn in order to correct the pressure for sensor drift. P1 is the pressure in the combustion chamber at the crank angle a1 in the first period.

P2 is a combustion chamber pressure at the crank angle a2 in the second period. P3-Pn are those at the crank angles a3-an (in this embodiment, n = 5).

Thus, a simple first-order approximation equation can be used to compute, at a specific crank angle after ignition, an accurate value for the combustion rate with is almost the same as the actual value. Accordingly, by using this combustion rate as the basis for the control of the engine's ignition timing or air/fuel ratio, it is possible not only to get better energy efficiency from combustion, but to improve response, and to prevent output fluctuations by accurately following the operating state of the engine when performing EGR control under lean burn engine operations. It is further possible to prevent the generation of NOₓ emissions caused by the rapid advance of combustion.

With regard to the second computation method for the combustion rate, qx is computed using the heat generated between two pressure measurement points (crank angles) the pressure difference ΔP between the two pressure measurement points, the volume difference ΔV in the volume of the combustion chamber, where P and V are the first of the two pressure values and combustion chamber volume values that were measured, A is the heat equivalent, K is the specific heat ratio, R is the average gas constant, and P0 is the pressure BDC:$\text{Heat generation:} \text{Qx =} \frac{\text{A}}{\text{(K-1)}} \text{x (} \frac{\text{(K+1)}}{\text{2}} \text{x Δp x ΔV + K x (P-P0))}$

The specific pressure measurement point up to where the combustion rate is measured should be selected as the crank angle where combustion is nearly complete. Similarly, a crank angle near the point of ignition would also be selected as a pressure measurement point. The calculation of the foregoing amount of heat generation Qx is performed by summing the values determined for each of the pressure measurement points, and with regard to the interval between the initial pressure measurement point to the specified pressure measurement point (the specific crank angle). Then the combustion rate is determined by summing for the foregoing Qx and then dividing; to wit:$\text{Combustion rate:} \text{qx = the amount of combustion heat up to the desired crank} \text{angle / all of the heat X} \text{100%} \text{= (Q1 + Q2 + ... + Qx) / (Q1 + Q2 + ... + Qn) x 100}$

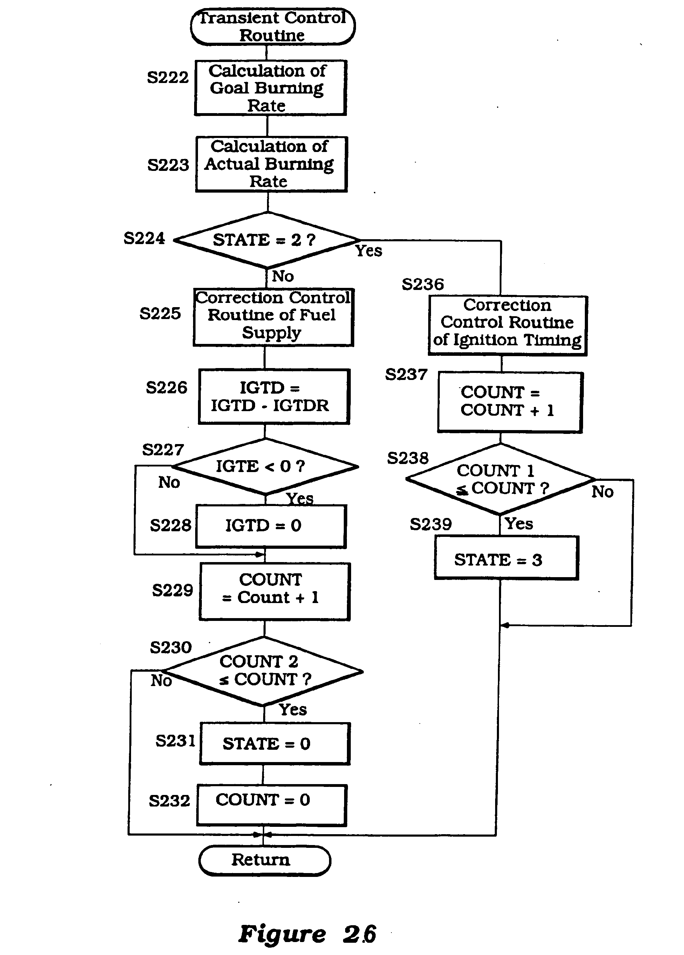

The above computation can be used to measure the combustion chamber pressure at a plurality of specific crank angles (at the step S112 of FIG.3), and based upon that data, the combustion rate up to the desired crank angle can be accurately computed (at the step S223 of FIG.26). Then, by using this combustion rate of engine control, it is possible to obtain stable output and engine RPM.

Step S17: Using the intake air temperature information and intake pipe negative pressure information, compensation calculation of the fuel injection amount is carried out. That is to say, when the intake air temperature increases, the air density decreases and the substantial air flow rate decreases. This results in the decrease in the air to fuel ratio. Therefore, compensation amount for reducing fuel injection amount has to be calculated.

Step S18: Basic fuel injection is started according to the engine load and engine revolution. The basic fuel injection amount and the basic ignition timing are determined in the step S16 and stored in the memory E'(i). Based on these data, the fuel injection compensation amount and the ignition timing compensation amount are determined according to the compensation amount determined in the step S17 and information stored in the memory A(i), and added to the basic values to determine the control amounts. As the control amounts, the ignition start timing is the value in the memory E(1), and the ignition period is the value in the memory E(2). When E=1, the injection start timing and the injection end timing are stored in F(3) and F(4) respectively. When E=0, the injection start timing and the injection end timing are stored in E(3) and E(4) respectively.

This is input to the memory E(i). In a similar manner, control amounts for the servomotor group and the solenoid valve group are calculated according to the information stored in the memory A(i) and stored in the memory G(i).

Step S19: Actuators such a servomotor group and solenoid valve are driven and controlled according to the control amounts in the memory G(i).

Step S20: Whether an engine stop request is present is determined. If present, the process goes to step S21. If not, the process goes to the step S22.

Step S21: Values of the memory E(i), where i = 1-4, are set to zero as stop data.

Step S22: An engine start is checked. If yes, the step goes to the step S23. If not, it goes to the step S25.

Step S23: Data stored in advance in the memory for the start are set to the memory F(i).

Step S24: Starter motor is actuated.

Step S25: This is the case in which the variable C is 4, and the data corresponding to the abnormal phenomena are set, for example, miss fire data if over-revolution happens, or data used for increasing fuel injection while choking throttle opening if overheat occurs.

Next, the interrupt routine (1) shown in FIG.3 will be described. This interrupt routine (1) is executed by interrupting the main routine when a specified crank angle signal is input.

Step S111: A timer is set to perform interruption routine (1) at every specified crank angle, namely to perform the interruption at the next crank angle.

Step S112: The data at a crank angle at which an interruption occurred is taken into the memory.

Step 113: When the data at every crank angle at which an interruption occurred is taken into the memory, the process goes to the step S114.

Step S114-S115: See if C = 10 or not. If so, it is decided that the engine is in a state of abnormal burning, perform an abnormal burning prevention routine at Step S115 and return.

Step S116: See if C = 2 or not and decide whether the engine is in a state of transient; if so, perform a transient control routine at Step S116a to correct ignition timing and A/F, and return; otherwise, transfer to Step S117.

Step S117: See if C = 5 or not and decide whether the engine is in a state of cold start; if so, perform a cold start control routine at Step S117a to correct ignition timing and return; otherwise, transfer to Step S118.

Step S118: See if C = 8 or not and decide whether the engine is in a state of an EGR control mode; if so, perform an EGR control routine at Step S118 to correct the EGR rate and ignition timing, and return; otherwise, transfer to Step S119.

Step S119: See if C = 3 or not and decide whether the engine is in a state of a lean burning mode; if so, perform a lean burning control routine at Step S119a to correct the A/F and ignition timing, and return; otherwise, transfer to Step S120.

Step S120: See if C = 7 or not and decide whether the engine is in a state of an idling mode; if so, perform an idling control routine at Step S120a to correct the A/F and ignition timing, and return; otherwise, perform a MBT control routine at Step S121 to correct ignition timing and return.

Now, an interrupt routine (2) will be described. This interrupt routine (2) is performed by interruption when a reference crank signal is input.

Step S121: This interrupt routine (2) is executed once at a specified crank angle of the engine revolution, and therefore measures a period.

Step S122: Engine revolution is calculated.

Step S123: The ignition start timing, ignition end timing, injection start timing, and injection end timing are set to the timer according to the control data of the memory F(i), where i = 1-4: The timer actuates the ignition device and the injection device at the preset timings.

Next, calculation of the target combustion ratio mentioned in reference to FIGs. 2 and 3 will be described in detail.

Fig. 5 is a diagram of map to determine the goal combustion rate corresponding to the number of engine rotation and to the load. A given crank angle is calculated, for example, from a map where the combustion rate to the top dead center (TDC) is mapped as a goal combustion rated, before memorized in the storage in the controller 12.

The diagram shows that the map has a three dimensional structure in which target burning rates are determined according to the engine load (Lx) and engine speed (Rx). The target burning rate in a given operating condition (Lx, Rx) is found as FMB? (Lx, Rx).

FIG. 6 is a graph of combustion chamber pressure over one combustion cycle of a four-cycle engine. The lateral axis shows the crank angle and the vertical axis shows the combustion pressure. Combustion pressures (P0-P5) are detected at the six crank angles (a0-a5) shown in the figure, and combustion ratios are calculated from those pressure values. The crank angle (a0) is at the bottom dead center (BDC) where the stroke changes from intake to compression, and the pressure is about atmospheric. The angle (a1) is after the compression start and before the spark ignition, (a2) is the crank angle after the spark ignition at the angle (S) and before reaching the TDC. The angles (a3)-(a5) are crank angles are after the TDC in the combustion stroke. The combustion ratios are calculated from the pressure data at those crank angles. By the way, in Diesel engines where spark ignition is not made, fuel is injected in the vicinity of the TDC, in a zone FI. Natural ignition occurs with a delay angle (d) after the fuel injection. The natural ignition occurs at the crank angle (S). Fuel injection timing is controlled according to the difference between the measured and target values of the combustion ratio or the crank angle. The injection start timing is controlled to be advanced or delayed, and the injection end timing is controlled so that a specified injection amount is secured.

Now, the control of the combustion rate based on the calculation of the combustion rate described in Figs. 2 and 3 will be described.

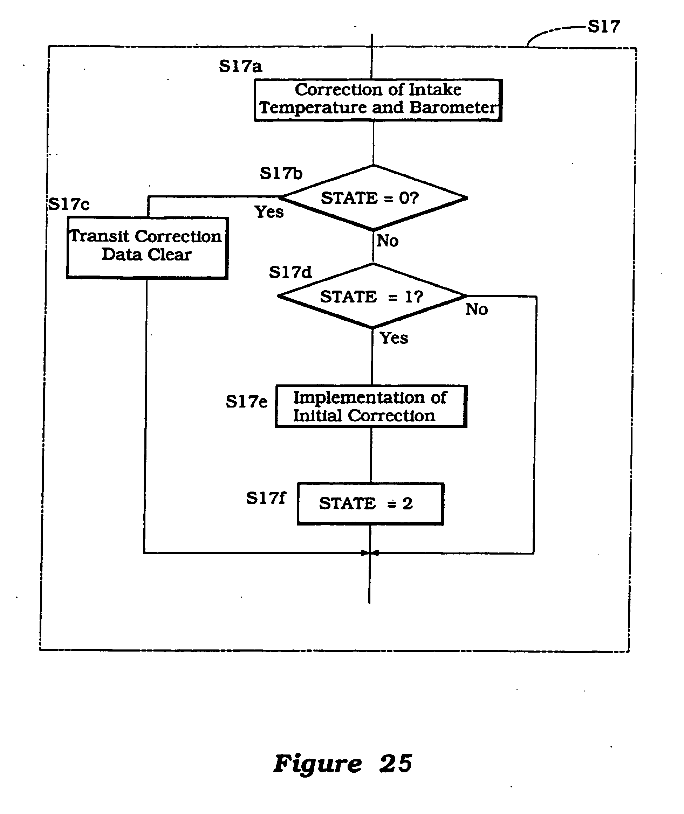

The operation in Step 17 in Fig.2 is executed as shown in the flowchart for the compensation operation in Fig. 25. In others, when the variable C is 2, Step 17 is executed; in Step 17a, the compensation operation of the amount of fuel ignition for compensation of barometer height from information of the intake air temperature and of intake pipe negative pressure is executed; in Step 17b, the variable STATE of the transient control condition is checked; when the value of the transient control condition is STATE=0 in the state condition, the transient compensation data is cleared in Step 17c. If not in the state condition, the step goes to 17d, and the initial execution state of the transient condition where the variable of the transient control condition is STATE=1 is checked; if in the initial execution condition, the step goes to Step 17e. In Step 17, the initial compensation is executed, and timing is compensated at the point of compensation for increasing the amount of fuel injection data in acceleration and deceleration; and in Step 17f, the condition is set to the initial execution condition, if the value of the transient control condition is STATE=2.

Then, the transient control routine is shown in Fig.26. The transient control routine is initialized in the main routine after transient determination, before execution in every cycle.

Step S222 is to read the goal combustion rate in the transient stage from the map to go to Step S223.

Step S223 is to calculate the actual combustion rate to go to S224.

Step S224 is to go to S236 if the variable of transient control condition is STATE=2, otherwise to go to Step S225.

Step S225 is to execute the compensation routine of the amount of fuel supply to go to Step S226.

Step S226 is to decrease the initial compensation value of ignition timing (IGTDO) with the compensation increment of delay ignition timing (IGTDR) and to decrease the compensation value of ignition timing by a given value, to go to Step S227.

Step S227 is to go to S228 if the compensation value of ignition timing (IGTD) is negative, otherwise to go to Step S229.

Step S228 is to set the compensation value of ignition timing (IGTD) to 0 to go to Step S229.

Step S229 is to add by 1 to the transient control execution counter (COUNT) to go to Step S230.

Step S230 is to go to Step S231 if the transient control execution counter (COUNT) is equal to or more than 2 of the set value (COUNT) of the number of the transient control execution, otherwise to return.

Step S231 is to go to set the variable of transient control condition to go to Step S232.

Step S232 is to clear the transient control execution counter (COUNT) to return.

Step S236 is to go to Step S236 if the variable of the transient control condition in Step S224 is STATE=2, then, in Step S236, the compensation routine of ignition timing is executed to got to Step S237.

Step S237 is to add by 1 to the transient execution counter (COUNT) to go to STEP S238.

Step S238 is to go to Step S239 if the transient control execution counter (COUNT) is equal to or more than 1 of the set value (COUNT) for switching operations, otherwise to return.

Step S239 is to the variable of the transient control execution (STATE) is to 3 to return.

Now Fig. 9 is referred to the compensation routine of ignition timing if the compensation value is calculated according to the deviation. Fig. 11 is referred to the action of the compensation routine of ignition timing.

Step S151: Find out the difference ΔFMB between the target burning rate FMB and the actual value FMB (θ), and transfer to Step S152.

Step S152: According to the difference ΔFMB, read a correction variable gi from the map, and transfer to Step S153.

Step S153: Add the correction variable gi to the previous ignition timing correction value IGTD to make a new ignition timing correction value IGTD, and transfer to Step S154.

Step S154: If the ignition timing correction value IGTD is positive, transfer to Step S155a; if it is 0 or negative, transfer to Step S155b.

Step S155a-Step S156a: If the ignition timing correction value ICTD does not fall in the limit IGTDS on the advanced angle side, perform Step S156a to place a limitation and return; if within the limit IGTDS, return without action.

Step S155b-Step S156b: If the ignition timing correction value IGTD does not fall in the limit IGTDR on the delayed angle side, perform Step S156b to place a limitation and return; if within the limit IGTDR, return without action.

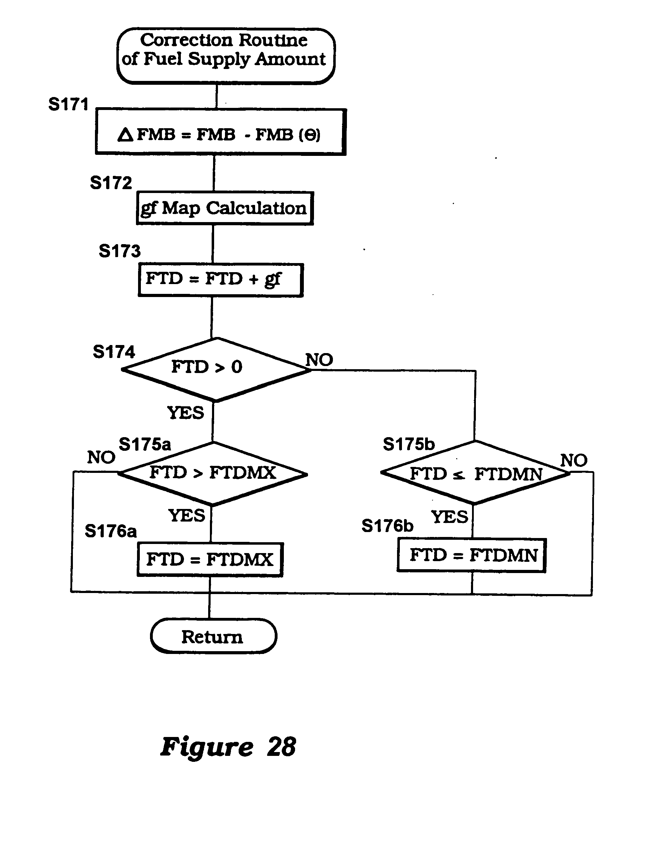

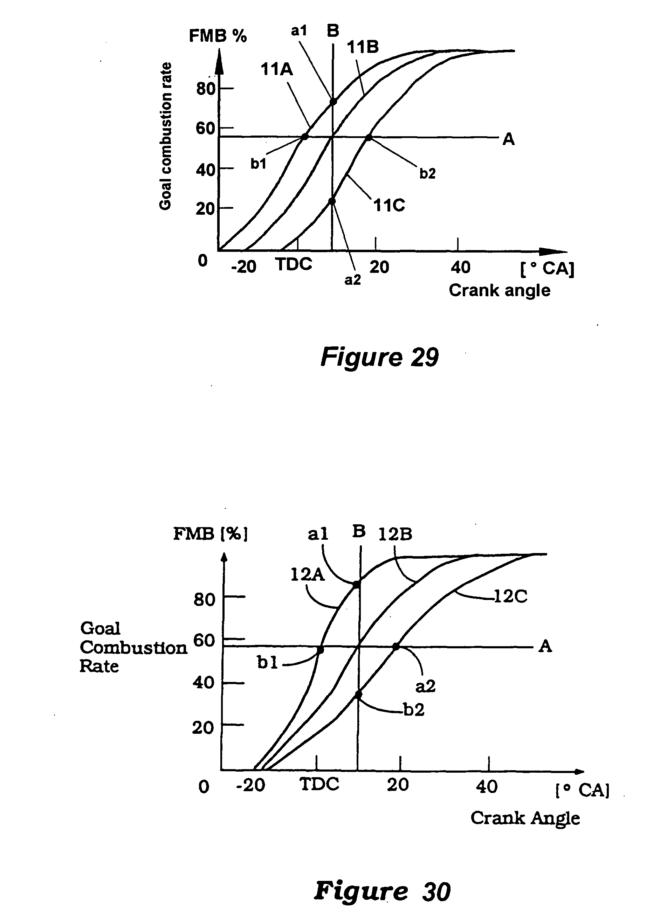

Now Fig.28 shows the compensation routine of fuel supply when the compensation value is calculated according to the deviation. Fig.30 shows the action of the compensation of fuel supply.

Step S171 is to determine the deviation Δ F between the goal combustion rate FMB and the actual value of FMB(θ), to go to Step S172.

Step S172 is to read the compensation variation (gf) from the map according to the deviation Δ FMB, to go to Step S174.

Step S173 is to add the compensation variation (gf) to the compensation value (FTD) of the previous amount of fuel supply to obtain a compensation value (FTD) of the amount of fuel supply, to go to Step S174.

Step S174 is to go to Step S175a if the compensation value FTD of fuel supply is positive, and to go to Step S175 if it is 0 or negative.

Steps S175a-176a are to execute Step S176a to return with a limit, unless the compensation value FTD of fuel supply is within the limit of the increment side FTDMX. If within the limit FTDMX, to return with no limits.

Steps S175a-176a are to execute Step S176a to return with a limit, unless the compensation value FTD of fuel supply is within the limit of the increment side FTDMN. If within the limit FTDMN, to return with no limits.

As described above, according to the first embodiment of this invention, in the detection of a transient condition, advancing and correcting ignition timing more than ignition timing based on the throttle opening and/or the number of engine rotation, obtaining the combustion condition, which NOₓ reduces, while the best torque is obtained corresponding to at least one of the load or the number of engine rotation; in this combustion condition, storaging the combustion rate at a given crank angle into a memory as a map data of the goal value of combustion rate corresponding to at least one of the load or the number of engine rotation, detecting the actual combustion rate to the given crank angle; based on the comparison between the detected value and the goal value of this combustion rate, adding to the compensation value of the amount of fuel supply, and controlling ignition timing so that ignition timing is advanced if the detected value is less, and that ignition timing is delayed if the detected value is greater.

However, as the embodiment (2), it may be possible to cancel Steps S224-232 in Fig.26 to execute Step S236 immediately after the execution of Step S223. Thus, in the detection of a transient condition, increasing and correcting the amount of fuel supply more than the amount according to the throttle opening and/or the number of engine rotation, obtaining the combustion condition, which NOₓ reduces, while the best torque is obtained corresponding to at least one of the load or the number of engine rotation; in this combustion condition, storaging the combustion rate at a given crank angle into a memory as a map data of the goal value of combustion rate corresponding to at least one of the load or the number of engine rotation, detecting the actual combustion rate to the given crank angle; based on the comparison between the detected value and the goal value of this combustion rate, adding to the compensation value of the amount of fuel supply, and controlling the amount of fuel so that the amount of fuel supply is increased if the detected value is less, and that the amount of fuel supply decreased if the detected value is greater.

However, as the embodiment (3), it may be possible to cancel Steps S224 and 236-239 in Fig.26 to execute Step S225 immediately after the execution of Step S223. Thus, in the detection of a transient condition, advancing and correcting ignition timing more than timing based on the throttle opening and/or the number of engine rotation, obtaining the combustion condition, which NOₓ reduces, while the best torque is obtained corresponding to at least one of the load or the number of engine rotation; in this combustion condition, storaging the combustion rate at a given crank angle into a memory as a map data of the goal value of combustion rate corresponding to at least one of the load or the number of engine rotation, detecting the actual combustion rate to the given crank angle; based on the comparison between the detected value and the goal value of this combustion rate, adding to the compensation value of ignition timing, and controlling the amount of fuel so that the amount of fuel supply is increased if the detected value is less, and that the amount of fuel supply is decreased if the detected value is greater.

As the embodiment (4), in the detection of a transient condition, advancing and correcting ignition timing more than timing based on the throttle opening and/or the number of engine rotation, obtaining the combustion condition, which NOₓ reduces, while the best torque is obtained corresponding to at least one of the load or the number of engine rotation; in this combustion condition, storaging the value of crank angle to be a given combustion rate into a memory as a map data of the goal crank angle corresponding to at least one of the load or the number of engine rotation, detecting the actual crank angle to the given combustion rate; based on the comparison between the detected value and the goal value of this crank angle, adding to the compensation value of ignition timing, and controlling the ignition timing so that ignition timing is advanced if the detected value is less, and that ignition timing is delayed if the detected value is greater.

As the embodiment (5), in the detection of a transient condition, advancing and correcting ignition timing more than timing based on the throttle opening and/or the number of engine rotation, obtaining the combustion condition, which NOₓ reduces, while the best torque is obtained corresponding to at least one of the load or the number of engine rotation; in this combustion condition, storaging the value of crank angle to be a given combustion rate into a memory as a map data of the goal crank angle corresponding to at least one of the load or the number of engine rotation, detecting the actual crank angle to the given combustion rate; based on the comparison between the detected value and the goal value of this crank angle, adding to the compensation value of the amount of fuel supply, and controlling the amount of fuel supply so that the amount of fuel supply is increased if the detected value is greater, and that the amount of fuel supply is decreased if the detected value is less.

As the embodiment (6), in the detection of a transient condition, advancing and correcting ignition timing more than timing based on the throttle opening and/or the number of engine rotation, increasing and correcting the amount of fuel supply based on the throttle opening and/or the number of engine rotation, obtaining the combustion condition, which NOₓ reduces, while the best torque is obtained corresponding to at least one of the load or the number of engine rotation; in this combustion condition, storaging the value of crank angle to be a given combustion rate into a memory as a map data of the goal crank angle corresponding to at least one of the load or the number of engine rotation, detecting the actual crank angle to the given combustion rate; based on the comparison between the detected value and the goal value of this crank angle, adding to the compensation value of the ignition timing, after controlling the ignition timing so that ignition timing is advanced if the detected value is greater, and that ignition timing is delayed if the detected value is less, adding to the compensation value of the amount of fuel injection, and controlling the amount of fuel supply so that the amount of fuel supply is increased if the detected value is greater, and that the amount of fuel supply is decreased if the detected amount if less.

As the embodiment (7), the actual combustion rate to the given crank angle is calculated, after the detection of combustion pressure at least four angles consisting of a crank angle from after the end of exhaust stroke to the initial state of compression stroke, a crank angle from the start of compression stroke to ignition, and two of crank angles within periods from start of ignition to start of exhaust stroke, based on the data of these combustion rates.

As the embodiment (8), the actual crank angle reaching the given value of combustion rate is characterized to detect combustion pressure in at least four crank angles consisting of a crank angle from the termination of exhaust stroke to the initial stage of compression stroke, and two of the crank angles from the start of ignition to the start of the exhaust stroke, and to be calculated based on the data of these combustion rates from the start of compression stroke to ignition.

Fig.29 is a diagram showing the variation of the combustion rate by the operation of ignition timing. Fig.29A shows the more advanced timing than the proper ignition timing, Fig.29B shows the proper ignition timing, and the more delayed timing than the proper ignition timing, so timing is delayed, if the actual combustion rate in a given crank angle (e.g. B) is a1 greater than the goal combustion rate, and timing advanced if a2 less than the goal combustion rate (e.g. A).

Further, timing is advanced, if the actual crank angle reaching a given combustion rate (e.g. A) is b2 greater than the goal crank angle (e.g. B), and timing advanced if b1 less than the goal crank angle (e.g. B).

Fig.30 shows the variation of the combustion rate FMB by the operation of fuel supply. Fig.30A shows richer than the proper A/F, Fig.29B shows the proper A/F, and Fig.29C shows leaner than the proper A/F; fuel is decreased, if the actual combustion rate in a given crank angle (e.g. B) is a1 greater than the goal combustion rate (e.g. A), and fuel is increased if a2 less than the goal combustion rate (e.g. A).

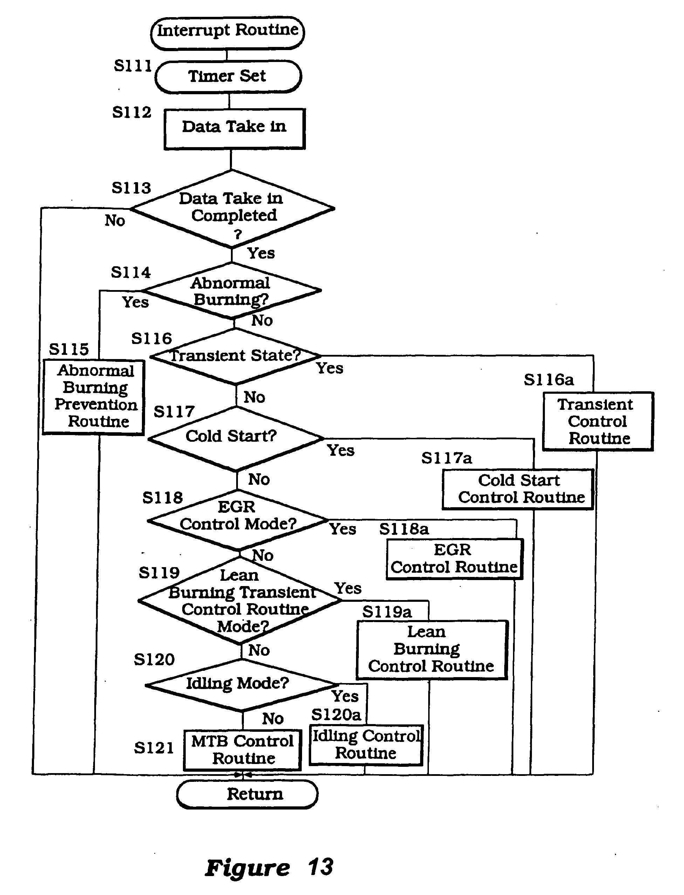

The target crank angle is determined from the map data in FIG.13 in which the load is plotted along the lateral axis and the target crank angle (CRA) at which the specified combustion ratio is reached is plotted along the vertical axis. For example, the target crank angle CRAo (Rx, Lx) at which the specified combustion ratio of 60%, 70%, or 80% is to be reached is determined from the actual engine rpm (Rx) and the actual engine load (Lx) on the map.

Figure 11 shows a structural diagram of this invention as applied to a two-cycle engine. As with the four-cycle engine shown in Figure 1, connecting rods 246 are connected to the crank shaft 241, and at the other end, the combustion chambers 248 are formed in the space between the pistons and the cylinder head. There is an engine RPM sensor 267 and a crank angle sensor 257 attached to the crankcase which detect the marks on the ring gear attached to the crank shaft and issue standard signals and detect the crank angle. Also attached to the crankcase is a crank chamber pressure sensor 210. Air is conveyed into this crank chamber from the air intake manifold through the reed valve 228. Air is conveyed to the air intake manifold through the throttle valve 204 of the carburetor and the air cleaner 231. An intake pressure sensor 211 is mounted in the air intake manifold on the downstream side of the throttle valve. The throttle valve 204 is operated by a grip 206 that is linked by a wire 205 to the throttle pulley 203. This grip 206 is attached to the steering handle bars 207, and an accelerator position sensor 202 is mounted at its base. 212 is a throttle aperture sensor.

There is a scavenging port 229 in the cylinder which connects the combustion chamber and the crank chamber 301 by means of the scavenging passage 253 when the piston is in certain positions. There are also exhaust ports 254 in the cylinder which connect to the exhaust passage 253. There is an exhaust timing adjustment valve 264 installed in the exhaust passage wall in the vicinity of the exhaust port. The variable valve 264 is driven by the actuator 265 of a servo motor, etc. There is an exhaust pipe pressure sensor 213 and an exhaust pipe temperature sensor 223 mounted in the exhaust pipe that comprises the exhaust passage. Furthermore, the exhaust passage is equipped with an exhaust passage valve, which is driven by the actuator 282 from a servo motor, etc. The function of the exhaust passage valve is to improve the rotational stability by preventing blowby through the constriction during low speed operations.

A knocking sensor 201 is attached to the cylinder head, as are spark plugs and combustion chamber pressure sensors 200 which lie at the edge of the combustion chambers. The spark plugs are connected to an ignition control apparatus 256. The injectors 208 are attached to the cylinders' side walls. Fuel is conveyed to these injectors 208 by means of the fuel delivery lines 209.

Combustion gas chambers 279 are formed in the cylinder block which are linked by connecting holes 278 to the middle area of the exhaust ports near the exhaust port opening for the cylinder bore and the cylinder head on the cylinder block. These connecting holes are set to guide the foregoing combustion gas, which contains almost no blow-by gas, into the foregoing combustion gas chambers. There are O₂ sensors 27 attached to the inside of these combustion gas chambers that detect the oxygen concentration therein. In addition, check valves that are not shown are located at the entry to the combustion gas chambers and at the exit to the exhaust ports to prevent reverse flows in these areas.

Thus, drive control of the engine is exercised by a control unit 257 having a CPU 271. The inputs connected to this control unit 257 include the foregoing combustion chamber pressure sensors 200, the knocking sensor 201, the accelerator position sensor 202, the crank chamber pressure sensor 210, the air intake pipe pressure sensor 211, the throttle aperture sensor 212, the exhaust pipe pressure sensor 213, the crank angle detection sensor 258, the engine RPM sensor 267 and the O₂ sensor 277. The output side of the control unit 257 is connected to the injectors 208, the actuator 265 for the exhaust timing adjustment valve, the actuator 282 for the exhaust valve, and to the oil supply device (not shown).

Figure 12 is a graph of the combustion chamber pressure that shows the point of measurement of the pressure data to compute combustion rate for the foregoing 2 cycle engine, and this graph is similar to the one (Figure 6) above for the four-cycle engine. As described above, the combustion chamber pressure data sampling takes place at 6 crank angles. In the figure, the area inside the A range is the crank angle range for which the exhaust port is open, and the B range is that crank angle range for which the scavenging port is open. The sampling methods at the various crank angles (a0 to a5) and the methods of computation of essentially the same as used for the four-cycle engine described above. The embodiment of this invention could also have been adapted for engines employing a carburetor in the air intake passage for supplying fuel to the engine.

As described above, with the control method for an engine of the invention, in detection of a transient condition, while ignition timing is corrected and advanced, as the best torque is obtained, a combustion condition which NOₓ reduces is obtained; in this combustion condition, the actual combustion rate to a given crank angle is detected, based on the detected value of this combustion rate to the goal value of the combustion rate, to add to the compensation value in ignition timing, and ignition timing is controlled, if the detected value is less, ignition timing is advanced, and if the detected value is greater, ignition timing is delayed, whereby the present invention is directed to provide to keep greater engine output, to improve the acceleration characteristic or the performance of engine stall prevention in deceleration as well as the exhaust performance in a transient response.

With the control method for an engine of the invention, in detection of a transient condition, while the amount of fuel supply is corrected and increased, as the best torque is obtained, a combustion condition which NOx reduces is obtained; in this combustion condition, the actual combustion rate to a given crank angle is detected, based on the detected value of this combustion rate to the goal value of the combustion rate, to add to the compensation value of the amount of fuel supply; and the amount of fuel supply is controlled, if the detected value is less, the amount of fuel supply is increased, and if the detected value is greater, the amount of fuel supply is decreased, whereby the present invention is directed to provide to keep greater engine output, to improve the acceleration characteristic or the performance of engine stall prevention in deceleration as well as the exhaust performance in a transient response.

According to the invention, in detection of a transient condition, while ignition timing is advanced and increased, and while the amount of fuel supply is corrected and increased, as the best torque is obtained, a combustion condition which NOₓ reduces is obtained; in this combustion condition, the actual combustion rate to a given crank angle is detected, based on the detected value of this combustion rate to the goal value of the combustion rate, to add to the compensation value in ignition timing; after ignition timing is controlled so that, if the detected value is less, ignition timing is advanced, and if the detected value is greater, ignition timing is delayed, to add to the compensation value of the amount of fuel supply, and the amount of fuel supply is controlled so that, if the detected value is less, the amount of fuel supply is increased, and if the detected value is greater, the amount of fuel supply is decreased, whereby the present invention is directed to provide to keep greater engine output, to improve the acceleration characteristic or the performance of engine stall prevention in deceleration as well as the exhaust performance in a transient response.

According to the invention, in detection of a transient condition, while ignition timing is corrected and advanced, as the best torque is obtained, a combustion condition which NOₓ reduces is obtained; in this combustion condition, the actual value of crank angle to a given combustion rate is detected, based on the detected value of this crank angle to the goal value of crank angle, to add to the compensation value in ignition timing; and ignition timing is controlled so that, if the detected value is less, ignition timing is advanced, and if the detected value is greater, ignition timing is delayed, whereby the present invention is directed to provide to keep greater engine output, to improve the acceleration characteristic or the performance of engine stall prevention in deceleration as well as the exhaust performance in a transient response.

According to the invention, in detection of a transient condition, while ignition timing is corrected and advanced, as the best torque is obtained, a combustion condition which NOₓ reduces is obtained; in this combustion condition, the actual value of crank angle to a given combustion rate is detected, based on the detected value of this crank angle to the goal value of crank angle, to add to the compensation value of the amount of fuel supply; and the amount of fuel supply is controlled so that, if the detected value is less, the amount of fuel supply is advanced, and if the detected value is greater, the amount of fuel supply is delayed, whereby the present invention is directed to provide to keep greater engine output, to improve the acceleration characteristic or the performance of engine stall prevention in deceleration as well as the exhaust performance in a transient response.

According to the invention, in detection of a transient condition, while the amount of fuel supply is corrected and increased, as the best torque is obtained, a combustion condition which NOₓ reduces is obtained; in this combustion condition, the actual value of crank angle to a given combustion rate is detected, based on the detected value of this crank angle to the goal value of crank angle, to add to the compensation value in ignition timing; after the amount of fuel supply is controlled so that, if the detected value is greater, the ignition time is advanced, and if the detected value is less, ignition timing is delayed, to add to the compensation value of the amount of fuel injection, and the amount of fuel supply is controlled so that, if the detected value is greater, the amount of fuel supply is increased, and if the detected value is less, the amount of fuel supply is decreased, whereby the present invention is directed to provide to keep greater engine output, to improve the acceleration characteristic or the performance of engine stall prevention in deceleration as well as the exhaust performance in a transient response.

According to the invention, the actual combustion rate to the given crank angle is calculated, after the detection of combustion pressure at least four angles consisting of a crank angle from after the end of exhaust stroke to the initial state of compression stroke, a crank angle from the start of compression stroke to ignition, and two of crank angles within periods from start of ignition to start of exhaust stroke, based on the data of these combustion rate, whereby an actual crank angle at which the specified combustion ratio is suitably calculated from combustion pressure data.

According to the invention, the actual crank angle reaching the given value of combustion rate is characterized to detect combustion pressures in at least four crank angles consisting of a crank angle from the termination of exhaust stroke to the initial stage of compression stroke, and two of the crank angles from the start of ignition to the start of the exhaust stroke, and to be calculated based on the data of these combustion rates from the start of compression stroke to ignition, whereby an actual crank angle at which the specified combustion ratio is suitably calculated from the combustion pressure data.

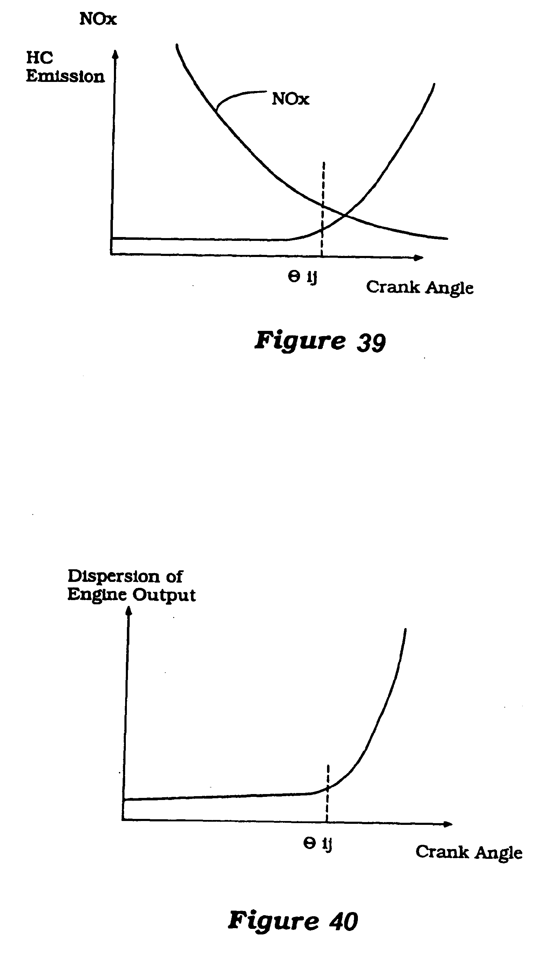

Another embodiment of the invention will now be explained with respect to the figures 2-6 and 31-40.

FIG.2 is a flow chart of a main routine for controlling various operating state of the engine.

Step S11: Initialization is carried out. Initial values are set to flag values and variables.

Step S12: Various kinds of information are taken in; intake air temperature information from an intake air temperature sensor (30), intake air amount information from an intake air amount sensor (40) of heat wire type, throttle opening information from a throttle opening sensor (31), intake pipe pressure information from an intake pipe pressure sensor (32), catalyst temperature sensor (150), crank angle information from a crank angle sensor (11), temperature information from a temperature sensor (26), exhaust temperature information from an exhaust temperature sensor (120), oxygen concentration information from an oxygen concentration sensor (25), and remaining oil amount information from an oil sensor (not shown). Those data taken in are stored in a memory (A). Engine load may be known as the accelerator position or throttle opening. Once the throttle opening and the engine revolution are determined, amount of intake air in normal operating state may be determined, and therefore amount of intake air detected directly may be regarded as the engine load. Alternatively, since intake pipe negative pressure has a certain relationship with the throttle opening once the engine revolution is determined, the intake pipe negative pressure detected may be regarded as the engine load.

Step S13: On or off state information is taken in and stored in a memory B(1) for various switches; a kill switch (43), a main switch (not shown), a starter motor switch (not shown), etc. The kill switch (43) is an emergency switch which is not employed in engines for land vehicles but in small marine engines for instance.

Step S14: Operating state is determined from the sensor information taken in the step S12 and the switch information taken in the step S13. Values corresponding to the operating states (1) through (6) are input to variables (C) in the memory.

Operating state (1): In a constant throttle or moderate throttle operation state with medium to high revolution, with medium to high load, without rapid acceleration or deceleration, with the throttle opening not less than a specified value, with the engine revolution not less than a specified value, and with the throttle opening changing rate not more than a specified value, the operating state is determined as an MBT (Minimum Advance Ignition for Best Torque) control state, and a value 1 is stored as the variable (C).

Operating state (2): When the throttle opening changing rate is not less than a specified value, the operating state is determined as transient, and a value 2 is stored as the variable (C).

Operating state (3): When the throttle opening is not more than a specified value and the engine revolution is within a specified range, for instance 2000 rpm - 5000 rpm, the operating state is determined as a lean combustion control state, and a value 3 is stored as the variable (C).

Operating state (4): When the engine is in an abnormal state such as the engine revolution being not less than a specified limit or over-revolution, the engine temperature being not less than a specified value or overheat, etc. the operating state is determined as an abnormal operating state, and a value 4 is stored as the variable (C).

Operating state (5): When the engine temperature is not higher than a specified value and the starter switch is on, the operating state is determined as a cold start state, and a value 5 is stored as the variable (C).

When the main switch or kill switch is off, the operating state is determined as an engine stop request state, and a value 6 is stored as the variable (C).

Operating condition (7): When the clutch is in the neutral position, or engine speed is below a given value, or the idle SW (throttle perfectly closed SW) is on, it is decided that the engine is in an idle mode, and store 7 in the variable C.

Operating condition (8): When the switch is on in an EGR control (part of exhaust gas is re-circulated to the intake air system), it is decided that the engine is in an EGR control mode, and store 8 in the variable C.

Operating condition (9): When the engine temperature is above a given value and the starter switch is on, it is usually decided that the engine is in an engine start condition, and store 9 in the variable C.

Operating condition A(1): If an abnormal pressure rise or an abnormal pressure transition in the combustion chamber prier to spark ignition is detected from the pressure data of the combustion chamber, it is decided that the engine is in an engine start condition, and store 10 in the variable C.

Furthermore the number of repetition of the step S14 is checked with the same value of variable (C) and with the flag P=1 unchanged. When the number exceeds a specified value (R), it is set to P=0.

When changes are made with:
Rc = 1 when C = 1
Rc = 2 when C = 2, and
Rc = 3 when C = 3,
the result is,
R/c=1 < R/c=2 < R/c=3

When the C value in the previous routine is different from that of the present time, it is set to P=0.

Step S15: A decision is made on whether to perform a mode operation or not; if the variable C is one of 4, 6, and 9, then transfer to Step S20; otherwise, transfer to Step S16.

Step S16: Based on the value of the flag P, when P=0, a target combustion ratio corresponding to the engine revolution and load is determined from the map data in the memory (corresponding to those in FIG.5) and the result is stored in the memory (D). A basic fuel injection start timing and a basic fuel injection amount are also determined from map data in the memory which are respectively similar to those in FIG.5 (pictorial representation of values given as a function of the engine revolution and load) and they are stored in the memories E'(1), E'(2), and E'(3) respectively.

Even if P=0, if the variable C is 5, find out a target burning rate according to the target burning rate map for cold start, and store the value in the memory D; if P=1, transfer to Step S17 without any action.

The combustion rate is defined as the rate of combustion of the fuel burned in one combustion cycle up to a certain crank angle. With regard to computing this combustion rate, one method is to used the combustion chamber pressure data that was taken at a plurality of points during one combustion cycle and use a first-order approximation equation; the other method would be to determine the combustion rate up to the desired crank angle (for example, top dead center) computing heat production using samplings of the combustion pressure and a thermodynamic equation. Both methods yield computed results that very closely approximate the real values. In this case, the combustion pressure data would be detected at a crank angle in the first period between the end of the exhaust stroke and the beginning of the compression stroke, at a crank angle at top dead center or a crank angle near top dead center, and at crank angles after top dead center and before the beginning of the exhaust stroke. That is in the four-cycle engine, as shown in figure 6, the pressure in the combustion chamber decreases to approach the atmospheric pressure as exhaust gas in the combustion chamber is discharged during the exhaust stroke as the piston moves from the bottom dead center after expansion to the top dead center. During the intake stroke after the piston passes the top dead center, the pressure is maintained almost at the atmospheric, and gradually increases at the compression stroke after the piston passes the bottom dead center, and starting after the exhaust valve 17 is closed at the end of the exhaust stroke.

A pressure in the combustion chamber at a time point within the period of time when the pressure is low and near the atmospheric is detected. In figure 6, BDC is chosen as the crank angle 30, however, if it is the beginning of the compression stroke, any angle after BDC can be chosen. Also a crank angle before BDC can be chosen as the crank angle a0.

In the two-cycle engine on the other hand, as shown in figure 12, the pressure decreases as the piston moves downward after combustion. When the exhaust port is uncovered, the pressure decreases further. When the scavenging port is uncovered, the pressure approaches the atmospheric as the fresh charge is introduced. As the piston moves upward, with the exhaust port open, from the bottom dead center to cover the scavenging port and then to cover the exhaust port, the pressure increases gradually. Thus, the phrase "period of time from the exhaust stroke end to the early stage of the compression stroke" refers to the period of time from the intake start to the compression start when the scavenging port is uncovered under the condition of the exhaust port uncovered after the start of the exhaust stroke. In figure 12 BDC is chosen as the crank angle a0.

Spark ignition occurs before or after the top dead center after compression. (Spark ignition begins at the crank angle indicated with an arrow and a letter S in FIGs. 6 and 17.) Combustion starts with a little delay from the start of the sparking. The term ignition start used in the claims refers to the instant of the start of combustion mentioned above. In other words, pressure in the combustion chamber is detected at a crank angle within the second period between the compression stroke start and the ignition-combustion start (at the angle a1 in both FIGs. 6 and 12). After that, pressure in the combustion chamber is detected at two crank angles (in FIGs. 6 and 17 for instance, at crank angles a2 and a3, or a2 and a4, or a3 and a4, or a2 and a5, or a3 and a5, or a4 and a5) within the third period between the ignition start (ignition combustion start) and the exhaust stroke start within the combustion stroke. One of the two crank angles within that period is preferably before the crank angle at which the combustion pressure reaches the maximum. Furthermore, when the pressures in the combustion chamber are detected at least at four crank angle points as referred to in claims, for instance at five or more crank angle points, the number of the pressure measurement crank angle points in the first or second period may be increased. Also preferably as shown in FIGs 6 and 12, the pressure may be detected at three or more crank angles within the third period. In Diesel engines, after a compression stroke, fuel injection into the combustion chamber is started before or after the top dead center and, with a little delay, combustion begins by natural ignition. In other words, the term ignition start used in claims refers to the instant of the start of the natural ignition. By the way, the time lag between the fuel injection start and the natural ignition is determined in advance from the engine revolution or load. The determined time lag is taken into consideration, a pressure measurement crank angle within the second period and a pressure measurement crank angle within the third period are stored as the data based on the engine revolution and/or load in the memory, and the pressure in the combustion chamber is measured.

Thus, the combustion chamber pressures are detected at least four crank angles; at one point within the first period, at one point within the second period, and two points within the third period. From those data, the combustion ratio is calculated with a linear approximation formula.

These approximation equations are expressed as follows:$\text{Combustion rate:} {\text{qx = b + b1}}^{\text{x}} {\text{(p1-p0) + b2}}^{\text{x}} {\text{(p2-p0)+...bn}}^{\text{x}} \text{(pn-p0)}$$\text{Indicated mean effective pressure:} {\text{pmi = c + c1}}^{\text{x}} {\text{(p1-p0) + c2}}^{\text{x}} {\text{(p2-p0) + ...cn}}^{\text{x}} \text{(pn-po)}$

As is apparent from the above equations, qx is the sum of the products of predetermined constants b1 through bn multiplied by the pressure data p1 through pn from which the standard pressure p0 has been subtracted.

Similarly, pmi is the sum of the products of predetermined constants c1 through cn multiplied by the pressure data p1 through pn from which the standard pressure p0 has been subtracted.

Here, p0 is the pressure in the combustion chamber when it reaches the atmospheric pressure level (for example, near the BDC as described above), and it is subtracted from the various pressures p1 through pn in order to correct the pressure for sensor drift. P1 is the pressure in the combustion chamber at the crank angle a1 in the first period.

P2 is a combustion chamber pressure at the crank angle a2 in the second period. P3 - Pn are those at the crank angles a3 - an (in this embodiment, n = 5).

Thus, a simple first-order approximation equation can be used to compute, at a specific crank angle after ignition, an accurate value for the combustion rate with is almost the same as the actual value. Accordingly, by using this combustion rate as the basis for the control of the engine's ignition timing or air/fuel ratio, it is possible not only to get better energy efficiency from combustion, but to improve response, and to prevent output fluctuations by accurately following the operating state of the engine when performing EGR control under lean burn engine operations. It is further possible to prevent the generation of NOₓ emissions caused by the rapid advance of combustion.

With the regard to the second computation method for the combustion rate, qx is computed using the heat generated between two pressure measurement points (crank angles) the pressure difference ΔP between the two pressure measurement points, the volume difference ΔV in the volume of the combustion chamber, where P and V are the first of the two pressure values and combustion chamber volume values that were measured, A is the heat equivalent, K is the specific heat ratio, R is the average gas constant, and P0 is the pressure at BDC:$\text{Heat generation:} \text{Qx =} \frac{\text{A}}{\text{(K-1)}} \text{x (} \frac{\text{(K+1)}}{\text{2}} \text{x Δp x ΔV + K x (P-P0))}$

The specific pressure measurement point up to where the combustion rate is measured should be selected as the crank angle where combustion is nearly complete. Similarly, a crank angle near the point of ignition would also be selected as a pressure measurement point. The calculation of the foregoing amount of heat generation Qx is performed by summing the values determined for each of the pressure measurement points, and with regard to the interval between the initial pressure measurement point to the specified pressure measurement point (the specific crank angle). Then the combustion rate is determined by summing for the foregoing Qx and then dividing; to wit:$\text{Combustion rate:} \text{qx = the amount of combustion heat up to the desired crank} \text{angle / all of the heat X} \text{100 (%)} \text{= (Q1 + Q2 + ... + Qx) / (Q1 + Q2 + ... + Qn) x 100}$

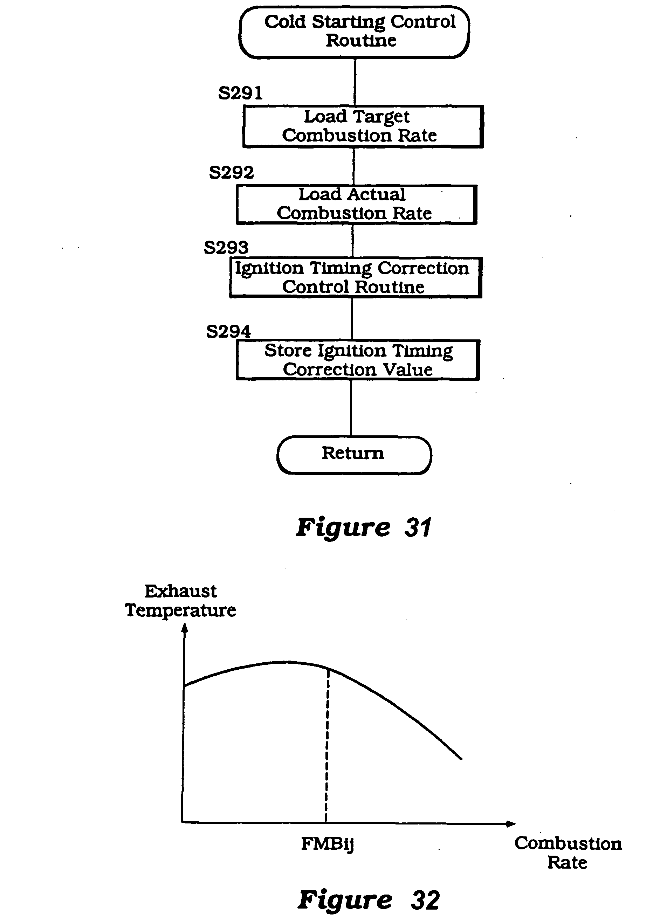

The above computation can be used to measure the combustion chamber pressure at a plurality of specific crank angles (at the step S112 of Fig.3), and based upon that data, the combustion rate up to the desired crank angle can be accurately computed (at the step S201 of Fig.31). Then, by using this combustion rate for engine control, it is possible to obtain stable output and engine RPM.

Step S17: Using the intake air temperature information and intake pipe negative pressure information, compensation calculation of the fuel injection amount is carried out. That is to say, when the intake air temperature increases, the air density decreases and the substantial air flow rate decreases. This results in the decrease in the air to fuel ratio. Therefore, compensation amount for reducing fuel injection amount has to be calculated.

Step S18: Basic fuel injection is started according to the engine load and engine revolution. The basic fuel injection amount and the basic ignition timing are determined in the step S16 and stored in the memory E'(i). Based on these data, the fuel injection compensation amount and the ignition timing compensation amount are determined according to the compensation amount determined in the step S17 and information stored in the memory A(i), and added to the basic values to determine the control amounts. As the control amounts, the ignition start timing is the value in the memory E(1), and the ignition period is the value in the memory E(2). When P=1, the injection start timing and the injection end timing are stored in F(3) and F(4) respectively. When P=0, the injection start timing and the injection end timing are stored in E(3) and E(4) respectively.

This is input to the memory E(i). In a similar manner, control amounts for the servomotor group and the solenoid valve group are calculated according to the information stored in the memory A(i) and stored in the memory G(i).

Step S19: Actuators such as servomotor group and solenoid valve are driven and controlled according to the control amounts in the memory G(i).

Step S20: Whether an engine stop request is present is determined. If present, the process goes to the step S21. If not, the process goes to the step S22.

Step S21: Values of the memory E(i), where i = 1 - 4, are set to zero as stop data.

Step S22: An engine start is checked. If yes, the step goes to the step S23. If not, it goes to the step S25.

Step S23: Data stored in advance in the memory for the start are set to the memory F(i).

Step S24: Starter motor is actuated.

Step S25: This is the case in which the variable C is 4, and the data corresponding to the abnormal phenomena are set, for example, miss fire data if over-revolution happens, or data used for increasing fuel injection while choking throttle opening if overheat occurs.

Next, the interrupt routine (1) shown in FIG.3 will be described. This interrupt routine (1) is executed by interrupting the main routine when a specified crank angle signal is input.

Step S111: A timer is set to perform interruption routine (1) at every specified crank angle, namely to perform the interruption at the next crank angle.

Step S112: The data at a crank angle at which an interruption occurred is taken into the memory.

Step S113: When the data at every crank angle at which an interruption occurred is taken into the memory, the process goes to the step S114.

Step S114-S115: See if C = 10 or not. If so, it is decided that the engine is in a state of abnormal burning, perform an abnormal burning prevention routine at Step S115 and return.

Step S116: See if C = 2 or not and decide whether the engine is in a state of transient; if so, perform a transient control routine at Step S116a to correct ignition timing and A/F, and return; otherwise, transfer to Step S117.

Step S117: See if C = 5 or not and decide whether the engine is in a state of cold start; if so, perform a cold start control routine at Step S117a to correct ignition timing and return; otherwise, transfer to Step S118.

Step S118: See if C = 8 or not and decide whether the engine is in a state of an EGR control mode; if so, perform an EGR control routine at Step S118 to correct the EGR rate and ignition timing, and return; otherwise, transfer to Step S119.

Step S119: See if C = 3 or not and decide whether the engine is in a state of a lean burning mode; if so, perform a lean burning control routine at Step S119a to correct the A/F and ignition timing, and return; otherwise, transfer to Step S120.

Step S120: See if C = 7 or not and decide whether the engine is in a state of an idling mode; if so, perform an idling routine at Step S120a to correct the A/F and ignition timing, and return; otherwise, perform a MBT control routine at Step S121 to correct ignition timing and return.

Now, an interrupt routine (2) will be described. This interrupt routine (2) is performed by interruption when a reference crank signal is input.

Step S121: This interrupt routine (2) is executed once at a specified crank angle of the engine revolution, and therefore measures a period.

Step S122: Engine revolution is calculated.

Step S123: The ignition start timing, ignition end timing, injection start timing, and injection end timing are set to the timer according to the control data of the memory F(i), where i = 1 - 4. The timer actuates the ignition device and the injection device at the preset timings.

Next, calculation of the target combustion ratio mentioned in reference to FIGs. 2 and 3 will be described in detail.

Fig.5 is a diagram of map to determine the goal combustion rate corresponding to the number of engine rotation and to the load. A given crank angle is calculated, for example, from a map where the combustion rate to the top dead center (TDC) is mapped as a goal combustion rated, before memorized in the storage in the controller 12.

The diagram shows that the map has a three dimensional structure in which target burning rates are determined according to the engine load (Lx) and engine speed (Rx). The target burning rate in a given operating condition (Lx, Rx) is found as FMB? (Lx, Rx).

FIG.6 is a graph of combustion chamber pressure over one combustion cycle of a four-cycle engine. The lateral axis shows the crank angle and the vertical axis shows the combustion pressure. Combustion pressures (P0 - P5) are detected at the six crank angles (a0 - a5) shown in the figure, and combustion ratios are calculated from those pressure values. The crank angle (a0) is at the bottom dead center (BDC) where the stroke changes from intake to compression, and the pressure is about atmospheric. The angle (a1) is after the compression start and before the spark ignition, (a2) is the crank angle after the spark ignition at the angle (S) and before reaching the TDC. The angles (a3)-(a5) are crank angles are after the TDC in the combustion stroke. The combustion ratios are calculated from the pressure data at those crank angles. By the way, in Diesel engines where spark ignition is not made, fuel is injected in the vicinity of the TDC, in a zone FI. Natural ignition occurs with a delay angle (d) after the fuel injection. The natural ignition occurs at the crank angle (S). Fuel injection timing is controlled according to the difference between the measured and target values of the combustion ratio or the crank angle. The injection start timing is controlled to be advanced or delayed, and the injection end timing is controlled so that a specified injection amount is secured.

Now, the control of the combustion rate based on the calculation of the combustion rate described in Figs. 2 and 3 will be described.

Switch S291: Load a target combustion rate from the target value map, and move to the switch S292.

Switch S292: Calculate the actual combustion rate and load it, and move to the switch S293.

Switch S293: Execute the ignition timing control routine, and move to the switch S294.

Switch S294: Store the correction value of the ignition timing, and return.

In this cold starting control, some of the controls ①∼⑨ and A① are executed as follows:

First, in the cold start control ①, an exhaust gas cleaning catalyzer is disposed in the exhaust passage thereof, taking, as a target value, a combustion rate at at least one crank angle between the latter period of combustion and the termination of combustion in a combustion state capable of elevating the exhaust temperature in cold starting while restraining the increase of HC and the fluctuation of engine output, the combustion rate in the actual combustion at said target crank angle is detected, and the ignition timing is advanced when the detected combustion rate is smaller than the target value while the ignition timing is retarded when the detected combustion rate is larger that the target value so that the detected combustion rate may reaches said target value.

In the cold start control ②, an exhaust gas cleaning catalyzer is disposed in the exhaust passage thereof, a combustion state is obtained in which a stable combustion corresponding to at least one of the engine load and the engine speed is obtained, the combustion rate value at a predetermined crank angle in the combustion state above is held in the memory as the map data of the first target combustion rate value which corresponds to at least one of the engine load and the engine speed, the combustion rate value at a predetermined crank angle in cold starting which is the starting state while the engine temperature is low is held in the memory as the map data of the second target combustion rate value which corresponds to at least one of the engine load and the engine speed and is smaller than the first target combustion rate value, while, the ignition timing is controlled on the basis of the comparison of the detected value of the actual combustion rate until said predetermined crank angle with the second target combustion rate in case of cold starting and with the first target combustion rate in other cases so that it is advanced when said detected value is smaller while it is retarded when the detected value is larger.

In the cold start control ③, an exhaust gas cleaning catalyzer is disposed in the exhaust passage thereof, in the ignition timing control with which a combustion state is obtained in which a stable combustion corresponding to at least one of the engine load and the engine speed is obtained, the combustion rate value at a predetermined crank angle in the combustion state above is held in the memory as the map data of the target combustion rate value which corresponds to at least one of the engine load and the engine speed, the actual combustion rate until said predetermined crank angle is detected, and, on the basis of the comparison of this combustion rate with the target combustion rate, the ignition timing is advanced when said detected value is smaller while the ignition timing is retarded when the detected value is larger; in case of cold starting which is the starting state, while the engine temperature is low, a value obtained by subtracting a predetermined value from the target combustion rate value based on the map data is used as the target combustion rate value for comparison with said detected combustion rate.

In the cold start control ④, in any of the cold start controls ①, ②, ③ or ⑨ (below), the actual combustion rate until said predetermined crank angle is calculated on the basis of combustion pressure data detected at at least four crank angles including the crank angle between the exhaust stroke termination and the compression stroke starting, the crank angle between the compression stroke starting and ignition, and two crank angles in the period from ignition starting and exhaust stroke, and these actual combustion rates are calculated on the basis of combustion pressure data.

In the cold start control ⑤, an exhaust cleaning catalyzer is disposed in the exhaust passage thereof, taking, as a target value, a crank angle at at least one combustion rate between the latter period of combustion and the termination of combustion in a combustion state capable of elevating the exhaust temperature in cold starting while restraining the increase of HC and the fluctuation of engine output, the crank angle in the actual combustion at said target combustion rate is detected, and the ignition timing is advanced when the detected crank angle is retarded from the target value while the ignition timing is retarded when the detected combustion rate is advanced so that the detected crank angle may reach said target value.

In the cold start control ⑥, an exhaust gas cleaning catalyzer is disposed in the exhaust passage thereof, a combustion state is obtained in which a stable combustion corresponding to at least one of the engine load and the engine speed is obtained, the crank angle for reaching the predetermined combustion rate in the combustion state above is held in the memory as the map data of the first target crank angle value which corresponds to at least one of the engine load and the engine speed, the crank angle for reaching the predetermined combustion rate in cold starting which is the starting state while the engine temperature is low is held in the memory as the map data of the second crank angle value which corresponds to at least one of the engine load and the engine speed and is retarded from the first target crank angle value, while, the ignition timing is controlled on the basis of the comparison of the detected value of the actual crank angle required until said predetermined combustion rate is reached with the second target crank angle in case of cold starting and with the first target crank angle in other cases so that it is advanced when said detected value is retarded while it is retarded when the detected value is advanced.

In the cold start control ⑦, an exhaust gas cleaning catalyzer is disposed in the exhaust passage thereof, in the ignition timing control with which a combustion state is obtained in which a stable combustion corresponding to at least one of the engine load and the engine speed is obtained, the crank angle value at which the predetermined combustion rate in the combustion state above is reached is held in the memory as the map data of the target crank angle which corresponds to at least one of the engine load and the engine speed, the actual crank angle until said predetermined combustion rate is detected, and, on the basis of the comparison of this detected crank angle with the target crank angle, the ignition timing is advanced when said detected value is retarded while the ignition timing is retarded when the detected value is advanced; in case of cold starting which is the starting state while the engine temperature is low, a value obtained by subtracting a predetermined value from the target crank angle value based on the map data is used as the target crank angle value for comparison with said detected crank angle.

In the cold start control ⑧, the actual crank angle for reaching said predetermined combustion rate is calculated on the basis of combustion pressure data detected at at least four crank angles including the crank angle between the exhaust stroke termination and the compression stroke starting, the crank angle between the compression stroke starting and ignition, and two crank angles in the period from ignition starting and exhaust stroke starting.

In the cold start control ⑨, an exhaust gas cleaning catalyzer is disposed in the exhaust passage thereof, and the fuel for which is injected directly into its combustion chamber and naturally ignited by temperature rise in its compression stroke, a combustion state is obtained in which a stable combustion corresponding to at least one of the engine load and the engine speed is obtained, the combustion rate value at a predetermined crank angle in the combustion state above is held in the memory as the map data of the first target combustion rate value which corresponds to at least one of the engine load and the engine speed, the combustion rate value at a predetermined crank angle in cold starting which is the starting state while the engine temperature is low is held in the memory as the map data of the second target combustion rate value which corresponds to at least one of the engine load and the engine speed and is smaller than the first target combustion rate value, while, the fuel injection timing is controlled on the basis of the comparison of the detected value of the actual combustion rate until said predetermined crank angle with the second target combustion rate in case of cold starting and with the first target combustion rate in other cases so that it is advanced when said detected value is smaller while it is retarded when the detected value is larger.

In the cold start control A①, the method for controlling a diesel engine having an exhaust gas cleaning catalyzer disposed in the exhaust passage thereof and the fuel for which is injected directly into its combustion chamber and naturally ignited by temperature rise in its compression stroke, characterized in that, a combustion state is obtained in which a stable combustion corresponding to at least one of the engine load and the engine speed, the crank angle value at which the predetermined combustion rate in the combustion state above is reached is held in the memory as the map data of the first target crank angle which corresponds to at least one of the engine load and the engine speed, the crank angle value at which the predetermined combustion rate in cold starting which is the starting state while the engine temperature is low is reached is held in the memory as the map data of the second crank angle value which corresponds to at least one of the engine load and engine speed and is retarded from the first target crank angle value, while the actual crank angle until said predetermined combustion rate is reached is detected and, on the basis of the comparison of this crank angle detected value with the second target crank angle in cold starting, or with the first target crank angle in other cases.

Fig.32 shows the relation between the combustion rate and exhaust temperature at the predetermined crank angle. For example, when the crank angle θ_{bbj} is 50° ATDC, the combustion rate is about 70%, the exhaust temperature is high, the catalyzer can be activated earlier, and HC and black smoke in the exhaust gas can be reduced.

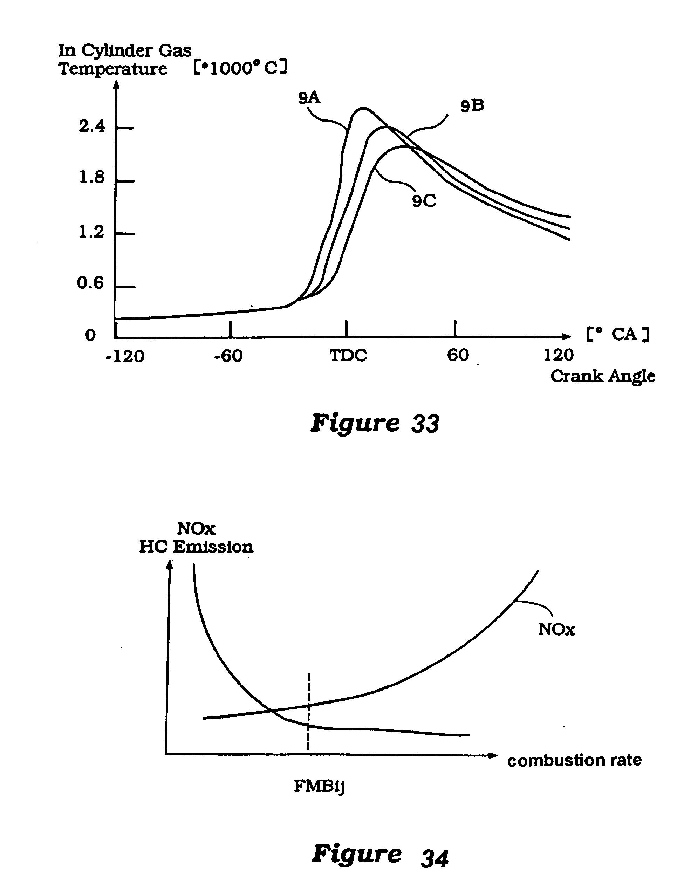

Fig.33 is a graph showing the relation between the crank angle and the in-cylinder gas temperature. The curves 9A, 9B and 9C show the cases of early ignition timing, standard ignition timing and late ignition timing, respectively. In the case of early ignition timing of the curve 9A, the in-cylinder gas temperature becomes lower than that of the case of late ignition timing of the curve C. Therefore, to activate the catalyzer earlier, the ignition timing is retarded from the standard ignition timing of the curve 9B. That is, the combustion rate until the predetermined crank angle is set smaller than that of ordinary standard.

Fig.34 is a graph showing the relation between the combustion rate and discharge of HC and NOₓ at the predetermined combustion rate. Fig.11 is a graph showing the relation between the combustion rate at the predetermined crank angle and the output fluctuation. For example, the combustion rate FMB₁₃ at the predetermined crank angle ATDC 50° is 70% discharge of HC and NOₓ is little, and also output fluctuation is small.

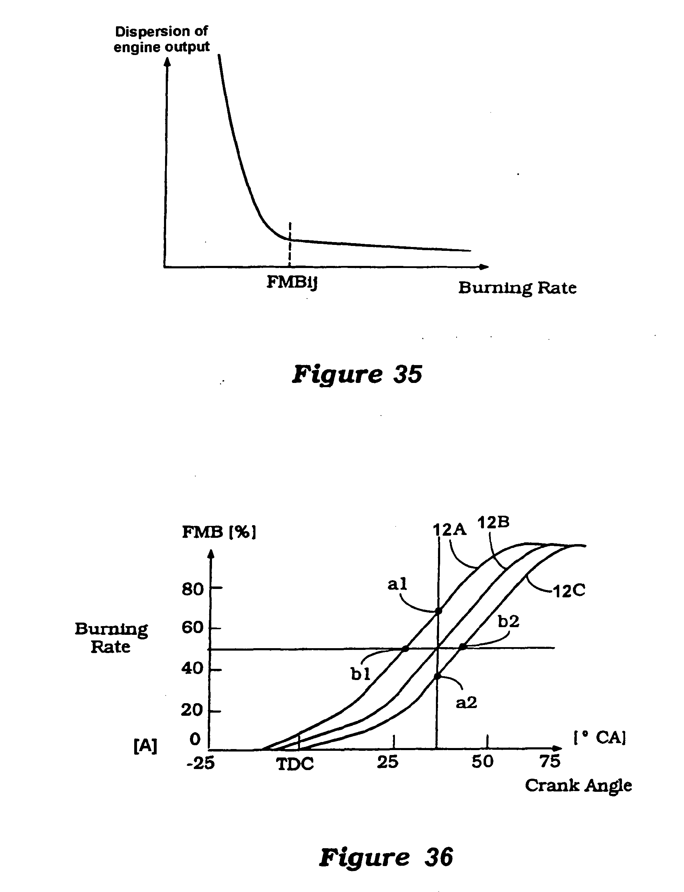

Fig.36 is a diagram showing the variation of the combustion rate by the operation of ignition timing. Fig.11A shows the more advanced timing than the proper ignition timing, Fig.11B shows the proper ignition timing, and the more delayed timing than the proper ignition timing, so timing is delayed, if the actual combustion rate in a given crank angle (e. g. B) is a1 greater than the goal combustion rate, and timing advanced if a2 less than the goal combustion rate (e. g. A).

Further, timing is advanced, if the actual crank angle reaching a given combustion rate (e. g. A) is b2 greater than the goal crank angle (e. g. B), and timing advanced if b1 less than the goal crank angle (e. g. B).

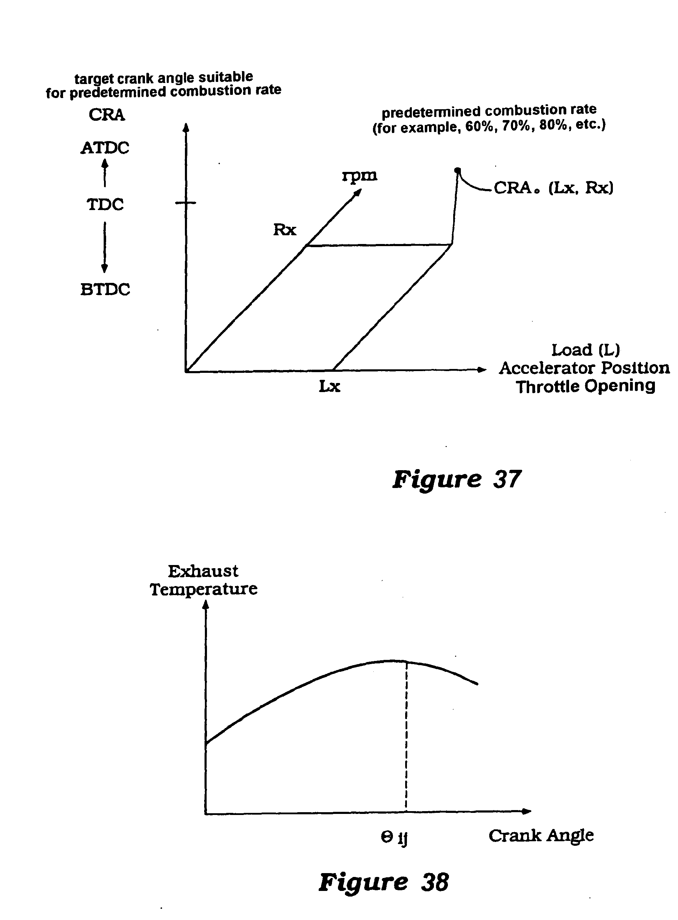

The target crank angle is determined from the map data in FIG.37 in which the load is plotted along the lateral axis and the target crank angle (CRA) at which the specified combustion ratio is reached is plotted along the vertical axis. For example, the target crank angle CRAo(Rx, Lx) at which the specified combustion ratio of 60%, 70%, or 80% is to be reached is determined from the actual engine rpm (Rx) and the actual engine load (Lx) on the map.

Fig.38 shows the relation between the crank angle and the exhaust temperature at the predetermined combustion rate. For example, when the combustion rate FMB_{obj} is about 70%, the approximate crank angle θ_{obj} is 50° ATDC, the exhaust temperature is high, the catalyzer can be activated earlier, and HC and black smoke in the exhaust gas can be reduced.

Fig.15 is a graph showing the relation between the crank angle and the exhaust of HC and NOₓ at the predetermined combustion rate. Fig.16 is a graph showing the crank angle and output fluctuation at the predetermined combustion rate. For example, when the predetermined combustion rate FMB₁₃ is 70%, the crank angle θ₁₃ is 50° ATDC, discharge of HC and NOₓ is little, and also output fluctuation is small.

Figure 36 is a graph of the combustion chamber pressure that shows the point of measurement of the pressure data to compute combustion rate for the foregoing 2 cycle engine, and this graph is similar to the one (Figure 6) above for the four-cycle engine. As described above, the combustion chamber pressure data sampling takes place at 6 crank angles. In the figure, the area inside the A range is the crank angle range for which the exhaust port is open, and the B range is that crank angle range for which the scavenging port is open. The sampling methods in the step S113 of Fig.3 at the various crank angles (a0 to a5) and the methods of computation of essentially the same as used for the four-cycle engine described above.

The embodiments of this invention could also have been adapted for engines employing a carburetor in the air intake passage for supplying fuel to the engine.

As described above, with the control method for an engine of the invention, in cold starting, by advancing or retarding the ignition timing while restraining HC increase and output fluctuation so that the target combustion rate may be obtained at the predetermined crank angle between the combustion latter period and its termination highly related with the combustion state capable of raising the exhaust temperature, combustion in cold starting is stabilized and the catalyzer is rapidly activated.

According to the control method the exhaust gas is cleaned by the catalyzer, the actual combustion rate until the predetermined crank angle is detected and this detected value is compared with the second target combustion rate in cold starting and with the first target combustion rate in other cases; by controlling the ignition timing so that the ignition timing is advanced when the detected value is smaller and so that the ignition timing is retarded when the detected value is larger, the combustion in cold starting is stabilized while the exhaust temperature is rapidly raised after engine starting, the catalyzer is rapidly activated, and HC and black smoke in exhaust gas are reduced.

According to the engine control method the exhaust gas is cleaned by the catalyzer, the actual combustion rate until the predetermined crank angle is detected and this detected value is compared with the target combustion rate, and the ignition timing is advanced when the detected value is smaller while the ignition timing is retarded when the detected value is larger. However, in cold starting wherein the engine temperature is low, a value obtained by subtracting a predetermined value from the target combustion rate value based on the map data is compared as the target combustion rate for comparison with the detected combustion rate, thus, combustion in cold starting is stabilized while the exhaust temperature is rapidly raised, the catalyzer is rapidly activated after engine starting, and HC and black smoke in the exhaust gas are reduced.

According to the engine control method, the actual combustion rate until the predetermined crank angle is calculated on the basis of four combustion pressure data detected at at least four crank angles, and the ignition timing is properly controlled.

According to the engine control method in cold starting, by advancing or retarding the ignition timing while restraining HC increase and output fluctuation so that the target crank angle may be obtained at the predetermined combustion rate between the combustion latter period and its termination highly related with the combustion state capable of raising the exhaust temperature, combustion in cold starting is stabilized and the catalyzer is rapidly activated.

According to the engine control method, the exhaust gas is cleaned by the catalyzer, the actual crank angle until the predetermined combustion rate is reached is detected, this crank angle detected value is compared with the second target crank angle in cold starting, and with the first crank angle in other cases, and, by controlling the ignition timing so that the ignition timing is advanced when the detected value is retarded and so that the ignition timing is retarded when the detected value is advanced, while stabilizing starting combustion in cold starting, the exhaust temperature is raised earlier after starting, the catalyzer is activated earlier, and the amounts of HC and black smoke are reduced.

According to the engine control method, exhaust gas is cleaned by catalyzer, the actual crank angle until said predetermined combustion rate is reached is detected, and, on the basis of the comparison of this crank angle with the target crank angle, the ignition timing is advanced when the detected value is retarded while the ignition timing is retarded when the detected value is advanced; in case of cold starting which is the starting state while the engine temperature is low, a value obtained by subtracting a predetermined value from the target crank angle value based on the map data is used as the target crank angle value for comparison with said detected combustion rate, and, since the ignition timing is properly controlled, combustion in cold starting is stabilized, exhaust gas temperature after engine starting is raised earlier, the catalyzer is activated earlier and HC and black smoke in the exhaust gas can be reduced.

According to the engine control method, the actual crank angle where the predetermined combustion rate is reached is calculated on the basis of combustion pressure data detected at four crank angles so that ignition timing is properly controlled.

According to the engine control method, when controlling a diesel engine, the exhaust gas is cleaned by a catalyzer, the actual combustion rate until the predetermined crank angle is detected and this detected value is compared with the second target combustion rate in cold starting and with the first target combustion rate in other cases, and, by controlling the fuel injection starting timing so that it is advanced when the detected value is smaller and is retarded when the detected value us larger, the combustion in cold starting is stabilized while the exhaust gas temperature is raised earlier after engine starting, the catalyzer is activated earlier, and HC and black smoke in the exhaust gas are reduced.

According to the engine control method, in controlling a diesel engine, the exhaust gas is cleaned by a catalyzer, the actual crank angle until the predetermined crank angle is reached is detected and this crank angle detected value is compared with the second target crank angle in cold starting and with the first crank angle in other cases, and, by controlling the fuel injection starting timing so that it is advanced when the detected value is retarded and so that it is retarded when the detected value is advanced, combustion in cold starting is stabilized, the exhaust temperature is raised earlier after engine starting, the catalyzer is activated earlier, and HC and black smoke in the exhaust gas are reduced.

Further, next another embodiment of the invention will be illustrated with respect to the figures 2-6 and 41-44.

FIG.2 is a flow chart of a main routine for controlling various operating state of the engine.

Step S11: Initialization is carried out. Initial values are set to flag values and variables.

Step S12: Various kinds of information are taken in; intake air temperature information from an intake air temperature sensor (30), intake air amount information from an intake air amount sensor (40) of heat wire type, throttle opening information from a throttle opening sensor (31), intake pipe pressure information from an intake pipe pressure sensor (32), catalyst temperature information from a catalyst temperature sensor (150), crank angle information from a crank angle sensor (11), temperature information from a temperature sensor (28), exhaust temperature information from an exhaust temperature sensor (120), oxygen concentration information from an oxygen concentration sensor (25), and remaining oil amount information from an oil sensor (not shown). Those data taken in are stored in a memory (A). Engine load may be known as the accelerator position or throttle opening. Once the throttle opening and the engine revolution are determined, amount of intake air in normal operating state may be determined, and therefore amount of intake air detected directly may be regarded as the engine load. Alternatively, since intake pipe negative pressure has a certain relationship with the throttle opening once the engine revolution is determined, the intake pipe negative pressure detected may be regarded as the engine load.

Step S13: On or off state information is taken in and stored in a memory B(i) for various switches: a kill switch (43), a main switch (not shown), a starter motor switch (not shown), etc. The kill switch (43) is an emergency switch which is not employed in engines for land vehicles but in small marine engines for instance.

Step S14: Operating state is determined from the sensor information taken in the step S12 and the switch information taken in the step S13. Values corresponding to the operating states (1) through (6) are input to variables (C) in the memory.

Operating state (1): In a constant throttle or moderate throttle operation state with medium to high revolution, with medium to high load, less than a specified value, with the engine revolution not less than a specified value, and with the throttle opening changing rate not more than a specified value, the operating state is determined as an MBT (Minimum Advance ignition for Best Torque) control state, and a value 1 is stored as the variable (C).

Operating state (2): When the throttle opening changing rate is not less than a specified value, the operating state is determined as transient, and a value 2 is stored as the variable (C).

Operating state (3): When the throttle opening is not more than a specified value and the engine revolution is within a specified range, for instance 2000 rpm - 5000 rpm, the operating state is determined as a lean combustion control state, and a value 3 is stored as the variable (C).

Operating state (4): When the engine is in an abnormal state such as the engine revolution being not less than a specified limit or over-revolution, the engine temperature being not less than a specified value or overheat, etc., the operating state is determined as an abnormal operating state, and a value 4 is stored as the variable (C).

Operating state (5): When the engine temperature is not higher than a specified value and the starter switch is on, the operating state is determined as a cold start state, and a value 5 is stored as the variable (C).

When the main switch or kill switch is off, the operating state is determined as an engine stop request state, and a value 6 is stored as the variable (C).

Operating condition (7): When the clutch is in the neutral position, or engine speed is below given value, or the idle SW (throttle perfectly closed SW) is on, it is decided that the engine is in an idle mode, and store 7 in the variable C.

Operating condition (8): When the switch is on in an EGR control (part of exhaust gas is re-circulated to the intake air system), it is decided that the engine is in an EGR control mode, and store 8 in the variable C.

Operating condition (9): When the engine temperature is above a given value and the starter switch is on, it is usually decided that the engine is in an engine start condition, and store 9 in the variable C.

Operating condition A (1): If an abnormal pressure rise or an abnormal pressure transition in the combustion chamber prier to spark ignition is detected from the pressure data of the combustion chamber, it is decided that the engine is in an engine start condition, and store 10 in the variable C.

Furthermore, the number of repetition of the step S14 is checked with the same value of variable (C) and with the flag P=1 unchanged. When the number exceeds a specified value (R), it is set to P=0.

When changes are made with:
Rc = 1 when C = 1
Rc = 2 when C = 2, and
Rc = 3 when C = 3,
the result is,
R/c=1 < R/c=2 < R/c=3

When the C value in the previous routine is different from that of the present time, it is set to P=0.

Step S15: A decision is made on whether to perform a mode operation or not; if the variable C is one of 4, 6, and 9, then transfer to Step S20; otherwise, transfer to Step S16.

Step S16: Based on the value of the flag P, when P=0, a target combustion ratio corresponding to the engine revolution and load is determined from the map data in the memory (corresponding to those in FIG.5) and the result is stored in the memory (D). A basic fuel injection start timing and a basic fuel injection amount are also determined from a map data in the memory which are respectively similar to those in FIG.6 (pictorial representation of values given as a function of the engine revolution and load) and they are stored in the memories E'(1), E'(2), and E'(3) respectively.

Even if P=0, if the variable C is 5, find out a target burning rate according to the target burning rate map for cold start, and store the value in the memory D; if P=1, transfer to Step S17 without any action.

The combustion rate is defined as the rate of combustion of the fuel burned in one combustion cycle up to a certain crank angle. With regard to computing this combustion rate, one method is to used the combustion chamber pressure data that was taken at a plurality of points during one combustion cycle and use a first-order approximation equation; the other method would be to determine the combustion rate up to the desired crank angle (for example, top dead center) computing heat production using samplings of the combustion pressure and a thermodynamic equation. Both methods yield computed results that very closely approximate the real values. In this case, the combustion pressure data would be detected at a crank angle between the end of the exhaust stroke and the beginning of the compression stroke, at a crank angle at top dead center or a crank angle near top dead center, and at crank angles after top dead center and before the beginning of the exhaust stroke. That is in the four-cycle engine, as shown in figure 6, the pressure in the combustion chamber decreases to approach the atmospheric pressure as exhaust gas in the combustion chamber is discharged during the exhaust stroke as the piston moves from the bottom dead center after expansion to the top dead center. During the intake stroke after the piston passes the top dead center, the pressure is maintained almost at the atmospheric, and gradually increases at the compression stroke after the piston passes the bottom dead center, and starting after the exhaust valve 17 is closed at the end of the exhaust stroke. A pressure in the combustion chamber at a time point within the period of time when the pressure is low and near the atmospheric is detected. In figure 6, BDC is chosen as the crank angle a0, however, if it is the beginning of the compression stroke, any angle after BDC can be chosen. Also, a crank angle before BDC can be chosen as the crank angle a0. In the two-cycle engine on the other hand, as shown in figure 12, the pressure decreases as the piston moves downward after combustion. When the exhaust port is uncovered, the pressure decreases further. When the scavenging port is uncovered, the pressure approaches the atmospheric as the fresh charge is introduced. As the piston moves upward, with the exhaust port open, from the bottom dead center to cover the scavenging port and then to cover the exhaust port, the pressure increases gradually. Thus, the phrase "period of time from the exhaust stroke end to the early stage of the compression stroke" refers to the period of time from the intake start to the compression start when the scavenging port is uncovered under the condition of the exhaust port uncovered after the start of the exhaust stroke. In figure 12, BDC is chosen as the crank angle a0.

Spark ignition occurs before or after the top dead center after compression. (Spark ignition begins at the crank angle indicated with an arrow and a letter S in FIGs. 6 and 14.) Combustion starts with a little delay from the start of the sparking. The term ignition start used in the claims refers to the instant of the start of combustion mentioned above. In other words, pressure in the combustion chamber is detected at a crank angle within the second period between the compression stroke start and the ignition-combustion start (at the angle a1 in both FIGs. 6 and 14). After that, pressure in the combustion chamber is detected at two crank angles (in FIGs. 6 and 14 for instance, at crank angles a2 and a3, or a2 and a4, or a3 and a4, or a2 and a5, or a3 and a5, or a4 and a5) within the third period between the ignition start (ignition combustion start) and the exhaust stroke start within the combustion stroke. One of the two crank angles within that period is preferably before the crank angle at which the combustion pressure reaches the maximum. Furthermore, when the pressures in the combustion chamber are detected at least at four crank angle points as referred to in claims, for instance at five or more crank angle points, the number of the pressure measurement crank angle points in the first or second period may be increased. Also preferably as shown in FIGs. 6 and 14, the pressure may be detected at three or more crank angles within the third period. In Diesel engines, after a compression stroke, fuel injection into the combustion chamber is started before or after the top dead center and, with a little delay, combustion begins by natural ignition. In other words, the term ignition start used in claims refers to the instant of the start of the natural ignition. By the way, the time lag between the fuel injection start and the natural ignition is determined in advance from the engine revolution or load. The determined time lag is taken into consideration, a pressure measurement crank angle within the second period and a pressure measurement crank angle within the third period are stored as the data based on the engine revolution and/or load in the memory, and the pressure in the combustion chamber is measured.

Thus, the combustion chamber pressures are detected at least four crank angles; at one point within the first period, at one point within the second period, and two points within the third period. From those data, the combustion ratio is calculated with a linear approximation formula.

These approximation equations are expressed as follows:${\text{Combustion rate: qx = b+b1}}^{\text{x}} {\text{(p1-p0)+b2}}^{\text{x}} {\text{(p2-p0)+...bn}}^{\text{x}} \text{(pn-p0)}$$\text{Indicated mean effective pressure:} {\text{pmi = c + c1}}^{\text{x}} {\text{(p1-p0) + c2}}^{\text{x}} {\text{(p2-p0) + ...cn}}^{\text{x}} \text{(pn-po)}$

As is apparent from the above equations, qx is the sum of the products of predetermined constants b1 through bn multiplied by the pressure data p1 through pn from which the standard pressure p0 has been subtracted.

Similarly, pmi is the sum of the products of predetermined constants c1 through cn multiplied by the pressure data p1 through pn from which the standard pressure p0 has been subtracted.

Here, p0 is the pressure in the combustion chamber when it reaches the atmospheric pressure level (for example, near the BDC as described above), and it is subtracted from the various pressures p1 through pn in order to correct the pressure for sensor drift. P1 is the pressure in the combustion chamber at the crank angle a1 in the first period.

P2 is a combustion chamber pressure at the crank angle a2 in the second period. P3 - Pn are those at the crank angles a3 - an (in this embodiment, n=5).

Thus, a simple first-order approximation equation can be used to compute, at a specific crank angle after ignition, an accurate value for the combustion rate with is almost the same as the actual value. Accordingly, by using this combustion rate as the basis for the control of the engine's ignition timing or air/fuel ratio, it is possible not only to get better energy efficiency from combustion, but to improve response, and to prevent output fluctuations by accurately following the operating state of the engine when performing EGR control under lean burn engine operations. It is further possible to prevent the generation of NOₓ emissions caused by the rapid advance of combustion.

With regard to the second computation method for the combustion rate, qx is computed using the heat generated between two pressure measurement points (crank angles) the pressure difference ΔP between the two pressure measurement points, the volume difference ΔV in the volume of the combustion chamber, where P and V are the first of the two pressure values and combustion chamber volume values that were measured, A is the heat equivalent, K is the specific heat ratio, R is the average gas constant, and P0 is the pressure at BDC:$\text{Heat generation: Qx =} \frac{\text{A}}{\text{(K-1)}} \text{x (} \frac{\text{(K+1)}}{\text{2}} \text{x Δp x ΔV + K x (P-P0))}$

The specific pressure measurement point up to where the combustion rate is measured should be selected as the crank angle where combustion is nearly complete. Similarly, a crank angle near the point of ignition would also be selected as a pressure measurement point. The calculation of the foregoing amount of heat generation Qx is performed by summing the values determined for each of the pressure measurement points, and with regard to the interval between the initial pressure measurement point to the specified pressure measurement point (the specific crank angle). Then the combustion rate is determined by summing for the foregoing Qx and then dividing; to wit:$\text{Combustion rate:} \text{qx = amount of combustion heat up to the desired crank angle / all of the heat X} \text{100 (%)} \text{= (Q1 + Q2 + ... + Qx) / (Q1 + Q2 + ... + Qn) x 100}$

The above computation can be used to measure the combustion chamber pressure at a plurality of specific crank angles at the step S112 of Fig.3, and based upon that data, the combustion rate up to the desired crank angle can be accurately computed at the step S201 of Fig. 25. Then, by using this combustion rate for engine control, it is possible to obtain stable output and engine RPM.

Step S17: Using the intake air temperature information and intake pipe negative pressure information, compensation calculation of the fuel injection amount is carried out. That is to say, when the intake air temperature increases, the air density decreases and the substantial air flow rate decreases. This results in the decrease in the air to fuel ratio. Therefore, compensation amount for reducing fuel injection amount has to be calculated.

Step S18: Basic fuel injection is started according to the engine load and engine revolution. The basic fuel injection amount and the basic ignition timing are determined in the step S16 and stored in the memory E'(i). Based on these data, the fuel injection compensation amount and the ignition timing compensation amount are determined according to the compensation amount determined in the step S17 and information stored in the memory A(i), and added to the basic values to determine the control amounts. As the control amounts, the ignition start timing is the value in the memory E(1), and the ignition period is the value in the memory E(2). When P=1, the injection start timing and the injection end timing are stored in F(3) and F(4) respectively. When P=0, the injection start timing and the injection end timing are stored in E(3) and E(4) respectively.

This is input to the memory E(1). In a similar manner, control amounts for the servomotor group and the solenoid valve group are calculated according to the information stored in the memory A(i) and stored in the memory G(i)

Step S19: Actuators such a servomotor group and solenoid valve are driven and controlled according to the control amounts in the memory G(1).

Step S20: Whether an engine stop request is present is determined. If present, the process goes to the step S21. If not, the process goes to the step S22.

Step S21: Values of the memory E(1), where i = 1-4, are set to zero as stop data.

Step S22: An engine start is checked. If yes, the step goes to the step S23. If not, it goes to the step S26.

Step S23: Data stored in advance in the memory for the start are set to the memory F(i).

Step S24: Starter motor is actuated.

Step S25: This is the case in which the variable C is 4, and the data corresponding to the abnormal phenomena are set, for example, miss fire data if over-revolution happens, or data used for increasing fuel injection while choking throttle opening if overheat occurs.

Next, the interrupt routine (1) shown in FIG.3 will be described. This interrupt routine (1) is executed by interrupting the main routine when a specified crank angle signal is input.

Step S111: A timer is set to perform interruption routine (1) at every specified crank angle, namely to perform the interruption at the next crank angle.

Step S112: The data at a crank angle at which an interruption occurred is taken into the memory.

Step S113: When the data at every crank angle at which an interruption occurred is taken into the memory, the process goes to the step S114.

Step S114-S115: See if C = 10 or not. If so, it is decided that the engine is in a state of abnormal burning, perform an abnormal burning prevention routine at Step S115 and return.

Step S116: See if C = 2 or not and decide whether the engine is in a state of transient; if so, perform a transient control routine at Step S116a to correct ignition timing and A/F, and return; otherwise, transfer to Step S117.

Step S117: See if C = 5 or not and decide whether the engine is in a state of cold start; if so, perform a cold start control routine at Step S117a to correct ignition timing and return; otherwise, transfer to Step S118.

Step S118: See if C = 8 or not and decide whether the engine is in a state of an EGR control mode; if so, perform an EGR control routine at Step S118 to correct the EGR rate and ignition timing, and return; otherwise, transfer to Step S119.

Step S119: See if C = 3 or not and decide whether the engine is in a state of a lean burning mode; if so, perform a lean burning control routine at Step S119a to correct the A/F and ignition timing, and return; otherwise, transfer to Step S120.

Step S120: See if C = 7 or not and decide whether the engine is in a state of an idling mode; if so, perform an idling control routine at Step S120a to correct the A/F and ignition timing, and return; otherwise, perform a MBT control routine at Step S121 to correct ignition timing and return.

Now, an interrupt routine (2) will be described. This interrupt routine (2) is performed by interruption when a reference crank signal is input.

Step S121: This interrupt routine (2) is executed once at a specified crank angle of the engine revolution, and therefore measures a period.

Step S122: Engine revolution is calculated.

Step S123: The ignition start timing, ignition end timing, injection start timing, and injection end timing are set to the timer according to the control data of the memory F(i), where i = 1-4. The timer actuates the ignition device and the injection device at the preset timings.

Next, calculation of the target combustion ratio mentioned in reference to FIGs. 2 and 3 will be described in detail.

Fig. 5 is a map drawing for determining the reference combustion ratio or the critical combustion ratio corresponding to engine revolution and load. The reference combustion ratio during the normal combustion up to the prescribed crank angle, for example, the top dead center (TDC), or the critical combustion ratio corresponding to the sign of an abnormal combustion which is larger than the reference combustion ratio during the normal combustion is determined from the map and stored in a memory of the control unit 12.

The diagram shows that the map has a three dimensional structure which target burning rates are determined according to the engine load (Lx) and engine speed (Rx). The target burning rate in a given operating condition (Lx, Rx) is found as FMB? (Lx, Rx).

FIG.6 is a graph of combustion chamber pressure over one combustion cycle of a four-cycle engine. The lateral axis shows the crank angle and the vertical axis shows the combustion pressure. Combustion pressures (P0 - P5) are detected at the six crank angles (a0 - a5) shown in the figure, and combustion ratios are calculated from those pressure values. The crank angle (a0) is at the bottom dead center (BDC) where the stroke changes from intake to compression, and the pressure is about atmospheric. The angle (a1) is after the compression start and before the spark ignition, (a2) is the crank angle after the spark ignition at the angle (S) and before reaching the TDC. The angles (a3) - (a5) are crank angles are after the TDC in the combustion stroke. The combustion ratios are calculated from the pressure data at those crank angles. By the way, in Diesel engines where spark ignition is not made, fuel is injected in the vicinity of the TDC, in a zone FI. Natural ignition occurs with a delay angle (d) after the fuel injection. The natural ignition occurs at the crank angle (S). Fuel injection timing is controlled according to the difference between the measured and target values of the combustion ratio or the crank angle. The injection start timing is controlled to be advanced or delayed, and the injection end timing is controlled so that a specified injection amount is secured.

Now, the control of the combustion rate based on the calculation of the combustion rate described in Figs. 2 and 3 will be described.

The operation in Step 17 in Fig.2 is executed as shown in the flowchart for the compensation operation in Fig. 7. In others, when the variable C is 2, Step 17 is executed; in Step 17a, the compensation operation of the amount of fuel ignition for compensation of barometer height from information of the intake air temperature and of intake pipe negative pressure is executed; in Step 17b, the variable STATE of the transient control condition is checked; when the value of the transient control condition is STATE=0 in the state condition, the transient compensation data is cleared in Step 17c. If not in the state condition, the step goes to 17d, and the initial execution state of the transient condition where the variable of the transient control condition is STATE=1 is checked; if in the initial execution condition, the step goes to Step 17e. In Step 17, the initial compensation is executed, and timing is compensated at the point of compensation for increasing the amount of fuel injection data in acceleration and deceleration; and in Step 17f, the condition is set to the initial execution condition, if the value of the transient control condition is STATE=2.

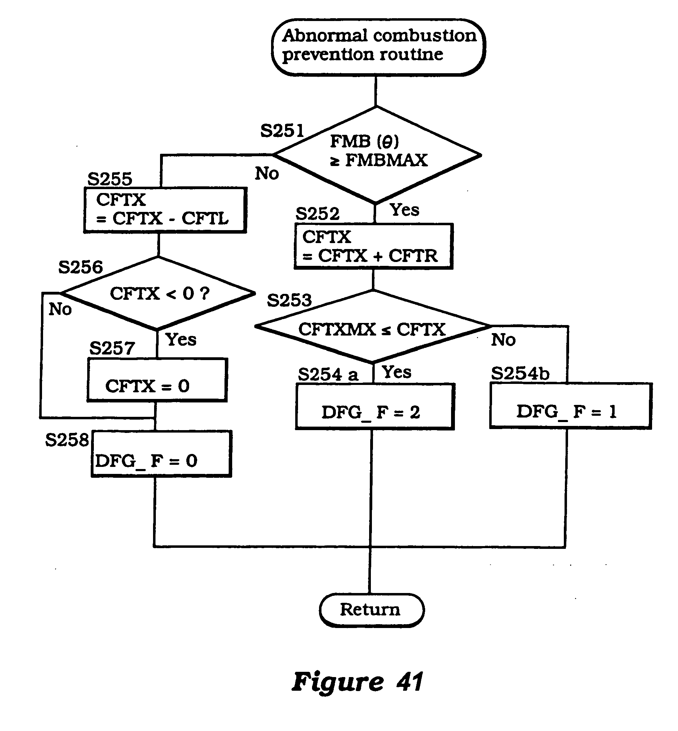

Next, a routine for preventing abnormal combustion is shown in Fig. 41. This abnormal combustion prevention routine is executed each cycle after an anomaly judgment.

Step S251: After comparing the actual combustion ratio FMB (0-) and the anomaly judgment combustion ratio FMBMAX, the control moves to step S252 when both ratios are equal or the actual combustion ratio is larger, or if not, control moves to step S255.

Step S252: After adding a fuel cooling compensation increment CFTR to the current fuel cooling compensation value CFTX and making the result the new fuel cooling compensation value CFTX, the control moves to step S253.

Step 253: After comparing the fuel cooling compensation value CFTX and the maximum limit value CFTXMX for fuel cooling compensation, the control moves to step S254 when the fuel cooling compensation value CFTX is larger, or if not, the control moves to step S254b.

Step 254a: After making a combustion condition variable DFG_F 2 (fuel cut/ignition cut command), the control returns the combustion condition variable DFG_F.

Step 254b: After making the combustion condition variable DFG_F 1 (abnormal combustion), the control returns the combustion condition variable DFG_F.

Step 255: After deleting a fuel cooling compensation decrement CFTL from the current fuel cooling compensation value CFTX and making the result the new fuel cooling compensation value CFTX, the control moves to step S256.

Step S256: After judging whether the fuel cooling compensation value CFTX is smaller than 0 (normal condition), the control moves to step S257 when the fuel cooling compensation value CFTX is smaller than 0, or if not, the control moves to step S258.

Step 257: After making the fuel cooling compensation value CFTX 0 (normal condition), the control moves to step S258.

Step 258: After making the combustion condition variable DFG_F 0 (normal condition), the control returns the combustion condition variable DFG_F.

In this abnormal combustion prevention control, either of the following control (1), (2), (3), (4), (5), (6), (7), (8) or (9) is executed.

First, in the case of abnormal combustion prevention control (1), responsive to engine load more fuel per combustion cycle is supplied to the engine as engine load increases, and combustion ratio values at prescribed crank angles at which the normal combustion is attained are retained in a memory as a map data of reference combustion ratio values corresponding to load or engine revolution, or at least corresponding to load, on the other hand, the actual combustion ratio up to said prescribed crank angle is detected, and, when this combustion ratio is larger than the reference combustion ratio based on the comparison between the detected value of this combustion ratio and the reference combustion ratio value, the fuel supplied to the engine per combustion cycle is increased exceeding the amount of fuel supply corresponding to engine load.

Thus, the actual combustion ratio up to the prescribed crank angle is detected and, when this combustion ratio is larger than the reference combustion ratio based on the comparison between the detected value of this combustion ratio and the reference combustion ratio value, the fuel supplied to the engine per combustion cycle is increased exceeding the amount of fuel supply corresponding to engine load, and fuel cooling is performed only when the sign of preignition is detected; therefore, there is no waste of fuel, fuel consumption is good, and the emission of exhaust gas is small. Also, since the sign of preignition can be detected, it is possible to minimize engine damage and prevent preignition, namely, inflammation before ignition due to the rise of cylinder temperature. Further, knocking can be controlled by performing fuel cooling in anticipation of the rise in cylinder temperature.

Also, in the case of abnormal combustion prevention control (2), responsive to engine load more fuel per combustion cycle is supplied to the engine as engine load increased, and combustion ratio values at prescribed crank angles at which the normal combustion is attained are retained in a memory as a map data of reference combustion ratio values corresponding to load or engine revolution, or at least corresponding to load; on the other hand, the actual combustion ratio up to said prescribed crank angle is detected, and, when this combustion ratio is larger than the reference combustion ratio and the difference exceeds the prescribed amount based on the comparison between the detected value of this combustion ratio and the reference combustion ratio value, the fuel supplied to the engine per combustion cycle is increased exceeding the amount of fuel supply corresponding to engine load.

Thus, the actual combustion ratio up to the prescribed crank angle is detected and, when this combustion ratio is larger than the reference combustion ratio and the difference exceeds the prescribed amount based on the comparison between the detected value of this combustion ratio and the reference combustion ratio value, the fuel supplied to the engine per combustion cycle is increased exceeding the amount of fuel corresponding to engine load, and fuel cooling is performed only when the sign of preignition is detected; therefore, there is no waste of fuel, fuel consumption is good, and the emission of exhaust gas is small. Also, since the sign of preignition can be detected, it is possible to minimize engine damage and prevent preignitions, namely, inflammation before ignition due to the rise in cylinder temperature. Further, knocking can be controlled by performing fuel cooling in anticipation of the rise in cylinder temperature.

Also, in the case of abnormal combustion prevention control (3), responsive to the difference of said detected combustion ratio and said reference combustion ratio the fuel per combustion cycle is increased more as the difference is larger.

Thus, more fuel is supplied according to the difference between the detected combustion ratio and the reference combustion ratio and as the difference is larger fuel cooling is performed effectively only when the sign of preignition is detected, there is no waste of fuel, fuel consumption is good, and the emission of exhaust gas is small.

Also, in the case of abnormal combustion prevention control (4), either the stopping of combustion or the stopping of fuel supply is executed when the difference of said detected combustion ratio and said reference combustion ratio does not decrease or the difference does not decrease below the prescribed amount even by executing the increase in said amount of fuel supply.

Thus, detecting the sign of preignition, fuel cooling is performed by increasing the amount of fuel supply, but when fuel cooling is not effective, the stopping of combustion or the stopping of fuel supply is executed so as to stop the engine and prevent engine damage, and preignition if occurred is recognized in operation; therefore, the engine's reliability is increased.

Also, in the case of abnormal combustion prevention control (5), responsive to engine load more fuel per combustion cycle is supplied to the engine as engine load increases, and crank angle values reaching the prescribed combustion ratio at which the normal combustion is attained are retained in a memory as a map data of reference crank angle values corresponding to load or engine revolution, or at least corresponding to load; on the other hand, the actual crank angle up to said prescribed combustion ratio value is detected, and, when this crank angle is ahead of the reference crank angle based on the comparison between the detected value of this crank angle and the reference crank angle value, the fuel supplied to the engine per combustion cycle is increased exceeding the amount of fuel supply corresponding to engine load.

Thus, the actual crank angle up to the prescribed combustion ratio value is detected, and, when this crank angle is ahead of the reference crank angle based on the comparison between the detected value of this crank angle and the reference crank angle value, the fuel supplied to the engine per combustion cycle is increased exceeding the amount of fuel supply corresponding to engine load, and fuel cooling is performed only when the sign of preignition is detected; therefore, there is no waste of fuel, fuel consumption is good, and the emission of exhaust gas is small. Also, since the sign of preignition can be detected, it is possible to minimize engine damage and prevent preignitions, namely, inflammation before ignition due to the rise in cylinder temperature. Further, knocking can be controlled by performing fuel cooling in anticipation of the rise in cylinder temperature.

Also, in the case of abnormal combustion prevention control (6), responsive to engine load more fuel per combustion cycle is supplied to the engine as engine load increases, and crank angle values reaching the prescribed combustion ratio at which the normal combustion is attained are retained in a memory as a map data of reference crank angle values corresponding to load or engine revolution, or at least corresponding to load; on the other hand, the actual crank angle up to the prescribed combustion ratio value is detected, and, when this crank angle is ahead of the reference crank angle exceeding the prescribed angle based on the comparison between the detected value of this crank angle and the reference crank angle value, the fuel supplied to the engine per combustion cycle is increased exceeding the amount of fuel supply corresponding to engine load.

Thus, the actual crank angle up to the prescribed combustion ratio value is detected, and, when this crank angle is ahead of the reference crank angle exceeding the prescribed angle based on the comparison between the detected value of this crank angle and the reference crank angle value, the fuel supplied to the engine per combustion cycle is increased exceeding the amount of fuel supply corresponding to engine load, and fuel cooling is performed only when the sign of preignition is detected; therefore, there is no waste of fuel, fuel consumption is good, and the emission of exhaust gas is small. Also, since the sign of preignition can be detected, it is possible to minimize engine damage and prevent preignitions, namely, inflammation before ignition due to the rise in cylinder temperature. Further, knocking can be controlled by performing fuel cooling in anticipation of the rise in cylinder temperature.

Also, an abnormal combustion prevention control (7) is characterized in that, more fuel per combustion cycle is supplied to the engine as said preceding angle is larger in the abnormal combustion prevention control (5) or (6).

Thus, more fuel per combustion cycle is supplied to the engine as said preceding angle is larger, fuel cooling is performed effectively only when the sign of preignition is detected, there is no waste of fuel, fuel consumption is good, and the emission of exhaust gas is small.

Also, an abnormal combustion prevention control (8) is characterized in that, either the stopping of combustion or the stopping of fuel supply is executed when the amount of preceding angle does not decrease or the amount of preceding angle does not decrease below the prescribed amount even by executing the increase in said amount of fuel supply in the abnormal combustion prevention controls (5) - (7).

Thus, detecting the sign of preignition, fuel cooling is performed by increasing the amount of fuel supply, but when fuel cooling is not effective, the stopping of combustion or the stopping of fuel supply is executed so as to stop the engine and prevent engine damage, and preignition if occurred is recognized in operation; therefore, the engine's reliability is increased.

Also, an abnormal combustion prevention control (9) is characterized in that, the actual combustion ratio up to said prescribed crank angle is determined by detecting at least four crank angles, including a crank angle between the end of exhaust process and the initial stage of compression process, a crank angle between the start of compression process and the start of ignition, and two crank angles between the start of ignition and the start of exhaust process, and based on these combustion pressure data.

Thus, it is possible to properly calculate the actual combustion ratio up to the prescribed crank angle based on combustion pressure data.

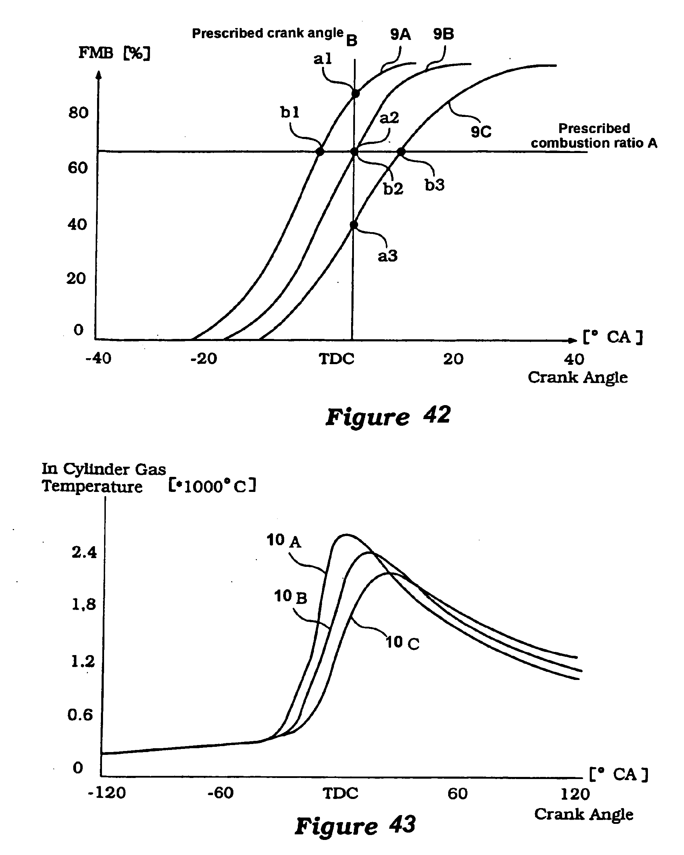

Fig.42 shows the relationship of crank angle and combustion ratio FMB when the ignition timing is 20 degree BTDC. The prescribed crank angle corresponding to abnormal combustion prevention controls (1) through (4) is indicated with "B", and the prescribed combustion ratio corresponding to abnormal combustion prevention controls (5) through (8) is indicated with "A". 9A indicates the preignition condition, 9B the high cylinder temperature condition when the sign of preignition is detected, and 9C the normal condition.

In abnormal combustion prevention controls (1) through (4), the amount of fuel supply is increased when the actual combustion ratio with the prescribed crank angle (B, for example) is a1 or a2 which is larger than combustion ratio a3 during the normal condition.

In abnormal combustion prevention controls (5) through (8), the amount of fuel supply is increased when the actual crank angle reaching the prescribed combustion ratio (A, for example) is b1 or b2 which is ahead of the crank angle b3 during the normal condition.

Fig.43 is a graph showing the relationship of crank angle and cylinder gas temperature. 10A indicates the preignition condition, 10B the high cylinder temperature condition when the sign of preignition is detected, and 10C the normal condition. As the cylinder gas temperature is higher than that of the normal condition 10C under the preignition condition 10A and the high cylinder temperature condition 10B when the sign of preignition is detected, the cylinder temperature is lowered by performing fuel cooling in anticipation of the rise in cylinder temperature.

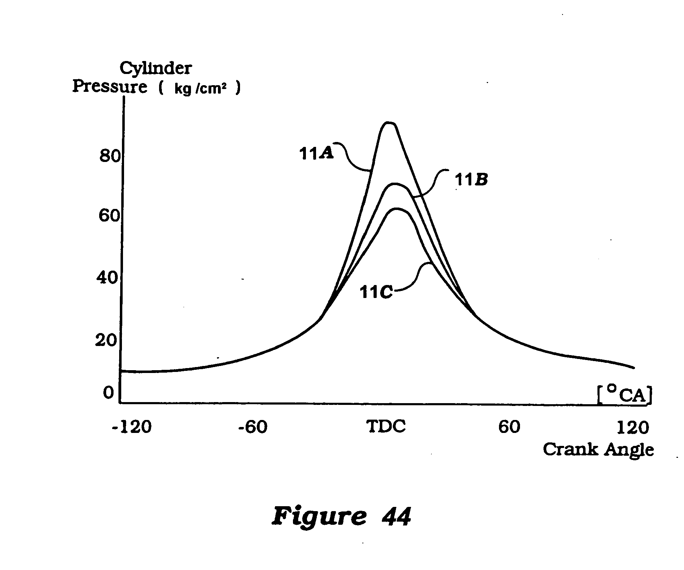

Fig.44 is a graph showing the relationship of crank angle and cylinder pressure. 11A indicates the preignition condition, 11B the high cylinder temperature condition when the sign of preignition is detected, and 11C the normal condition. As the cylinder pressure is higher than that of the normal condition 11C?? under the preignition condition 11A?? and the high cylinder temperature condition 11B?? when the sign of preignition is detected, the cylinder pressure is lowered by performing fuel cooling in anticipation of the rise in cylinder temperature.

Fig.9 is a map showing the reference crank angle during the normal combustion or the critical crank angle, which is ahead of the reference angle during the normal combustion, during the signal condition of abnormal combustion. The target crank angle is determined from the map data in FIG.9 in which the load is plotted along the lateral axis and the target crank angle (CRA) at which the specified combustion ratio is reached is plotted along the vertical axis. For example, the target crank angle CRAo(Rx, Lx) at which the specified combustion ratio of 60%, 70%, or 80% is to be reached is determined from the actual engine rpm (Rx) and the actual engine load (Lx) on the map.

Figure 11 shows a structural diagram of this invention as applied to a two-cycle engine. As with the four-cycle engine shown in Figure 1, connecting rods 245 are connected to the crank shaft 241, and at the other end, the combustion chambers 248 are formed in the space between the pistons and the cylinder head. There is an engine RPM sensor 267 and a crank angle sensor 257 attached to the crankcase which detect the marks on the ring gear attached to the crank shaft and issue standard signals and detect the crank angle. Also attached to the crankcase is a crank chamber pressure sensor 210. Air is conveyed into this crank chamber from the air intake manifold through the reed valve 228. Air is conveyed to the air intake manifold through the throttle valve 204 of the carburetor and the air cleaner 231. An intake pressure sensor 211 is mounted in the air intake manifold on the downstream side of the throttle valve. The throttle valve 204 is operated by a grip 206 that is linked by a wire 205 to the throttle pulley 203.

This grip 206 is attached to the steering handle bars 207, and an accelerator position sensor 202 is mounted at its base. 212 is a throttle aperture sensor.

There is a scavenging port 229 in the cylinder which connects the combustion chamber and the crank chamber 301 by means of the scavenging passage 253 when the piston is in certain positions. There are also exhaust ports 254 in the cylinder which connect to the exhaust passage 253. There is an exhaust timing adjustment valve 264 installed in the exhaust passage wall in the vicinity of the exhaust port. The variable valve 264 is driven by the actuator 265 of a servo motor, etc. There is an exhaust pipe pressure sensor 213 and an exhaust pipe temperature sensor 223 mounted in the exhaust pipe that comprises the exhaust passage. Furthermore, the exhaust passage is equipped with an exhaust passage valve, which is driven by the actuator 282 from a servo motor, etc. The function of the exhaust passage valve is to improve the rotational stability by preventing blowby through the constriction during low speed operations.

A knocking sensor 201 is attached to the cylinder head, as are spark plugs and combustion chamber pressure sensors 200 which lie at the edge of the combustion chambers. The spark plugs are connected to an ignition control apparatus 256. The injectors 208 are attached to the cylinders' side walls. Fuel is conveyed to these injectors 208 by means of the fuel delivery lines 209.

Combustion gas chambers 279 are formed in the cylinder block which are linked by connecting holes 278 to the middle area of the exhaust ports near the exhaust port opening for the cylinder bore and the cylinder head on the cylinder block. These connecting holes are set to guide the foregoing combustion gas, which contains almost no blow-by gas, into the foregoing combustion gas chambers. There are O₂ sensors 27 attached to the inside of these combustion gas chambers that detect the oxygen concentration therein. In addition, check valves that are not shown are located at the entry to the combustion gas chambers and at the exit to the exhaust ports to prevent reverse flows in these areas.

Thus, drive control of the engine is exercised by a control unit 257 having a CPU 271. The inputs connected to this control unit 257 include the foregoing combustion chamber pressure sensors 200, the knocking sensor 201, the accelerator position sensor 202, the crank chamber pressure sensor 210, the air intake pipe pressure sensor 211, the throttle aperture sensor 212, the exhaust pipe pressure sensor 213, the crank angle detection sensor 258, the engine RPM sensor 267 and the O₂ sensor 277. The output side of the control unit 257 is connected to the injectors 208, the actuator 265 for the exhaust timing adjustment valve, the actuator 282 for the exhaust valve, and to the oil supply device (not shown).

Figure 12 is a graph of the combustion chamber pressure that shows the point of measurement of the pressure data to compute combustion rate for the foregoing 2 cycle engine, and this graph is similar to the one (Figure 6) above for the four-cycle engine. As described above, the combustion chamber pressure data sampling takes place at 6 crank angles. In the figure, the area inside the A range is the crank angle range for which the exhaust port is open, and the B range is that crank angle range for which the scavenging port is open. The sampling methods at the various crank angles (a0 to a5) and the methods of computation of essentially the same as used for the four-cycle engine described above. The embodiments of this invention could also have been adapted for engines employing a carburetor in the air intake passage for supplying fuel to the engine.

As described above, with the control method for an engine of the invention, combustion ratio values at prescribed crank angles at which the normal combustion is attained are retained in a memory as a map data of reference combustion ratio values corresponding to load or engine revolution, or at least corresponding to load; on the other hand, the actual combustion ratio up to said prescribed crank angle is detected, and, when this combustion ratio is larger than the reference combustion ratio based on the comparison between the detected value of this combustion ratio and the reference combustion ratio value, the fuel supplied to the engine per combustion cycle is increased exceeding in the amount of fuel supply corresponding to engine load and fuel cooling is performed only when the sign of preignition is detected; therefore, there is no waste of fuel, fuel consumption is good, and the emission of exhaust gas is small. Also, since the sign of preignition can be detected, it is possible to minimize engine damage and prevent preignitions, namely, inflammation before ignition due to the rise in cylinder temperature. Further, knocking can be controlled by performing fuel cooling in anticipation of the rise in cylinder temperature.

According to the engine control method of the invention, combustion ratio values at prescribed crank angles at which the normal combustion is attained are retained in a memory as a map data of reference combustion ratio values corresponding to load or engine revolution, or at least corresponding to load; on the other hand, the actual combustion ratio up to said prescribed crank angle is detected, and, when this combustion ratio is larger than the reference combustion ratio and the difference exceeds the prescribed amount based on the comparison between the detected value of this combustion ratio and the reference combustion ratio value, the fuel supplied to the engine per combustion cycle is increased exceeding the amount of fuel supply corresponding to engine load, and fuel cooling is performed only when the sign of preignition is detected; therefore, there is no waste of fuel, fuel consumption is good, and the emission of exhaust gas is small. Also, since the sign of preignition can be detected, it is possible to minimize engine damage and prevent preignitions, namely, inflammation before ignition due to the rise in cylinder temperature. Further, knocking can be controlled by performing fuel cooling in anticipation of the rise in cylinder temperature.

According to the engine control method of the invention, more fuel is supplied according to the difference between the detected combustion ratio and the reference combustion ratio and as the difference is larger, fuel cooling is performed effectively only when the sign of preignition is detected, there is no waste of fuel, fuel consumption is good, and the emission of exhaust gas is small.

According to the engine control method of the invention, when the difference of said detected combustion ratio and said reference combustion ratio does not decrease or the difference does not decrease below the prescribed amount even by executing the increase in said amount of fuel supply, the stopping of combustion or the stopping of fuel supply is executed so as to stop the engine and prevent engine damage, and preignition if occurred is recognized in operation; therefore, the engine's reliability is increased.

According to the engine control method of the invention, crank angles values reaching the prescribed combustion ratio at which the normal combustion is attained are retained in a memory as a map data of reference crank angle values corresponding to load or engine revolution, or at least corresponding to load; on the other hand, the actual crank angle up to said prescribed combustion ratio value is detected, and, when this crank angle is ahead of the reference crank angle based on the comparison between the detected value of this crank angle and the reference crank angle value, the fuel supplied to the engine per combustion cycle is increased exceeding the amount of fuel supply corresponding to engine load, and fuel cooling is performed only when the sign of preignition is detected; therefore, there is no waste of fuel, fuel consumption is good, and the emission of exhaust gas is small. Also, since the sign of preignition can be detected, it is possible to minimize engine damage and prevent preignitions, namely, inflammation before ignition due to the rise in cylinder temperature. Further, knocking can be controlled by performing fuel cooling in anticipation of the rise in cylinder temperature.

According to the engine control method of the invention, crank angles values reaching the prescribed combustion ratio at which the normal combustion is attained are retained in a memory as a map data of reference crank angle values corresponding to load or engine revolution, or at least corresponding to load; on the other hand, the actual crank angle up to the prescribed combustion ratio value is detected, and, when this crank angle is ahead of the reference crank angle exceeding the prescribed angle based on the comparison between the detected value of this crank angle and the reference crank angle value, the fuel supplied to the engine per combustion cycle is increased exceeding the amount of fuel supply corresponding to engine load, and fuel cooling is performed only when the sign of preignition is detected; therefore, there is no waste of fuel, fuel consumption is good, and the emission of exhaust gas is small. Also, since the sign of preignition can be detected, it is possible to minimize engine damage and prevent preignitions, namely, inflammation before ignition due to the rise in cylinder temperature. Further, knocking can be controlled by performing fuel cooling in anticipation of the rise in cylinder temperature.

According to the engine control method of the invention, more fuel per combustion cycle is supplied to the engine as said preceding angle is larger, fuel cooling is performed effectively only when the sign of preignition is detected, there is no waste of fuel, fuel consumption is good, and the emission of exhaust gas is small.

According to the engine control method of the invention, when the amount of preceding angle does not decrease or the amount of preceding angle does not decrease below the prescribed amount even by executing the increase in said amount of fuel supply, the stopping of combustion or the stopping of fuel supply is executed so as to stop the engine and prevent engine damage, and preignition if occurred is recognized in operation; therefore, the engine's reliability is increased.

According to the engine control method of the invention, it is possible to properly calculate the actual combustion ratio up to the prescribed crank angle based on combustion pressure data.

In the following another possibility for a control method will be described.

Engines have ideal curves of combustion rate in operating conditions.

The curve of combustion ratio relating to crank angle can be expressed in digital as plural points having 2 dimensions of crank angle and a combustion rate.

In this invention, at least two date points are memorized relating to an engine load demand or further an engine rpm. For covering every engine load demand and every engine rpm, the number of the sets comprising at least two date points must be large.

The engine senses practical date points under one engine operating condition of one engine load demand and engine rpm. For comparing with the hopeful curve of combustion rate, the control unit calculates combustion rates at the crank angle same to the memorized angles or crank angles at combustion rates same to the memorized rates on basis of detected sampling pressures.

If the practical combustion rate calculated at the lowest crank angle within the pre-given angles is smaller than the memorized target of combustion rate at the same angle, then the ignition timing is advanced in ignited engines, or fuel spray starting timing is advanced in diesel engines. It is because at early crank angle, the combustion rate is influenced by fire starting timing rather than combustion speed. If the practical combustion at the same crank angle is larger than the target, each timing is delayed.

Also, if the practical crank angle (when the calculated combustion rate accords to the lowest combustion rate within the pre-given combustion rates) is delayed than the target crank angle, then the ignition timing is advanced, or fuel spray starting timing is advanced in diesel engine. If the practical combustion at the same crank angle is larger than the target, each timing is delayed.

Tangent between two practical date points or changing rate of combustion rate between two pre-given crank angles is calculated. If the tangent of practical combustion is smaller than the target tangent, then computer judges the combustion speed is smaller than hopeful one so as to control at least one device.

Following are examples of the devices and the ways of controlling for increasing combustion speed.
1. Fuel injector
2. Variable main jet in a carburetor
3. Exhaust gas recirculation system
   For examples, the system comprising a bypass pipe between an exhaust conduit and an intake conduit, and a valve varied the opening posed in the way of the bypass pipe.
   Variable valve timing control device which can change closing timing of the exhaust valve or opening timing of the intake valve in 4 cycle engine so as to change the time length of the overlap of openings of both valves. Overlap time is shorten to decrease EGR gas amount.
4. Tumble, swirl flow or remaining intake flow controlling devices in the combustion chamber.
   For example, a crank chamber pressure controlling device in 2 cycle engines. A crossing area controlling valve of an intake port at the part up-stream and near to the intake valve in 4 cycle engines.
5. Compression ratio varying system
   For example, the system having a de-compression hole at the cylinder wall, a bypass conduit connecting the hole with atmosphere directly or through an exhaust conduit, and an on-off valve posed in the way of the bypass conduit.
6. Supercharging system

In the devices of 1 and 2, fuel amount is increased.
In the device of 3, amount of EGR gas amount is decreased.
In the device of 4, some of them is strengthen.
In the device of 5, compression ratio is increased by closing the on-off valve.
In the device of 6, supercharged intake amount is increased.

If the computer has further a set of dates as table 1, the computer to comparison between the practical combustion rate twice, or at an advanced crank angle and a delayed crank angle so as to control the fire starting timing (ignition timing in gasoline engines or injection starting timing in diesel engine) or combustion speed.

The result of this control, practical combustion approaches to ideal or targeted combustion. In the ideal combustion, the engine obtains high performance, or stable idling, or easy engine start without stalling, or quick acceleration, or stable deceleration without stalling, or abnormal free burning without knocking etc. under each engine operating conditions.

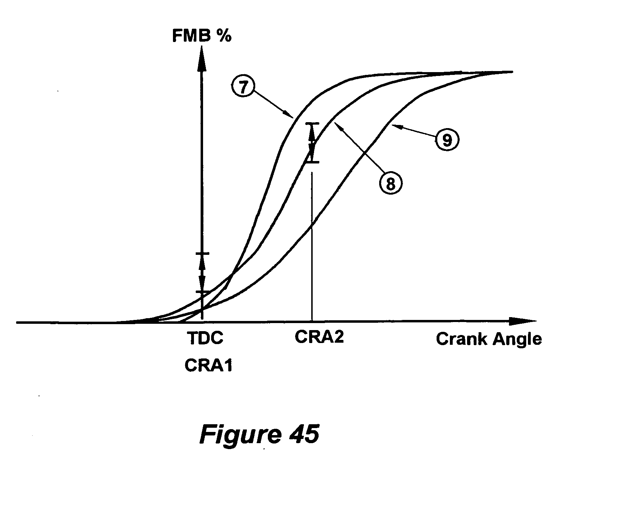

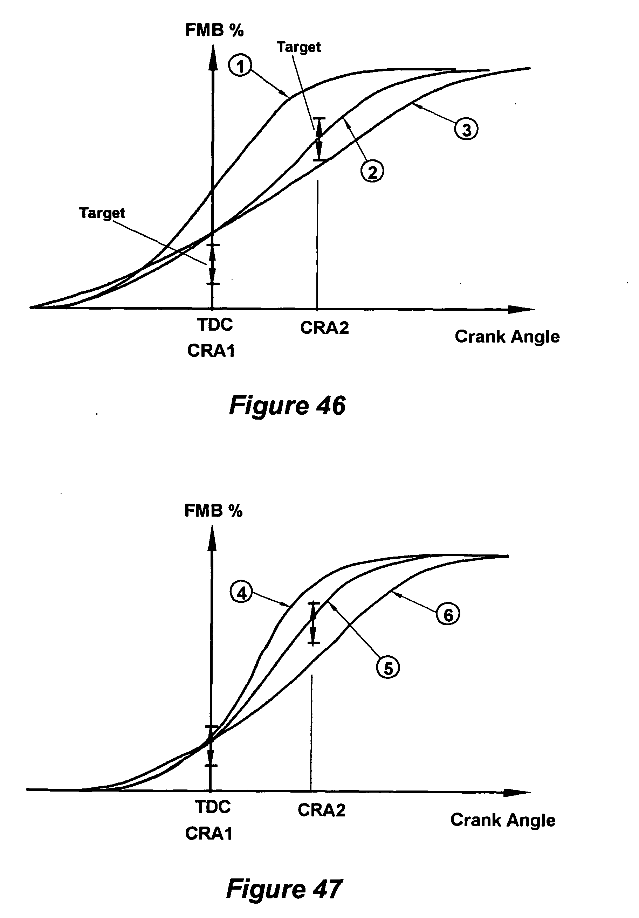

The conditions with respect to the patterns of table 1 are shown in figures 45-47.
Combustions of patterns 1-3 are started at early timing.
Combustion of pattern 3 has a high combustion speed.
Combustion of pattern 1 has a lowest combustion speed within these three patterns.

Combustion of pattern 5 is ideal.
Combustion of pattern 4 has a proper burning start timing but higher combustion speed than target one.
Combustion of pattern 6 has also the proper burning start timing but smaller speed than the target one.
Combustions of patterns 7-9 are started at late timing.
Combustions of pattern 7 and 8 have higher combustion speeds than the target one.
Combustion speed of pattern 9 can be known correctly by following step.
At first, practical combustion rate at the earlier crank angle CRA1 81 is controlled to accord in the target. After the burning start timing control, the combustion pattern becomes to one of patterns 4-6. So, the computer can know the combustion speed so as to control the above devices 1-4.

With respect to pattern 7, combustion speed is clearly high so that combustion speed control is done at first. Then the practical combustion rate is changed to near value to the low limit of target, within the target range or out of the range. After the combustion speed control, the control for advancing the burning start timing is done.

With respect to pattern 3, the computer also starts the combustion speed increasing control at first, and after that the control for delaying the burning start timing is done.

Controlling the burning starting timing is more responsive in changing the crank angle relating to the combustion ratio than controlling other devices. So in every pattern at first the computer controls the spark timing in the gasoline engine and after that, controls other devices. These controls are alternatively done so that the practical combustion rate curve approaches to the target curve quickly.

As described above, the targets can be given as ranges. Computer having range targets has to have at least twice times dates than the case having point targets, however, computer need not change the burning start timing and the combustion speed controlling device continuously so that the engine must be not to produce so unstable output being uncomfortable for the driver.

**Table 1**

| | Result of comparison | | Control | |
|---|---|---|---|---|
| Pattern | at CRA 1 | at CRA 2 | Burn starting timing | Combustion speed |
| 1 | La | La | - | - or 0 |
| 2 | La | Eg | - | + |
| 3 | La | Sm | - | ++ |
| 4 | Eg | La | 0 | - |
| 5 | Eg | Eg | 0 | 0 |
| 6 | Eg | Sm | 0 | + |
| 7 | Sm | La | + | -- |
| 8 | Sm | Eg | + | - |
| 9 | Sm | Sm | + | + or 0 |
| CRA1 = crank angle 1 | | | | |
| CRA2 = crank angle 2 | | | | |
| La: The measured combustion rate is larger than the target. | | | | |
| EG: The measured combustion rate is equal to the target. | | | | |
| Sm: The measured combustion rate is smaller than the target. | | | | |
| +: (advance the ignition timing in sparked engines) (advance the ignition timing in diesel engines) (increase combustion speed) | | | | |
| 0: hold the condition | | | | |
| -: (delay the burn starting timing) (decrease combustion speed) | | | | |

The present invention relates to a method for controlling an internal combustion engine based on map data of a target combustion rate (FMBo) at a specific crank angle or map data of a target crank angle (CRAo) at a specific combustion rate, the method comprises the steps of detecting (S12, S115a) the actual combustion rate (FMB) at said specific crank angle and/or the actual crank angle (CRA) at said specific combustion rate, comparing (S115b) said detected combustion rate (FMB) with said target combustion rate (FMBo) and/or said detected crank angle (CRA) with said target crank angle (CRAo), controlling (S115c) an ignition timing (IgT) in ignited engines, a starter timing of fuel ignition in diesel engines or a fuel supply amount (FTD) which is advanced or increased when the detected combustion rate (FMB) is smaller than the target combustion rate (FMBo) and/or the detected crank angle (CRA) is behind the target crank angle (CRAo), and is delayed or decreased when the detected combustion rate (FMB) is greater than the target combustion rate (FMBo) and/or the detected crank angle (CRA) is in advance of the target crank angle (CRAo), wherein the ignition timing (IgT), the starter timing and/or the fuel supply amount (FTD) is not changed if the detected combustion rate (FMB) is within a predefined tolerance around said target combustion rate (FMBo) or the detected crank angle (CRA) is within a predefined tolerance around said target crank angle (CRAo).

Preferably, the target combustion rates (FMBo) are provided with a tolerance in that first target combustion rates are set larger than the target combustion rates (FMBo) of the map data and second target combustion rates are set smaller than target combustion rates (FMBo) of the map data, and fuel supply (FTD) or combustion speed is increased or the ignition timing (IgT) or fuel injection start timing is advanced when said detected combustion rate (FMB) is smaller than the second target combustion rate or fuel supply (FTD) or combustion speed is decreased or the ignition timing (IgT) or fuel injection start timing is delayed when said detected combustion rate (FMB) is larger than the first target combustion rate or the control is not changed when said detected combustion rate (FMB) lies between the first and second target combustion rates; or the target crank angles (CRAo) is provided with a tolerance in that first target crank angles are set in advanced positions ahead of the target crank angles (CRAo) in the map data and second target crank angles are set in delayed positions behind the target crank angles (CRAo) in the map data, and fuel supply (FTD) is decreased or the ignition timing (IgT) or fuel injection start timing is advanced when said detected crank angle (CRA) is in an advanced position ahead of the first target crank angle or fuel supply (FTD) is increased when said detected crank angle (CRA) is in a delayed position behind the second target crank angle or fuel supply (FTD) is not changed when said detected crank angle (CRA) lies between said first and second target crank angles.

Preferably, the ignition timing control and said fuel supply control are performed based on the detected combustion rate (FMB) or the detected crank angle (CRA) at least when either the engine load (L) or the engine speed (R) is smaller than a predetermined value, and only said ignition timing control is performed based on said detected combustion rate (FMB) when the engine load (L) or the engine speed (R) are not smaller than a predetermined value.

Preferably, the ignition timing control and the fuel supply control are performed alternately.

Preferably, a first predetermined number of ignition timing controls and a second predetermined number of fuel supply controls are performed alternately.

Preferably, the first predetermined number is set equal to or higher than said second predetermined number.

Preferably, the target combustion rate (FMBo) used in a first operating condition is kept smaller than the target combustion rate (FMBo) used in a second operating condition, in said first operation condition the ignition timing control and said fuel supply control are performed when at least either the engine load (L) or engine speed (R) is smaller than a predetermined value and in said second operation condition only the ignition timing control is performed.

## Claims

1. A method for controlling an internal combustion engine based on map data of a target combustion rate (FMBo) at a specific crank angle or map data of a target crank angle (CRAo) at a specific combustion rate, comprising the steps of:
detecting (S12, S115a) the actual combustion rate (FMB) at said specific crank angle and/or the actual crank angle (CRA) at said specific combustion rate,
comparing (S115b) said detected combustion rate (FMB) with said target combustion rate (FMBo) and/or said detected crank angle (CRA) with said target crank angle (CRAo),
when the detected combustion rate (FMB) is smaller than the target combustion rate (FMBo), said engine is controlled to practice any one of:
increasing the fuel supply amount,
decreasing the amount of exhaust gas re-circulation which is part of the combustion gas, which is combined with fresh gas in said combustion chamber before firing and is produced in said burning cycle,
increasing fresh gas flow in said chamber before firing,
increasing a compression ratio, or
increasing a supercharging gas pressure.

2. A method according to claim 1, **characterized in that**
increasing the amount of fuel per combustion cycle supplied to the engine as the engine load (L) increases, and
storing combustion rates at prescribed crank angles (a0-a5) at which the normal combustion is attained in a memory as a map data of reference combustion rates corresponding to a load (L) or engine revolution (R), or at least corresponding to the load (L),
detecting the actual combustion rate up to said prescribed crank angle, and
increasing (S173) the amount of fuel supplied to the engine per combustion cycle exceeding the amount of fuel supply corresponding to engine load (L) when actual combustion rate is larger than the reference combustion rate based on the comparison between the detected combustion rate and the reference combustion rate.

3. A method according to claim 2, **characterized in that** the amount of fuel (FTD) supplied to the engine per combustion cycle is increased exceeding the amount of fuel supply corresponding to the engine load (L), when the difference (ΔFMB) between the detected combustion rate and the reference combustion rate exceeds the prescribed amount based on the comparison.

4. A method according to claim 2 or 3, **characterized in that** the amount of fuel (FTD) per combustion cycle is increased more as the difference is larger in response to the difference (ΔFMB) between the detected combustion rate and said reference combustion rate.

5. A method according to claim 2 or 3, **characterized in that** either a stopping of combustion or a stopping of fuel supply is executed when the difference (ΔFMB) of said detected combustion rate and said reference combustion rate does not decrease or the difference does not decrease below the prescribed amount even by executing the increase in said amount of fuel supply.

6. A method according to at least one of the preceding claims 2 to 5, **characterized by**
increasing (S173) the amount of fuel (FTD) per combustion cycle supplied to the engine in response to the engine load (L), and
storing crank angles values (a0-a5) reaching the prescribed combustion rate at which the normal combustion is attained in a memory as a map data of reference crank angle values corresponding to the load (L) or engine revolution (R), or at least corresponding to the load (L);
detecting the actual crank angle up to said prescribed combustion rate, and, when the actual crank angle is ahead of the reference crank angle based on the comparison between the detected crank angle and the reference crank angle,
increasing (S173) the amount of fuel (FTD) supplied to the engine per combustion cycle exceeding the amount of fuel supply corresponding to the engine load (L).

7. A method according to any of claims 2 to 5, **characterized by**
increasing (S173) the amount of fuel (FTD) supplied per combustion cycle to the engine in response to the engine load (L),
storing crank angles values (a0-a5) reaching the prescribed combustion rate at which the normal combustion is attained in a memory as a map data of reference crank angle values corresponding to the load (L) or engine revolution (R), or at least corresponding to the load (L);
detecting the actual crank angle (CRA) up to the prescribed combustion rate, and
increasing (S173) the amount of fuel (FTD) supplied to the engine per combustion cycle exceeding the amount of fuel supply corresponding to engine load (L) when the actual crank angle is ahead of the reference crank angle exceeding the prescribed angle based on the comparison between the detected crank angle and the reference crank angle.

8. A method according to claim 6 or 7, **characterized in that** more fuel per combustion cycle is supplied to the engine as said preceding angle is larger.

9. A method according to any of claims 6 to 8, **characterized in that** either the stopping of combustion or the stopping of fuel supply is executed when the preceding angle does not decrease or the preceding angle does not decrease below the prescribed angle even by executing the increase in said amount of fuel supply.

10. A method according to any of claims 2 to 9, **characterized in that** the actual combustion rate up to said prescribed crank angle is determined by detecting at least four crank angles (a0-a5), including a crank angle (a0) between the end of exhaust process and the initial stage of compression process, a crank angle (a1) between the start of compression process and the start of ignition (S), and two crank angles (a2-a5) between the start of ignition (S) and the start of exhaust process, and based on these combustion pressure data (P0-P5).

11. A method according to any of claims 1 to 10, **characterized in that** the actual combustion rate is detected at the most advancing angle (a0) within said specific crank angles (a0-a5) and/or the actual crank angle at the smallest combustion rate within said specific combustion rates.

12. Method according to claim 11, **characterized in that**
the actual combustion rate is detected at said second or further ordinal number's specific crank angle and/or the actual crank angle at said second or further ordinal number's specific combustion ratio, and
said detected combustion rate is compared with said target combustion rate and/or said detected crank angle with said target crank angle to control a combustion speed which is advanced when the detected combustion rate is smaller than the target combustion rate and/or the detected crank angle is behind the target crank angle and is delayed when the detected combustion rate is greater than the target combustion rate and/or the detected crank angle is in advance of the target crank angle.

13. A method according to claim 12, **characterized in that** said combustion speed is accelerated by increasing fuel supply amount (FTD) before said second or further ordinal number's specific crank angle and/or said second of further ordinal number's specific combustion rate, and reduced by decreasing fuel supply amount (FTD) before said second or further ordinal number's specific crank angle and/or said second or further ordinal number's specific combustion rate.

14. A method according to claim 12, **characterized in that** said combustion speed is accelerated by decreasing amount of exhaust gas re-circulation and reduced by increasing said amount of exhaust gas re-circulation.

15. A method according to claim 12, **characterized in that** said combustion speed is accelerated by increasing fresh gas flow or turbulence in said combustion chamber before firing and reduced by decreasing said fresh gas flow or turbulence.

16. A method according to claim 12, **characterized in that** said combustion speed is accelerated by increasing a compression rate in said combustion chamber and reduced by decreasing said compression rate.

17. A method according to claim 12, **characterized in that** said combustion speed is accelerated by increasing super charging gas pressure and reduced by decreasing said pressure.

18. A method according to any of claims 1 to 17, further comprising a step of obtaining (S14) a combustion state (C) of a specific engine condition wherein said storing step stores said map data for the combustion state (C).

19. A method according to claim 18, **characterized in that** the engine condition is one of a high torque, low exhaust emission, transient condition, cold stroke engine starting, and pre-ignition or inflammation before ignition, respectively, due to an increase of the cylinder temperature, or a combination of said conditions.

20. A method according to any of claims 1 to 19, **characterized in that** said detection step (S12, S115a) further comprises the step of calculating the actual combustion rate (FMB) based on detected combustion pressure data (P0-P5) at at least four crank angles (a0-a5):
a crank angle (a0) between the end of an exhaust stroke to an early state of a compression stroke,
a crank angle (a1) between a compression stroke start and an ignition start (S), and
two crank angles (a2-a5) within the period from the ignition start (S) to an exhaust stroke start.

21. A method according to at least one of claims 1 to 20, **characterized in that** initial values of fuel supply at least corresponding to an engine load (L) are set as data so that lean mixture is formed in a combustion chamber and fuel is supplied.

22. A method according to any of claims 1 to 21, **characterized in that** the engine condition is of a high torque, low exhaust emission, transient condition, cold stroke engine start, respectively, due to obtaining an optimum combination for said one of said conditions.

23. A method according to any of claims 1 to 22, **characterized in that** a fuel supply control is performed at least when either an engine load (L) or an engine speed (R) is smaller than a predetermined value.

24. A method according any of claims 18 to 23, **characterized by** the steps of
detecting a transient condition, and
obtaining the combustion state (C) at which NOx-emission is reduced while a high torque is obtainable corresponding to at least one of the engine load (L) or engine speed (R), wherein a fuel supply compensation value (gf) is added based on the comparison of the detected and actual values.

25. A method according to claim 24, **characterized in that** the actual combustion rate (FMB) to the given crank angle is calculated, after the detection of combustion pressure (P0-P5) at least for angles consisting of a crank angle (a0) from after the end of exhaust stroke to the initial state of compression stroke, a crank angle (a1) from the start of compression stroke to ignition, and two of crank angles (a2-a5) within periods from start of ignition to start of exhaust stroke, based on the data of these combustion rate.

26. A method according to claim 24 or 25, **characterized in that** the actual crank angle (CRA) reaching the given combustion value is calculated, after the detection of combustion pressure at least four angles consisting of a crank angle (a0) from after the end of exhaust stroke to the initial state of compression stroke, a crank angle (a1) from the start of compression stroke to ignition, and two of crank angles (a2-a5) within periods from start of ignition to start of exhaust stroke, based on the data of these combustion rate.

27. A method according to one of the preceding claims 1 to 26, wherein said engine being provided with an exhaust cleaning catalyst (29), **characterized in that**
taking (S12), as a combustion rate target value (FMBo), a combustion rate (FMB) at at least one crank angle (a5) between the latter period of combustion and the termination of combustion in a combustion state capable of elevating the exhaust temperature in cold starting while restraining the increase of HC and the fluctuation of engine output,
detecting (S292) the combustion rate (FMB) in the actual combustion at said target crank angle (CRAo), and
advancing (S293, S294) the ignition timing (IgT) when the detected combustion rate (FMB) is smaller than the combustion rate target value (FMBo), or retarding the ignition timing (IgT) when the detected combustion rate (FMB) is larger than the combustion rate target value (FMBo) so that the detected combustion rate (FMB) may reach said combustion rate target value (FMBo).

28. A method according to claim 27, **characterized in that**
obtaining a combustion state (C) with a stable combustion corresponding to at least one of the engine load (L) and the engine speed (R),
storing the combustion rate at a predetermined crank angle in the combustion state (C) in the memory as the map data of the first target combustion rate which corresponds to at least one of the engine load (L) and the engine speed (R), the combustion rate at a predetermine crank angle is cold starting which is the starting state while the engine temperature is low is held in the memory as the map data of the second target combustion rate which corresponds to at least one of the engine load (L) and the engine speed (R) and is smaller than the first target combustion rate,
controlling (S293) the ignition timing (IgT) on the basis of the comparison of the detected actual combustion rate of the until said predetermined crank angle with the second target combustion rate until said predetermined crank angle with the second target combustion rate in case of cold starting and with the first target combustion rate in other cases so that it is advanced when said detected value is smaller while it is retarded when the detected value is larger.

29. A method according to claim 27 or 28, **characterized in that** the actual combustion rate until said predetermined crank angle is calculated on the basis of combustion pressure (P0-P5) data detected at at least four crank angles (a0-a5) including the crank angle (a0) between the exhaust stroke termination and the compression stroke starting, the crank angle (a1) between the compression stroke starting and ignition (S), and two crank angles (a2-a5) in the period from ignition starting (S) and exhaust stroke.

30. A method according to any claims 1 to 29, **characterized in that**
taking as a target crank angle (CRAo) at at least one combustion rate between the latter period of combustion and the termination of combustion in a combustion state capable of elevating the exhaust temperature in cold starting while restraining the increase of HC and the fluctuation of engine output,
detecting the crank angle (CRA) in the actual combustion at said target combustion rate (FMB), and
advancing (S153) the ignition timing (IgT) when the detected crank angle (CRA) is retarded form the target crank angle (CRAo), and retarding the ignition timing (IgT) when the detected crank angle (CRA) is advanced so that the detected crank angle (CRA) may reach said target crank angle (CRAo).

31. A method according to claim 30, **characterized in that** the actual crank angle (CRA) for reaching said predetermined combustion rate is calculated on the basis of combustion pressure data (P0-P5) detected at at least four crank angles (a0-a5) including the crank angle (a0) between the exhaust stroke termination and the compression stroke starting, the crank angle (a1) between the compression stroke starting and ignition starting (S), and two crank angles (a2-a5) in the period from ignition starting (S) and exhaust stroke starting.

32. A controller adapted to perform a control method in accordance with all steps of any of claims 1 to 31.
